# EUROPEAN PATENT SPECIFICATION

(11) **EP 3 959 577 B1**
(45) Date of publication and mention of the grant of the patent: **03.07.2024**
(21) Application number: 19798735.7
(22) Date of filing: 30.10.2019
(51) Int. Cl.: G05D 16/06, B67D 1/00

(54) **CARTRIDGE DEVICE**
KARTUSCHENVORRICHTUNG
DISPOSITIF DE CARTOUCHE

(30) Priority: 22.04.2019 US 201916391168
(43) Date of publication of application: 02.03.2022
(73) Proprietor: Gate CFV Solutions, Inc., Sebastian, Florida 32958 (US)
(72) Inventor: HARTSFIELD, Dustin, Sebastian, Florida 32958 (US); NEWTON, John, Vero Beach, Florida 32963 (US); CHENEY, Michael, Vero Beach, Florida 32962 (US); BROOKE, Peter, Micco, Florida 32976 (US); CALLAGHAN, Gillian, Vero Beach, Florida 32963 (US); PAWL, Rory, Bloomfield, Michigan 48323 (US); LOCKWOOD, Jacob, Vero Beach, Florida 32968 (US)
(74) Representative: Hutter, Anton
(86) International application number: PCT/IB2019/059296
(87) International publication number: WO 2020/217092

(56) References cited:
- WO-A1-2011/073622
- DE-A1- 19 526 524
- US-A1- 2018 086 619
- US-B1- 6 827 100
- US-B1- 8 327 871

## Description

### Field:

The subject matter disclosed herein relates to a cartridge unit. More specifically, to a CF Valve functionality that allows for enhanced fluid control.

### Information:

The dispensing industry has numerous ways to dispense one or more fluids and/or gases. This disclosure highlights enhanced devices, methods, and systems for dispensing these one or more fluids and/or gases. The invention is as defined in the claims. Similar cartridge regulating valves are disclosed for example in US 8 327 871 B1, WO 2011/073622 A1, DE 195 26 524 A1, US 6 827 100 B1 but both the inlet port and the outlet port of these valves, are on the throttle pin side of the cartridge. US 2018/086619 A1 discloses a similar valve architecture but not within a cartridge.

### BRIEF DESCRIPTION OF THE FIGURES

Non-limiting and non-exhaustive examples will be described with reference to the following figures, wherein like reference numerals refer to like parts throughout the various figures.
FIG. 1A is an illustration of a ball functionality, according to one example.
FIG. 1B is another illustration of a ball functionality, according to one example.
FIG. 2A is another illustration of a ball functionality, according to one example.
FIG. 2B is another illustration of a ball functionality, according to one example.
FIG. 3A is another illustration of a ball functionality, according to one example.
FIG. 3B is another illustration of a ball functionality, according to one example.
FIG. 4A is another illustration of a ball functionality, according to one example.
FIG. 4B is another illustration of a ball functionality, according to one example.
FIG. 5A is another illustration of a ball functionality, according to one example.
FIG. 5B is another illustration of a ball functionality, according to one example.
FIG. 6A is another illustration of a ball functionality, according to one example.
FIG. 6B is another illustration of a ball functionality, according to one example.
FIG. 7A is another illustration of a ball functionality, according to one example.
FIG. 7B is another illustration of a ball functionality, according to one example.
FIG. 8A is another illustration of a ball functionality, according to one example.
FIG. 8B is another illustration of a ball functionality, according to one example.
FIG. 9A is another illustration of a ball functionality, according to one example.
FIG. 9B is another illustration of a ball functionality, according to one example.
FIG. 9C is another illustration of a ball functionality, according to one example.
FIG. 9D is another illustration of a ball functionality, according to one example.
FIG. 10A is another illustration of a ball functionality, according to one example.
FIG. 10B is another illustration of a ball functionality, according to one example.
FIG. 11A is another illustration of a ball functionality, according to one example.
FIG. 11B is another illustration of a ball functionality, according to one example.
FIG. 12 is an illustration of a dispensing unit with one or more ball functionalities, according to one example.
FIG. 13A is another illustration of a dispensing unit with one or more ball functionalities, according to one example.
FIG. 13B is another illustration of a dispensing unit with one or more ball functionalities, according to one example.
FIG. 14 is an illustration of a dispensing unit with one or more ball functionalities, according to one example.
FIG. 15A is an illustration of dispensing unit, according to one example.
FIG. 15B is an illustration of dispensing unit, according to one example.
FIG. 15C is an illustration of dispensing unit, according to one example.
FIG. 16A is an illustration of dispensing unit, according to one example.
FIG. 16B is an illustration of dispensing unit, according to one example.
FIG. 17 is a flow diagram of a ball functionality, according to one example.
FIG. 18 is a flow diagram of a ball functionality, according to one example.
FIG. 19 is a flow diagram of a ball functionality, according to one example.
FIG. 20 is an illustration of a CF Valve, according to one example.
FIG. 21 is another illustration of a CF Valve, according to one example.
FIG. 22 is another illustration of a CF Valve, according to one example.
FIG. 23 is another illustration of a CF Valve, according to one example.
FIG. 24 is another illustration of a CF Valve, according to one example.
FIG. 25 is another illustration of a CF Valve, according to one example.
FIG. 26 is another illustration of a CF Valve, according to one example.
FIG. 27 is another illustration of a CF Valve, according to one example.
FIG. 28 is another illustration of a CF Valve, according to one example.
FIG. 29 is an illustration of a dispensing unit, according to one example.
FIG. 30 is an illustration of a dispensing unit, according to one example.
FIG. 31 is an illustration of a dispensing unit, according to one example.
FIG. 32 is an illustration of a dispensing unit, according to one example.
FIG. 33 is an illustration of a dispensing unit, according to one example.
FIG. 34 is an illustration of a dispensing unit, according to one example.
FIG. 35A is an illustration of a dispensing unit, according to one example.
FIG. 35B is an illustration of a dispensing unit, according to one example.
FIG. 35C is an illustration of a dispensing unit, according to one example.
FIG. 36 is another illustration of a CF Valve, according to one example.
FIG. 37 is another illustration of a CF Valve, according to one example.
FIG. 38 is another illustration of a CF Valve, according to one example.
FIG. 39 is another illustration of a CF Valve, according to one example.
FIG. 40A is another illustration of a CF Valve, according to one example.
FIG. 40B is another illustration of a CF Valve, according to one example.
FIG. 40C is another illustration of a CF Valve, according to one example.
FIG. 40D is another illustration of a CF Valve, according to one example.
FIG. 41 is a block diagram, according to one example.
FIG. 42A is an illustration of a valve and solenoid combination, according to one example.
FIG. 42B is another illustration of a valve and solenoid combination, according to one example.
FIG. 42C is another illustration of a valve and solenoid combination, according to one example.
FIG. 42D is another illustration of a valve and solenoid combination, according to one example.
FIG. 43 is an illustration of a valve, according to one example.
FIG. 44 is another illustration of a valve and solenoid combination, according to one example.
FIG. 45 is another illustration of a valve and solenoid combination, according to one example.
FIG. 46A is an illustration of a CF Cartridge, according to one embodiment.
FIG. 46B is another illustration of a CF Cartridge, according to one embodiment.
FIG. 46C is another illustration of a CF Cartridge, according to one embodiment.
FIG. 46D is another illustration of a CF Cartridge, according to one example.
FIG. 46E is an illustration of a CF Cartridge being placed into a chamber of a device, according to one example.
FIG. 46F is another illustration of a CF Cartridge being placed into a chamber of a device, according to one example.
FIG. 46G is an illustration of a manifold of a device, according to one example.
FIG. 46H is another illustration of a CF Cartridge being placed into a chamber of a device, according to one example.
FIG. 46I is an illustration of a CF Cartridge inside a chamber of a device, according to one example.
FIG. 46J is an illustration of a device using the CF Cartridge, according to one example.
FIG. 47A is an illustration of a CF Cartridge, according to one example.
FIG. 47B is another illustration of a CF Cartridge, according to one example.
FIG. 47C is another illustration of a CF Cartridge, according to one example.
FIG. 47D is another illustration of a CF Cartridge, according to one example.
FIG. 48A is an illustration of a backing block, according to one example.
FIG. 48B is another illustration of a backing block, according to one example.
FIG. 48C is another illustration of a backing block, according to one example.
FIG. 48D is another illustration of a backing block, according to one example.
FIG. 49A is an illustration of a backing block, according to one example.
FIG. 49B is another illustration of a backing block, according to one example.
FIG. 49C is another illustration of a backing block, according to one example.
FIG. 49D is another illustration of a backing block, according to one example.
FIG. 50 is an illustration of a backing block, according to one example.
FIG. 51 is an illustration of a backing block.
FIG. 52 is another illustration of a backing block.
FIG. 53A is an illustration of a needle pin, according to one example.
FIG. 53B is another illustration of a needle pin, according to one example.
FIG. 54A is an illustration of a changing orifice size device, according to one example.
FIG. 54B is another illustration of a changing orifice size device, according to one example.
FIG. 55A is an illustration of a pin and pinhead, according to one example.
FIG. 55B is another illustration of a pin and pinhead, according to one example.
FIG. 55C is another illustration of a pin and pinhead, according to one example.
FIG. 56A is an illustration of a uniform inlet flow to body size device, according to one example.
FIG. 56B is an illustration of a non-uniform inlet flow to body size device, according to one example.
FIG. 56C is another illustration of a non-uniform inlet flow to body size device, according to one example.
FIG. 56D is another illustration of a non-uniform inlet flow to body size device, according to one example.
FIG. 56E is another illustration of a non-uniform inlet flow to body size device, according to one example.
FIG. 57A is an illustration of a flow pattern into a CF Valve, according to one example.
FIG. 57B is another illustration of a flow pattern into a CF Valve, according to one example.
FIG. 57C is an illustration of various flow patterns into a CF Valve, according to various examples.
FIG. 58A is an illustration of a bar gun, according to one example.

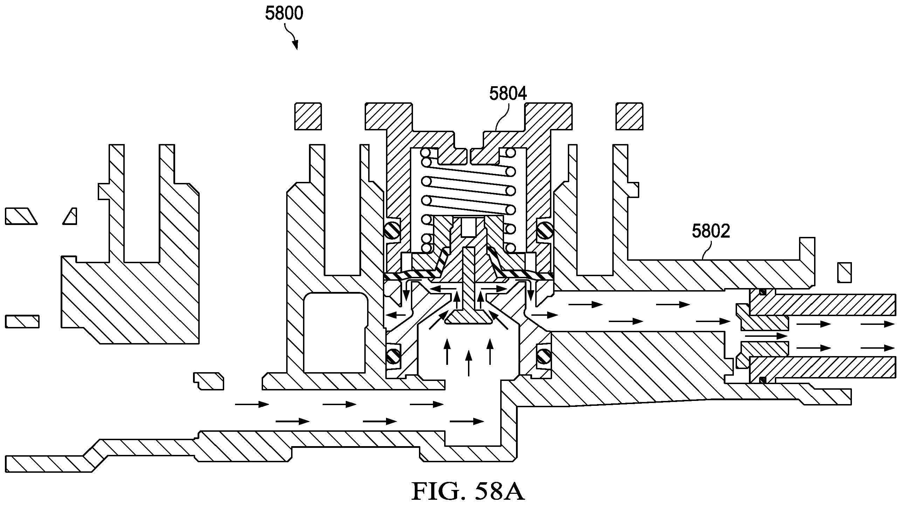

FIG. 58A is another illustration of a bar gun, according to one example.

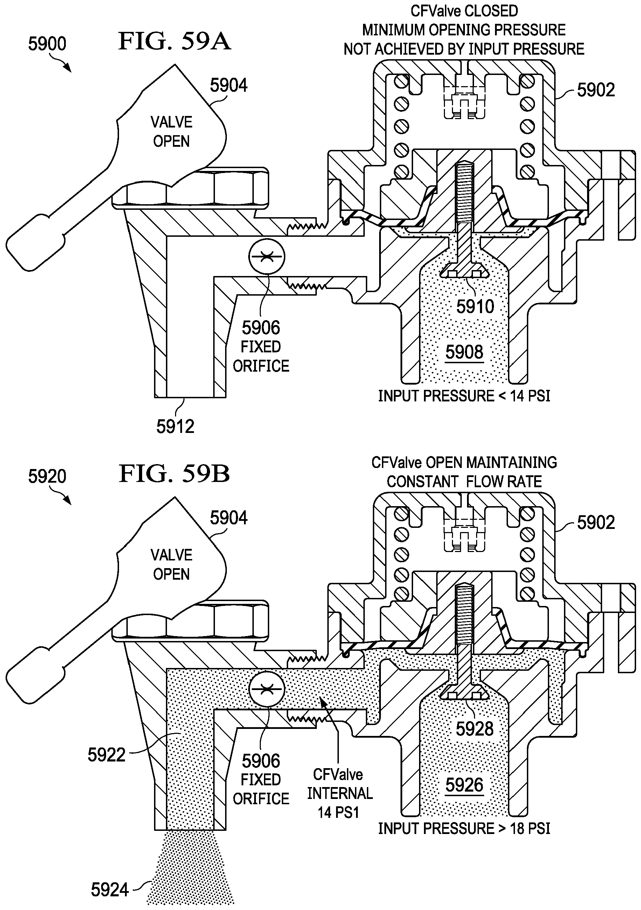

FIG. 59A is an illustration of bridging, according to one example.
FIG. 59B is another illustration of bridging, according to one example.

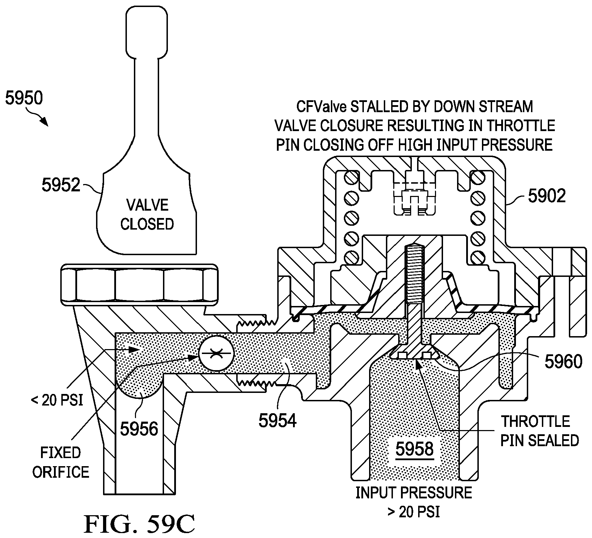

FIG. 59C is another illustration of bridging, according to one example.

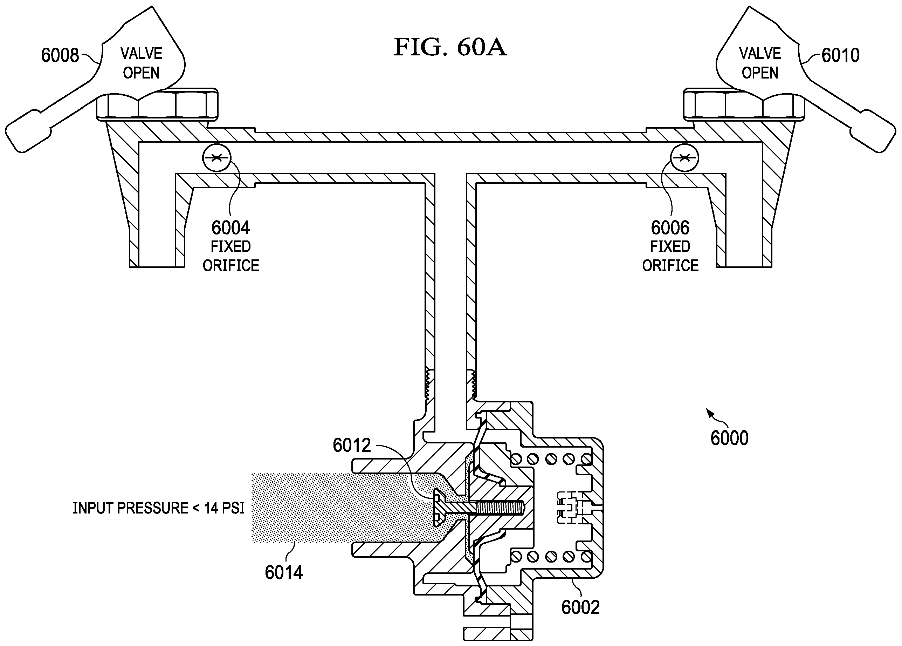

FIG. 60A is an illustration of bridging, according to one example.

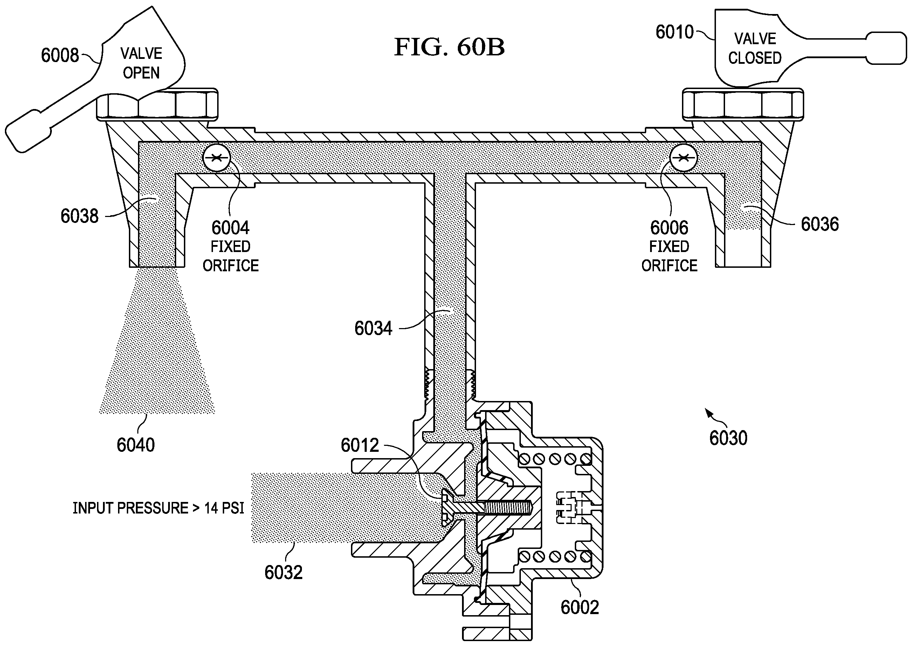

FIG. 60B is another illustration of bridging, according to one example.

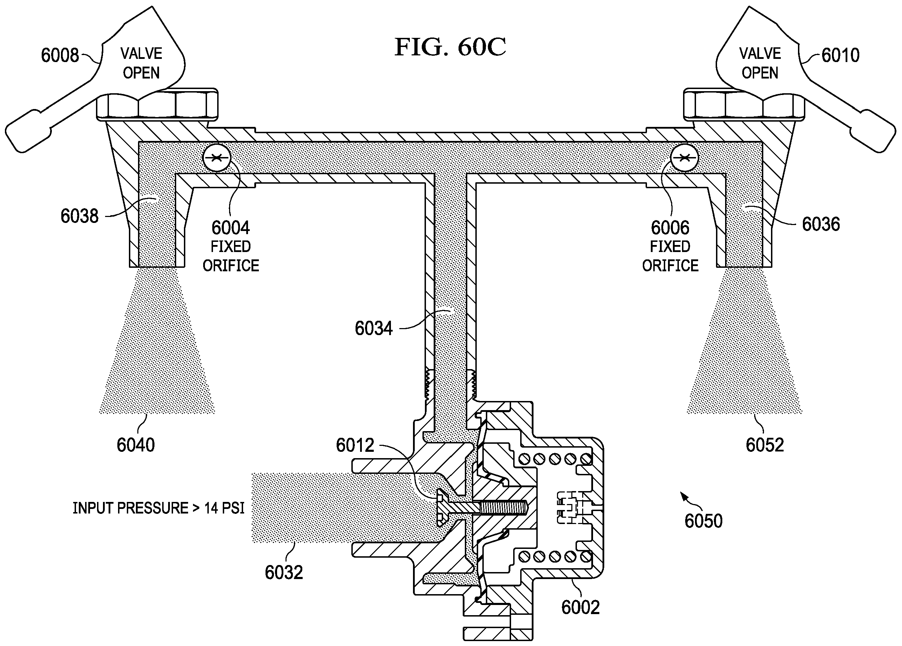

FIG. 60C is another illustration of bridging, according to one example.

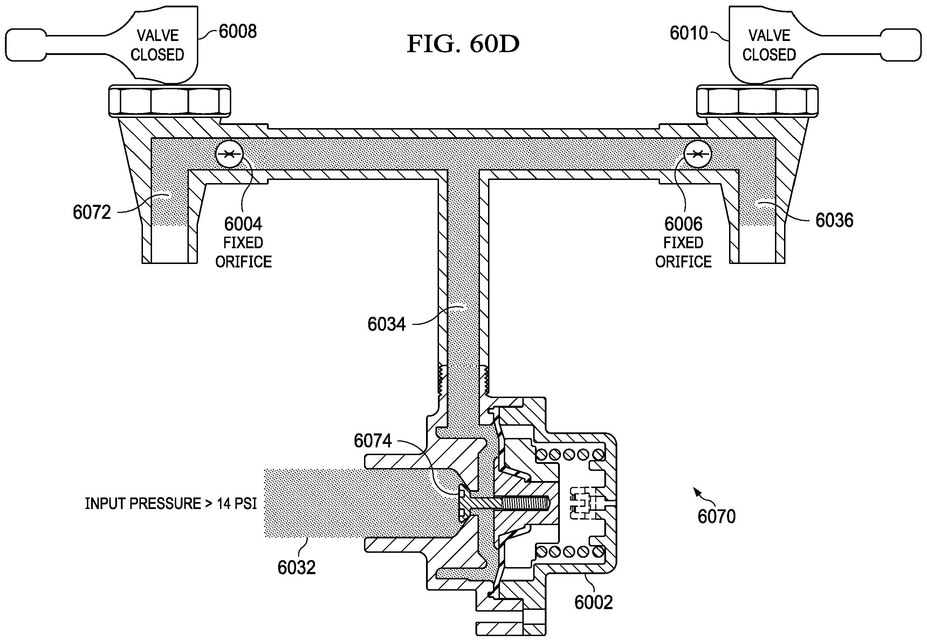

FIG. 60D is another illustration of bridging, according to one example.

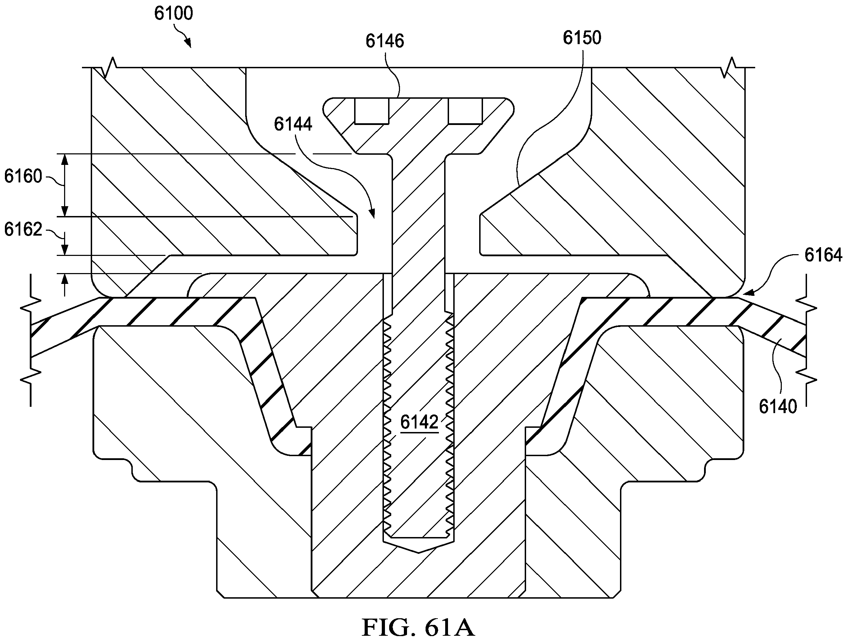

FIG. 61A is an illustration of bridging, according to one example.

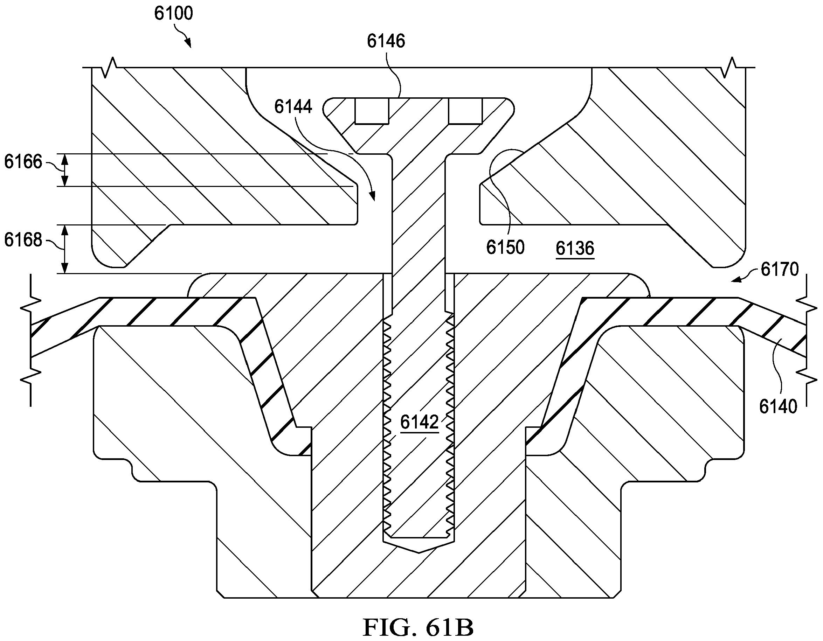

FIG. 61B is another illustration of bridging, according to one example.

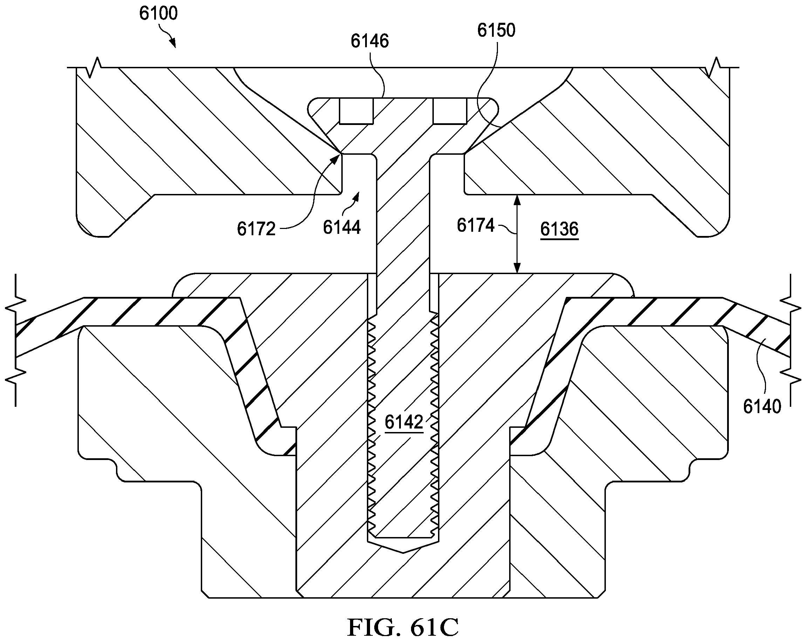

FIG. 61C is another illustration of bridging, according to one example.

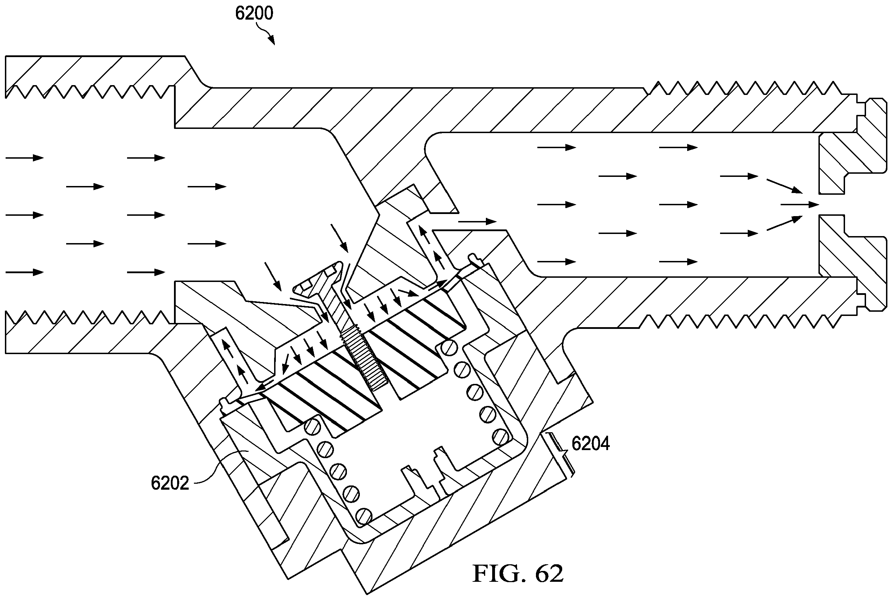

FIG. 62 is an illustration of bridging, according to one example.

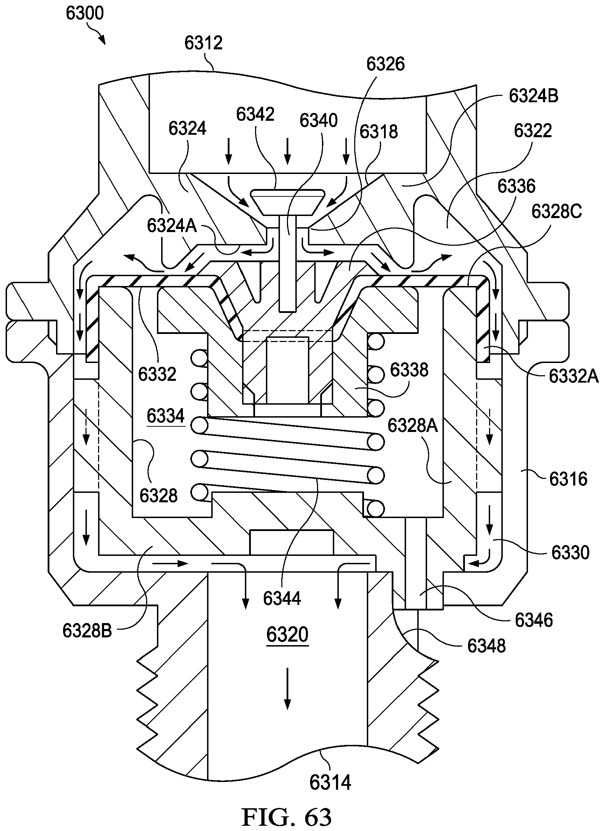

FIG. 63 is a CF Valve, according to one example.

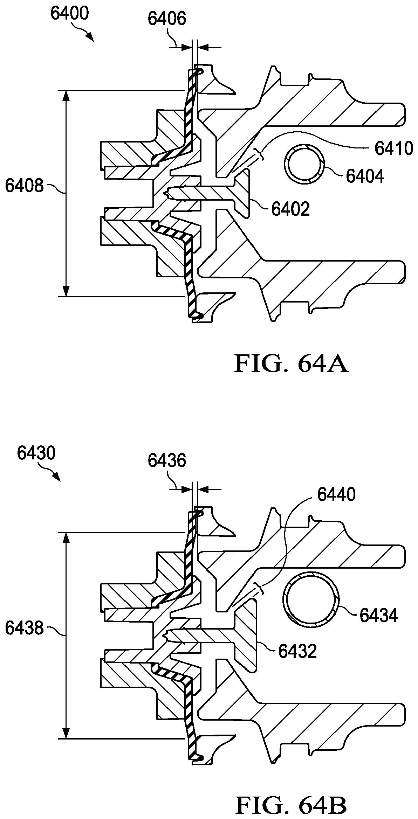

FIG. 64A is an illustration of a CF Valve, according to one example.
FIG. 64B is another illustration of a CF Valve, according to one example.

### Detailed Description of the Disclosure

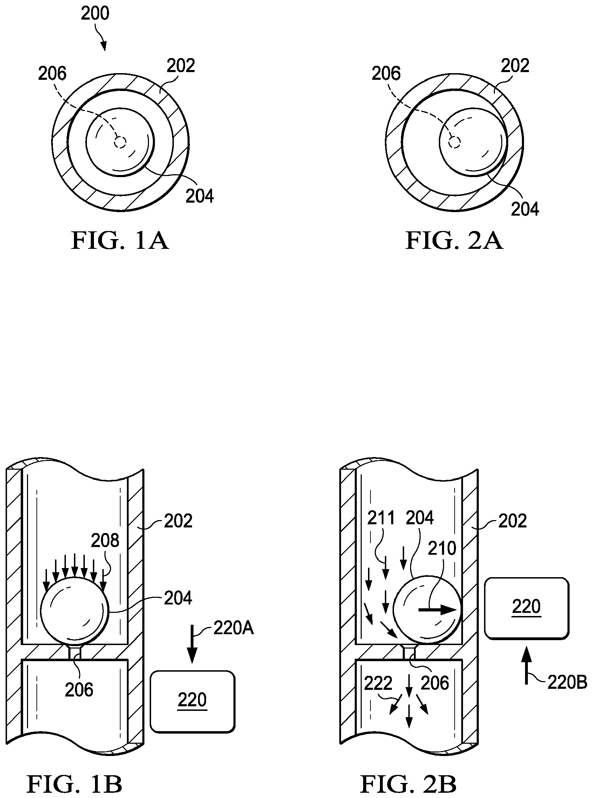

FIG. 1A ad FIG. 1B illustrate a first example for the valve in a valve closed position. FIG 1A illustrates a top sectional view, whereas FIG. 1B illustrates a side sectional view for the first example in the closed position. As seen in these two Figures a Ball covers/closed an orifice opening, with a portion of the Ball extending into the orifice opening. With the Ball closing the orifice opening, fluid is prevented from flowing through the pipe, tube, chamber, hose or other type if fluid conduit (all collectively referred to as "Conduit"). As seen in FIG. 1B a magnetic coupling located on an external/outside of the Conduit is out of magnetic range of the metal Ball and thus is unable to control the movement or position of the Ball. The Ball is therefore forced in the shown sealing position with respect to the orifice opening by the pressure flow within the Conduit. Preferably, the Ball is constructed from a magnetic, metallic and/or rigid material and all are considered within the scope of the disclosure.

FIG. 2A ad FIG. 2B illustrate a first example for the valve in a valve open position. FIG 2A illustrates a top sectional view, whereas FIG. 2B illustrates a side sectional view for the first example in the open position. As seen in these two Figures, the magnetic coupling is moved within magnetic range of the Ball, which causes the Ball to pulled towards the externally located magnetic coupling and no longer sealing the orifice opening, thus, allowing fluid flow through the orifice opening.

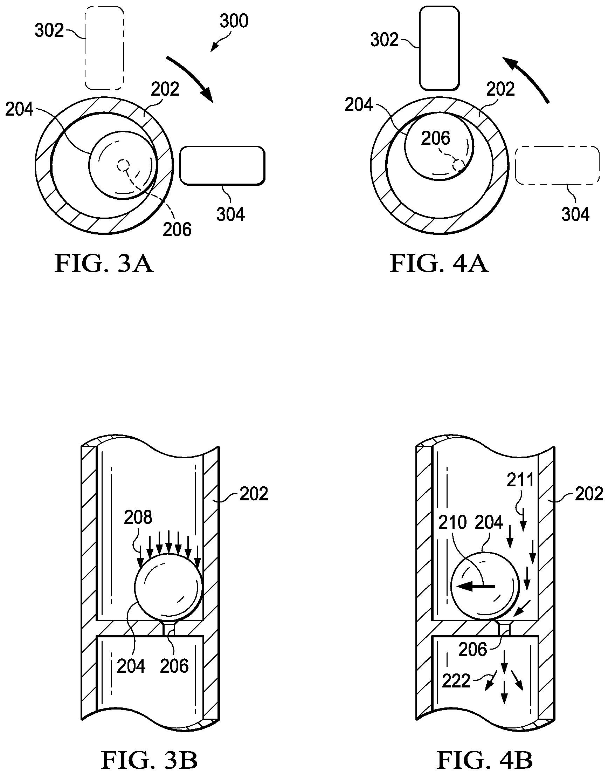

FIG. 3A ad FIG. 3B illustrate a second example for the valve in a valve closed position. FIG 3A illustrates a top sectional view, whereas FIG. 3B illustrates a side sectional view for the second example in a closed position. In this example, the orifice opening is preferably not centered. With the magnetic coupling out of magnetic range with the Ball, the Ball is forced to seal the orifice opening by flow pressure. As seen in FIG. 4A and FIG. 4B when the magnetic coupling is rotated (e.g. 90 degrees, etc.), the magnetic coupling is now within magnetic range of the Ball, and thus pulls the Ball causing the orifice opening to be open and allow fluid flow there through.

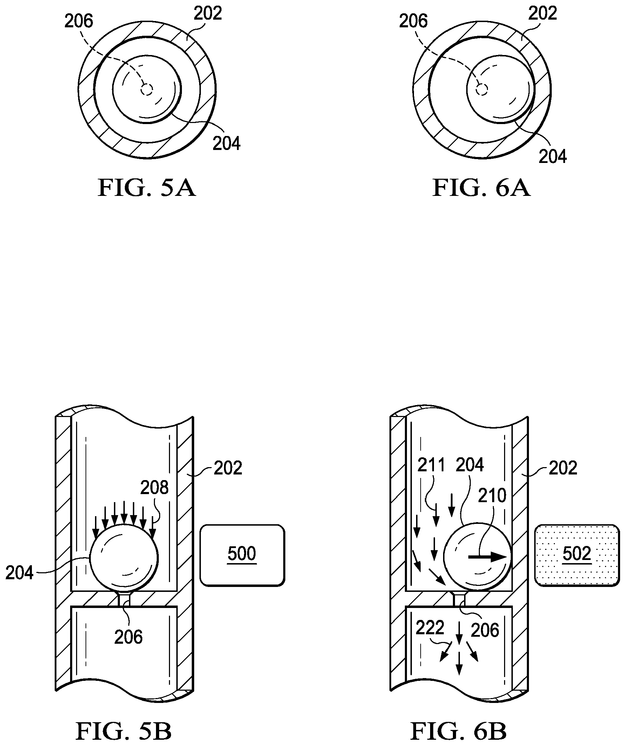

FIG. 5A ad FIG. 5B illustrate a third example for the valve in a valve closed position. FIG 5A illustrates a top sectional view, whereas FIG. 5B illustrates a side sectional view for the third example in a closed position. In this example, the orifice opening can be preferably centered and an electro magnet provided which preferably remains in a fixed position with respect to the Conduit. When the electro magnet "off" (i.e. not energized), the Ball is forced to seal the orifice opening by flow pressure. As seen in FIG. 6A and FIG. 6B when the electro magnet is "on" (i.e. energized), the electro magnet pulls the Ball towards the electro magnet which causes the orifice opening to be open and allow fluid flow there through.

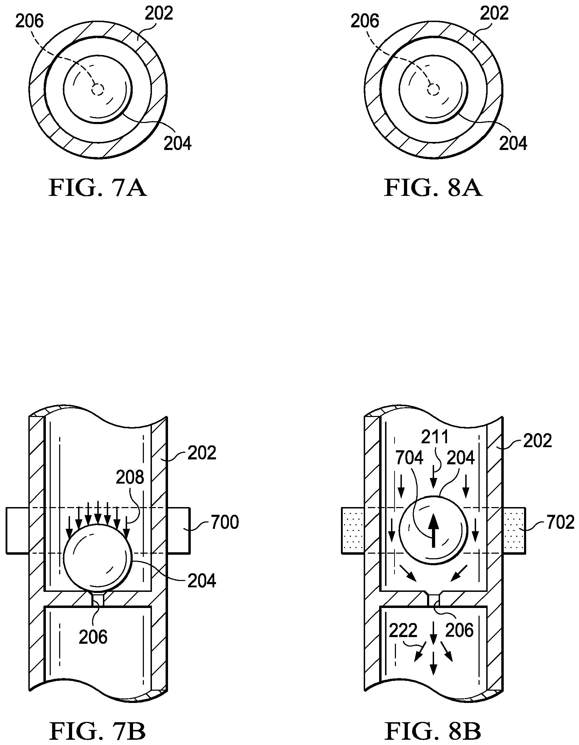

FIG. 7A and FIG. 7B illustrate a fourth example for the valve in a valve closed position. FIG 7A illustrates a top sectional view, whereas FIG. 7B illustrates a side sectional view for the third example in a closed position. In this example, the orifice opening can be preferably centered (however any spot can be utilized (e.g., right, center, left, slightly off center, 1 inch off center, etc.)) and a magnetic coil provided which preferably remains in a fixed position with respect to the Conduit. When the electro magnet "off" (i.e. not energized), the Ball is forced to seal the orifice opening by flow pressure. As seen in FIG. 8A and FIG. 8B when the magnetic coil is "on" (i.e. energized and creates a magnetic field), the Ball is pulled towards the magnetic field which causes the orifice opening to be open and allow fluid flow there through.

Thus, in all examples, the movement of the Ball over the orifice opening and out of the orifice opening is achieved without having to penetrate the wall of the Conduit which eliminates or greatly reduces previous leakage and other sealing problems, experienced at the penetrate point and the other above-identified problems with prior valves, such as, but not limited to "paddle valves".

One non-limiting application for the above-described and shown novel valve is in use with a beverage machine, such as, but not limited to, the multiple beverage dispensing machines found at restaurants where a customer takes their cup and positions the cup under one of the plurality of beverage dispensing heads and presses the cup against a lever to initiate dispensing. For this application, the magnet is moved or rotated by the mechanical lever that is secured to, part of or otherwise in mechanical communication with the lever that the customer presses their cup against to initiate dispensing. Here, when the level is pressed by the customer, the magnet is moved or rotated such that it is in range with the Ball, thus, causing the Ball to be pulled out of and/or away from the orifice, thus allowing the desired beverage to be dispensed out of the dispensing head above the customer's cup.

For the examples where the magnet is energized (as opposed to being moved or rotated) to pull the Ball away or out of the orifice, the electrical source can be a 24 V AC, though such is not considered limiting. Here, when the customer presses their cup against the level, an electrical switch is turned "closed-on" (or "opened-off depending on how the circuit is wired), causing the energy from the electrical source to flow to the electro magnet or magnetic coil, thus, causing the electro magnet or magnetic coil to pull and/or push the Ball out of or away from the orifice.

As an alternative to the customer pushing their cup against a lever, certain beverage machines operate with the customer pushing a button to activate an electrical circuit. Thus, this pressing of the button can be substituted for pushing the cup against the lever in the above non-limiting examples. In either method (pushing cup against lever or pressing button), the objective is to stop or start a flow of fluid through the tube, pipe, etc. through the use of one of the above described Ball/orifice magnet examples.

Though not considered limiting, the magnet, electro magnet or magnetic coil can be attached or positioned adjacent to the Conduit by a conventional mechanical fastener, screws, bolts, etc., as well as glued, tape or other adhesive, incased in a plastic cover. Additionally, where the Conduit is plastic, a receptacle for the attachment - magnet, electro magnet or magnetic coil can be molded.

The disclosed examples are not considered limited to any particular magnetic materials, orifice opening dimensions, orifice location, Ball dimensions, Ball shape (e.g., circle, ball, square, triangle, etc.) Ball to orifice opening ratio, magnet location, electro magnet location or magnetic coil location

All locations, sizes, shapes, measurements, ratios, amounts, angles, component or part locations, configurations, dimensions, values, materials, orientations, etc. discussed above or shown in the drawings are merely by way of example and are not considered limiting and other locations, sizes, shapes, measurements, ratios, amounts, angles, component or part locations, configurations, dimensions, values, materials, orientations, etc. can be chosen and used and all are considered within the scope of the disclosure.

Dimensions of certain parts as shown in the drawings may have been modified and/or exaggerated for the purpose of clarity of illustration and are not considered limiting.

In FIG. 1A, an illustration of a ball functionality is shown, according to one example. In one example, a dispensing element 200 may include a conduit 202, a blocking element 204, and a dispensing element 206 (e.g., orifice). In various examples, the conduit 202 may be a hose, a pipe, and/or any other element with an external surface and an internal surface which allows for the passage of one or more fluids and/or one or more gases. In various examples, the blocking element 204 may be a ball, a block, and/or any other element that stops the passage of one or more fluids and/or one or more gases when the blocking element is in one or more positions relative to the dispensing element. In this example shown in FIG. 1A, the blocking element 204 is positioned over the dispensing element 206 which stops the passage of one or more fluids and/or one or more gases which can be seen in FIG. 1B. In the example shown in FIG. 1B, the blocking element 204 stops a fluid flow because the flow (e.g., line PSI) is putting pressure 208 on the blocking element 204 which creates a seal between the blocking element 204 and the dispensing element 206 (the dispensing element 206 in this example is a hole and/or the orifice opening(s)). In this example, the pressure 208 is all around the blocking element but is strongest when it is parallel with the dispensing element. A movement device 220 (e.g., a magnet) is in a first position 220A which does not allow the movement device 220 to interact with the blocking element 204.

In FIG. 2A, another illustration of a ball functionality is shown, according to one example. In this example, the blocking element 204 has moved to a second position relative to the dispensing element 206. In this example, the movement device 220 has moved to a second position 220B which allows the movement device 220 to interact with the blocking element as shown in FIG. 2B. The movement device 220 (e.g., a magnet) has caused the blocking element 204 (e.g., a Ferro-magnetic material and/or a metal ball) to move in a first direction 210 towards the movement device 220 which allows for a first fluid flow 211 to move towards the dispensing element 206 and a second fluid flow 222 through the dispensing element 206 until the movement device is moved back to the first position 220A which causes the blocking element to move back to a position to block the flow of fluids through the dispensing element 206 as shown in FIG. 1B. The movement device 220 in this example is magnetically tied to the blocking element 204. Therefore, when the movement device 220 moves the blocking element 204 moves. It should be noted that there is a pressure difference (e.g., pressure differential) between the second area with the second fluid flow 222 and the first area with the first fluid flow 211.

In FIG. 3A, an illustration of a ball functionality is shown, according to one example. In one example, a dispensing device 300 may include a conduit 202, a blocking element 204, and a dispensing element 206. In various examples, the conduit 202 may be a hose, a pipe, and/or any other element with an external surface and an internal surface which allows for the passage of one or more fluids and/or one or more gases. In various examples, the blocking element 204 may be a ball, a block, an egg shaped item, a tear drop shaped item, a golf tee shaped item, and/or any other shape. Further the blocking element 204 may be any other element that stops the passage of one or more fluids and/or one or more gases when the blocking element is in one or more positions relative to the dispensing element. In this example shown in FIG. 3A, the blocking element 204 is positioned over the dispensing element 206 which stops the passage of one or more fluids and/or one or more gases which can be seen in FIG. 3B. In the example shown in FIG. 3B, the blocking element 204 stops a fluid flow because the flow (e.g., line PSI) is putting pressure 208 on the blocking element 204 which creates a seal between the blocking element 204 and the dispensing element 206 (the dispensing element 206 in this example is a hole). A movement device (e.g., a magnet) is in a first position 304 which does not allow the movement device to interact with the blocking element 204.

In FIG. 4A, another illustration of a ball functionality is shown, according to one example. In this example, the blocking element 204 has moved to a second position relative to the dispensing element 206. In this example, the movement device has moved to a second position 302 which allows the movement device to interact with the blocking element as shown in FIG. 4B. The movement device (e.g., a magnet) has caused the blocking element 204 (e.g., a Ferro-magnetic material and/or a metal ball) to move in a first direction 210 which allows for a first fluid flow 211 to move towards the dispensing element 206 and a second fluid flow 222 through the dispensing element 206 until the movement device is moved back to the first position 304 which causes the blocking element to move back to a position to block the flow of fluids through the dispensing element 206 as shown in FIG. 4B. In this example, the movement device is magnetically locked onto the blocking element 204. Therefore, when the movement device moves the blocking element 204 moves.

In FIG. 5A, an illustration of a ball functionality is shown, according to one example. In one example, a dispensing system may include the conduit 202, the blocking element 204, and the dispensing element 206. In various examples, the conduit 202 may be a hose, a pipe, and/or any other element with an external surface and an internal surface which allows for the passage of one or more fluids and/or one or more gases. In various examples, the blocking element 204 may be a ball, a block, and/or any other element that stops the passage of one or more fluids and/or one or more gases when the blocking element is in one or more positions relative to the dispensing element. In this example shown in FIG. 5A, the blocking element 204 is positioned over the dispensing element 206 which stops the passage of one or more fluids and/or one or more gases which can be seen in FIG. 5B. In the example shown in FIG. 5B, the blocking element 204 stops a fluid flow because the flow (e.g., line PSI) is putting pressure 208 on the blocking element 204 which creates a seal between the blocking element 204 and the dispensing element 206 (the dispensing element 206 in this example is a hole or sealing ring). A movement device 500 (e.g., a magnet) is in a first state (e.g., de-energized) which does not allow the movement device 500 to interact with the blocking element 204.

In FIG. 6A, another illustration of a ball functionality is shown, according to one example. In this example, the blocking element 204 has moved to a second position relative to the dispensing element 206. In this example, the movement device 500 has been energized and is in a second state 502 which allows the energized movement device 502 to interact with the blocking element as shown in FIG. 6B. The energized movement device 502 (e.g., a magnet) has caused the blocking element 204 (e.g., a Ferro-magnetic material and/or a metal ball) to move in a first direction 210 towards the energized movement device 502 which allows for a first fluid flow 211 to move towards the dispensing element 206 and a second fluid flow 222 through the dispensing element 206 until the energized movement device 502 returns in an de-energized movement device 500 which causes the blocking element to move back to a position to block the flow of fluids through the dispensing element 206 as shown in FIG. 6B.

In FIG. 7A, an illustration of a ball functionality is shown, according to one example. In one example, a dispensing apparatus may include the conduit 202, the blocking element 204, and the dispensing element 206. In various examples, the conduit 202 may be a hose, a pipe, and/or any other element with an external surface and an internal surface which allows for the passage of one or more fluids and/or one or more gases. In various examples, the blocking element 204 may be a ball, a block, and/or any other element that stops the passage of one or more fluids and/or one or more gases when the blocking element is in one or more positions relative to the dispensing element. In this example shown in FIG. 7A, the blocking element 204 is positioned over the dispensing element 206 which stops the passage of one or more fluids and/or one or more gases which can be seen in FIG. 7B. In the example shown in FIG. 7B, the blocking element 204 stops a fluid flow because the flow (e.g., line PSI) is putting pressure 208 on the blocking element 204 which creates a seal between the blocking element 204 and the dispensing element 206 (the dispensing element 206 in this example is a hole). A movement device 700 (e.g., a magnet) is in a first state (e.g., de-energized) which does not allow the movement device 700 to interact with the blocking element 204.

In FIG. 8A, another illustration of a ball functionality is shown, according to one example. In this example, the blocking element 204 has moved to a second position relative to the dispensing element 206. In this example, the movement device 700 has been energized and is in a second state 702 which allows the energized movement device 702 to interact with the blocking element as shown in FIG. 8B. The energized movement device 702 (e.g., a magnet) has caused the blocking element 204 (e.g., a Ferro-magnetic material and/or a metal ball) to move in a first direction 704 towards the energized movement device 702 which allows for a first fluid flow 211 to move towards the dispensing element 206 and a second fluid flow 222 through the dispensing element 206 until the energized movement device 702 returns in an de-energized movement device 700 which causes the blocking element to move back to a position to block the flow of fluids through the dispensing element 206 as shown in FIG. 8B.

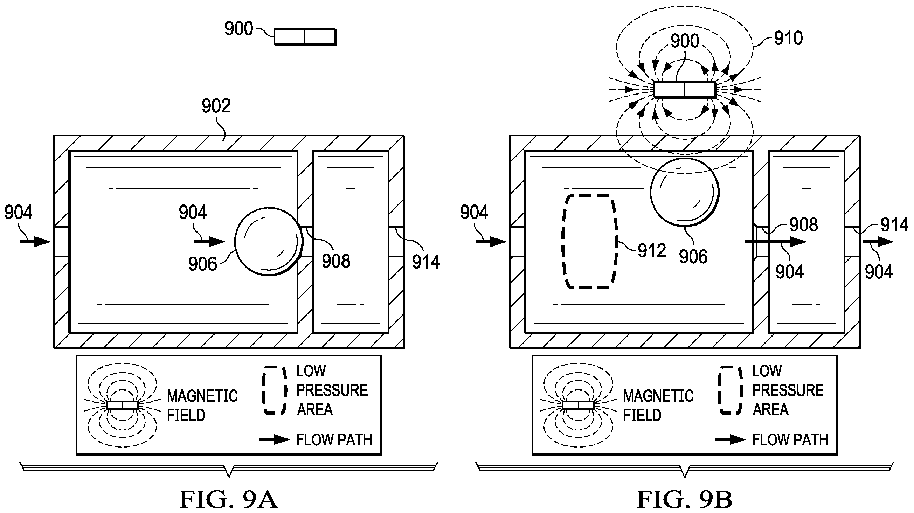

In FIG. 9A, another illustration of a ball functionality is shown, according to one example. A dispensing device 902 may include an inlet area with a fluid flow 904 that comes into a first chamber. The first chamber includes a blocking device 906 and a first chamber outlet area 908. Further, dispensing device 902 includes a dispensing device outlet area 914. In this example, a magnet 900 is not energized which allows the blocking device 906 to be in a first position relative to the first chamber outlet area 908 which prevents the fluid flow 904 from exiting the first chamber outlet area 908. In FIG. 9B, the magnet 900 is energized 910 which moves the blocking device 906 to a second position relative to the first chamber outlet area 908 and/or dispensing device outlet area 914 which allows the fluid flow 904 to exit from the first chamber outlet area 908 and creates a low pressure area 912.

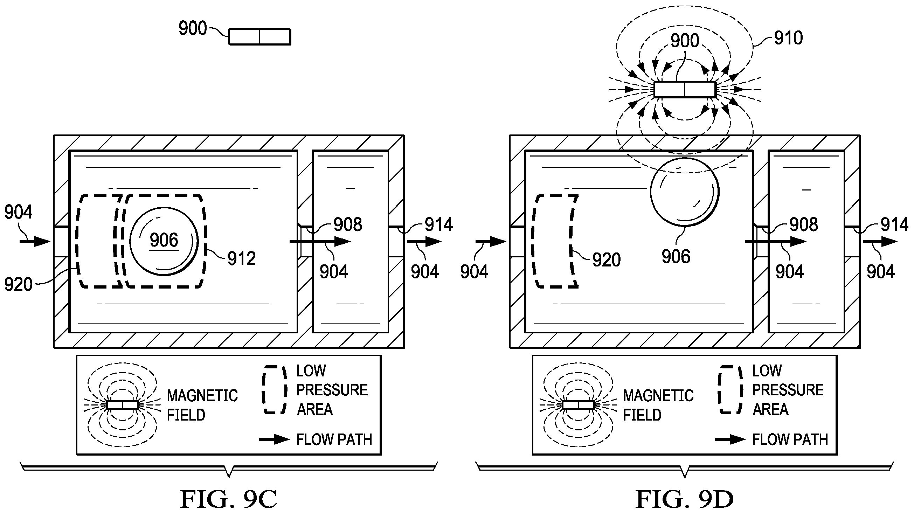

In one example, the blocking device 906 becomes trapped in the low pressure area 912 and/or a second low pressure area 920 as shown in FIG. 9C. The magnet 900 may be energized 910 to remove the blocking device from the low pressure area 912 and/or a second low pressure area 920 as shown in FIG. 9D.

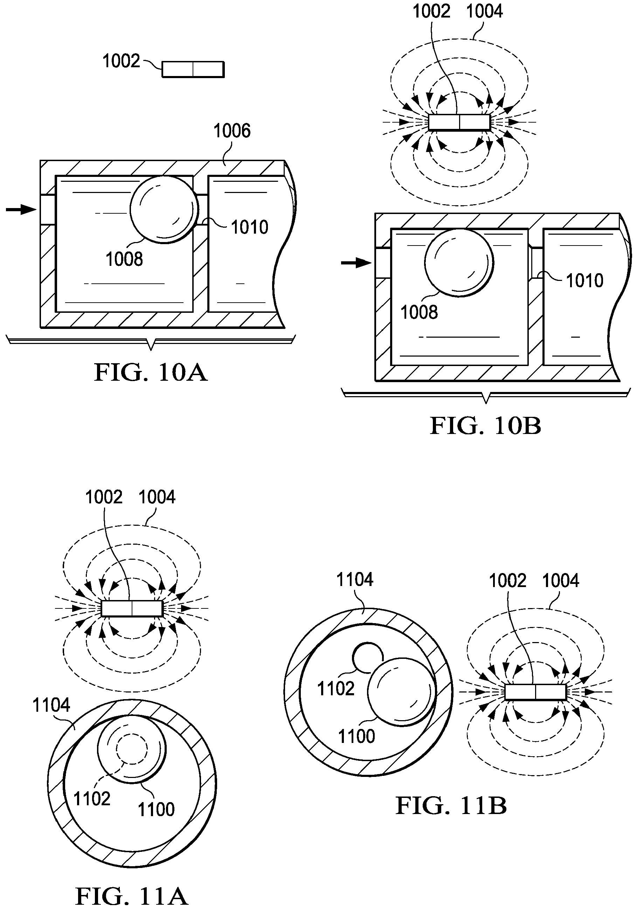

FIG. 10A shows a dispensing apparatus 1006 with a metal ball 1008 (and/or a Ferro-magnetic material - e.g., brass), a dispensing area 1010, and a magnetic coil 1002. In this example, the magnetic coil 1002 is not energized which allows the metal ball 1008 to block the flow of liquids and/or gases from escaping through the dispensing area 1010. However, once the magnetic coil 1002 is energized 1004, the metal ball 1008 move to a second position which allows for the flow of liquids and/or gases via the dispensing area 1010.

FIG. 11A shows a dispensing system 1104 where a plastic covered metal ball 1100 is utilized to block the flow of fluids and/or gases from a dispensing unit 1102. In this example, once a magnet 1002 is energized, the plastic covered metal ball 1100 moves to a position that allows for the flow of fluids and/or gases from a dispensing unit 1102 as shown in FIG. 11B.

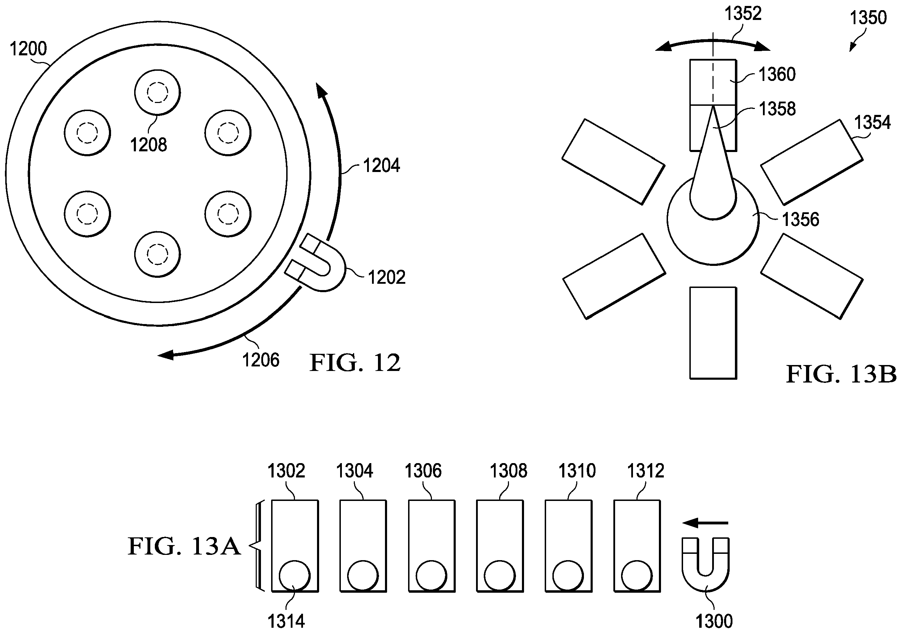

In FIG. 12, an illustration of a dispensing unit with one or more ball functionalities is shown, according to one example. A dispensing system 1200 may include a magnet 1202 (and/or any other movement device and/or initiating device) and one or more dispensing units 1208. In one example, when the magnet 1202 moves in a first direction 1204 one or more of the one or more dispensing units 1208 may discharge one or more fluids and/or gases. In one example, when the magnet 1202 moves in a second direction 1206 one or more of the one or more dispensing units 1208 may discharge one or more fluids and/or gases. In a first example, an orange flavored drink may be dispensed when the magnet 1202 comes into a first relative position to a first dispensing unit. In a second example, a cherry flavored drink may be dispensed when the magnet 1202 comes into a second relative position to a second dispensing unit. In a third example, a cola flavored drink may be dispensed when the magnet 1202 comes into a third relative position to a third dispensing unit. In a fourth example, a lemon flavored drink may be dispensed when the magnet 1202 comes into a fourth relative position to a fourth dispensing unit. In an Nth example, a peach flavored drink may be dispensed when the magnet 1202 comes into an Nth relative position to an Nth dispensing unit.

In FIG. 13A, another illustration of a dispensing unit with one or more ball functionalities is shown, according to one example. A dispensing system may include a magnet 1300 (and/or any other movement device and/or initiating device) and one or more dispensing units (a first dispensing unit 1302, a second dispensing unit 1304, a third dispensing unit 1306, a fourth dispensing unit 1308, an Nth-1 dispensing unit 1310, and an Nth dispensing unit 1312. In a first example, an orange flavored drink may be dispensed when the magnet 1300 comes into a first relative position to a first dispensing unit 1302 by moving a blocking element 1314. In a second example, a cherry flavored drink may be dispensed when the magnet 1300 comes into a second relative position to a second dispensing unit 1304 by moving a blocking element 1314. In a third example, a cola flavored drink may be dispensed when the magnet 1300 comes into a third relative position to a third dispensing unit 1306 by moving a blocking element 1314. In a fourth example, a lemon flavored drink may be dispensed when the magnet 1300 comes into a fourth relative position to a fourth dispensing unit 1308 by moving a blocking element 1314. In an Nth-1 example, a black cherry flavored drink may be dispensed when the magnet 1300 comes into an Nth-1 relative position to an Nth-1 dispensing unit 1310 by moving a blocking element 1314. In an Nth example, a peach flavored drink may be dispensed when the magnet 1300 comes into an Nth relative position to an Nth dispensing unit 1312 by moving a blocking element 1314.

In FIG. 13B, another illustration of a dispensing unit with one or more ball functionalities is shown, according to one example. In this example, a dispensing apparatus 1350 includes one or more dispensing units 1354 and a currently selected dispensing unit 1360. The currently selected dispensing unit 1360 dispenses one or more drinks via a triggering unit 1356 with a triggering mechanism 1358. In this example, the one or more dispensing units 1354 and/or the triggering unit 1356 and/or the triggering mechanism 1358 may move in any direction 1352.

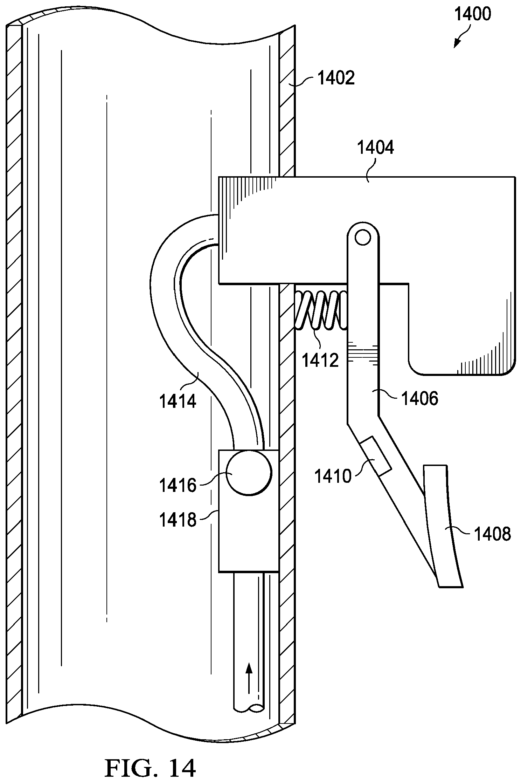

In FIG. 14, an illustration of a dispensing unit with one or more ball functionalities is shown, according to one example. A dispensing system 1400 may include a dispensing unit 1402. The dispensing unit 1402 may include a dispensing head 1404, an input device 1406 with an input receiving area 1408 and magnetic area 1410, a drink unit 1418 with a blocking element 1416, and a feed line 1414. Further, the input device 1406 may have a spring support 1412. In one example, when a person wants a drink that person pushes their cup on the input receiving area 1408 which moves the input device 1406 towards the drink unit 1418. After the input device 1406 (and the magnetic area 1410) come in proximate to the drink unit 1418 (and the blocking element 1416) flow of the fluid is initiated based on the magnetic area 1410 moving the blocking element 1416. Once the person stops pushing the input device 1406, the magnetic area 1410 moves away from the blocking element 1416 and the flow of fluids is stopped by the blocking element 1416.

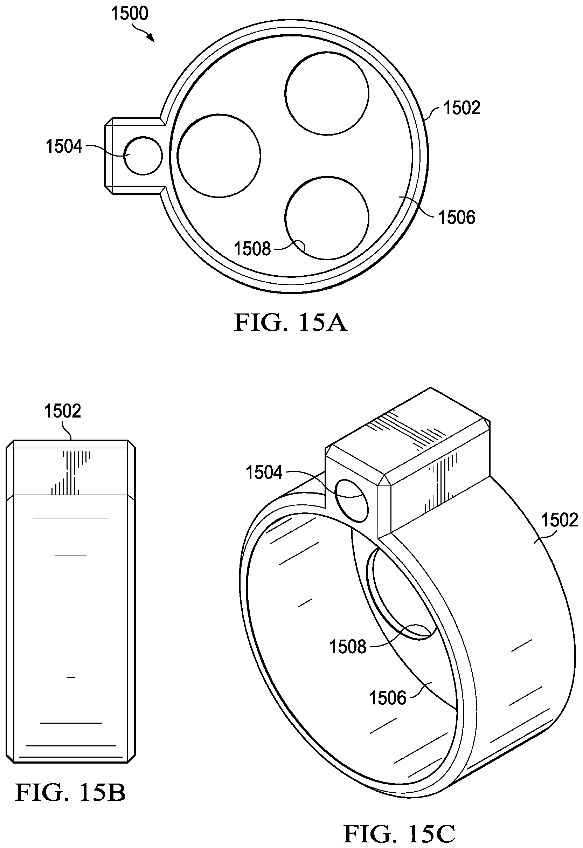

FIG. 15A shows a top view of a dispensing unit 1500 including an outer surface 1502, an inner surface 1506, one or more locations for a drink unit 1508, and a magnetic area 1504. FIG. 15B shows a side view of the dispensing unit 1500. FIG. 15C shows another view of the dispensing unit 1500.

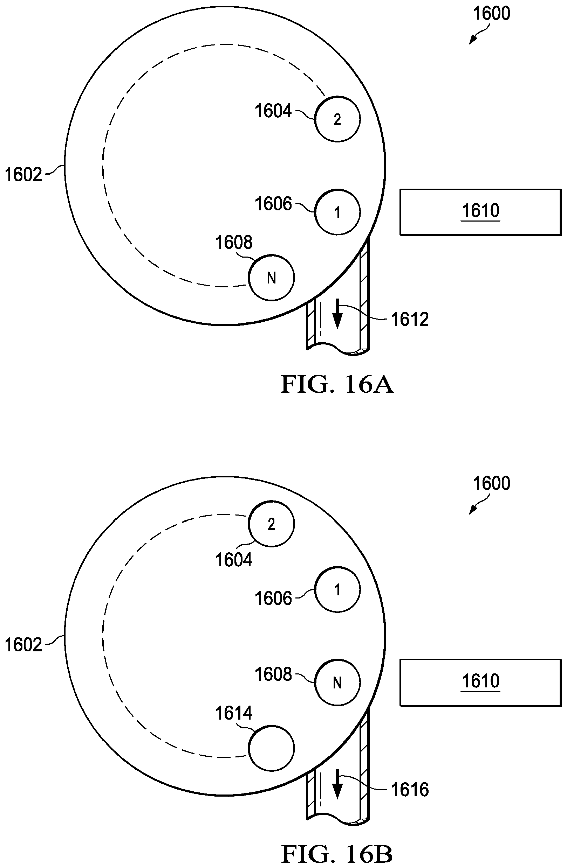

In FIG. 16A, another illustration of a dispensing unit with one or more ball functionalities is shown, according to one example. A dispensing system 1600 may one or more dispensing devices 1602, a magnet 1610 (and/or any other movement device and/or initiating device) and one or more dispensing units (a first dispensing unit 1606, a second dispensing unit 1604, a third dispensing unit, a fourth dispensing unit, an Nth-1 dispensing unit, and an Nth dispensing unit 1608. In a first example, an orange flavored drink may be dispensed when the magnet 1610 comes (and/or is energized) into a first relative position to a first dispensing unit 1606 by moving a blocking element which allows for a fluid flow 1612. In a second example, a cherry flavored drink may be dispensed when the magnet 1610 comes (and/or is energized) into a second relative position to a second dispensing unit 1604 by moving a blocking element which allows for the fluid flow 1612. In a third example, a cola flavored drink may be dispensed when the magnet 1610 comes (and/or is energized) into a third relative position to a third dispensing unit by moving a blocking element which allows for the fluid flow 1612. In a fourth example, a lemon flavored drink may be dispensed when the magnet 1610 comes (and/or is energized) into a fourth relative position to a fourth dispensing unit by moving a blocking element which allows for the fluid flow 1612. In an Nth example, a peach flavored drink may be dispensed when the magnet 1610 comes (and/or is energized) into an Nth relative position to an Nth dispensing unit 1608 by moving a blocking element which allows for the fluid to flow. In another example shown in FIG. 16B, a carbonated water unit 1614 may be utilized.

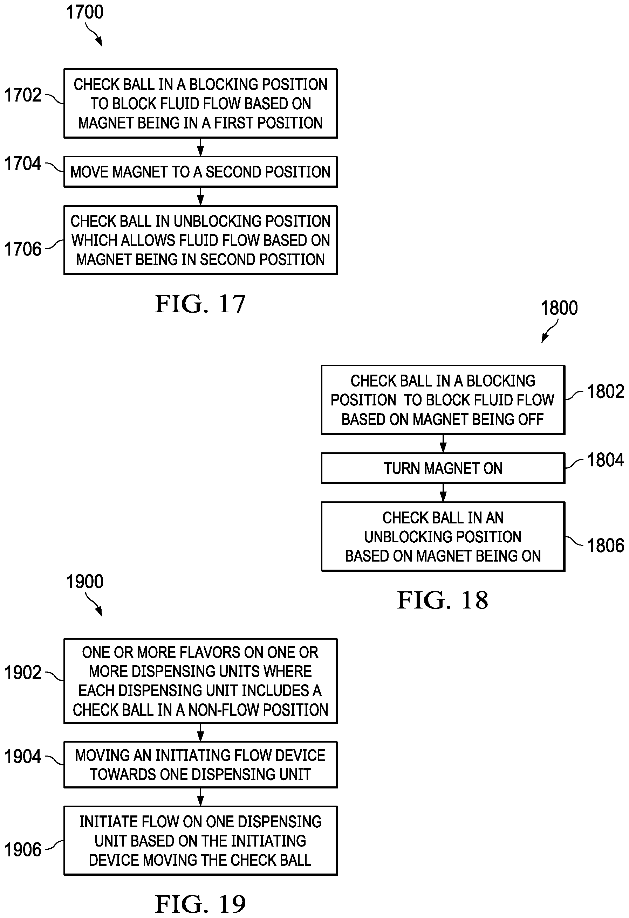

In FIG. 17, a flow diagram of a ball functionality is shown, according to one example. A method 1700 may include having a check ball (e.g., blocking element, blockage device, etc.) in a blocking position to block a fluid flow based on a magnet being in a first position (step 1702). The method 1700 may include moving the magnet to a second position (step 1704). The method 1700 may include having the check ball in an unblocking positon which allows fluid flow (and/or gaseous flow) based on the magnet being in a second position (step 1706).

In one example, the blocking element 204 is positioned over the dispensing element 206 which stops the passage of one or more fluids and/or one or more gases which can be seen in FIG. 1B. In the example shown in FIG. 1B, the blocking element 204 stops a fluid flow because the flow (e.g., line PSI) is putting pressure 208 on the blocking element 204 which creates a seal between the blocking element 204 and the dispensing element 206 (the dispensing element 206 in this example is a hole). A movement device 220 (e.g., a magnet) is in a first position 220A which does not allow the movement device 220 to interact with the blocking element 204.

Further, the blocking element 204 has moved to a second position relative to the dispensing element 206. In this example, the movement device 220 has moved to a second position 220B which allows the movement device 220 to interact with the blocking element as shown in FIG. 2B. The movement device 220 (e.g., a magnet) has caused the blocking element 204 (e.g., a Ferro-magnetic material and/or a metal ball) to move in a first direction 210 towards the movement device 220 which allows for a first fluid flow 211 to move towards the dispensing element 206 and a second fluid flow 222 through the dispensing element 206 until the movement device is moved back to the first position 220A which causes the blocking element to move back to a position to block the flow of fluids through the dispensing element 206 as shown in FIG. 1B.

In FIG. 18, a flow diagram of a ball functionality is shown, according to one example. A method 1800 may include having a check ball (e.g., blocking element, blockage device, etc.) in a blocking position to block fluid flow based on the magnet being off (e.g., de-energized) (step 1802). The method 1800 may include turning the magnet on (e.g., energizing) (step 1804). The method 1800 may include having the check ball in an unblocking position based on the magnet being on (step 1806).

In one example, the blocking element 204 is positioned over the dispensing element 206 which stops the passage of one or more fluids and/or one or more gases which can be seen in FIG. 5B. In the example shown in FIG. 5B, the blocking element 204 stops a fluid flow because the flow (e.g., line PSI) is putting pressure 208 on the blocking element 204 which creates a seal between the blocking element 204 and the dispensing element 206 (the dispensing element 206 in this example is a hole). A movement device 500 (e.g., a magnet) is in a first state (e.g., de-energized) which does not allow the movement device 500 to interact with the blocking element 204.

Further, the blocking element 204 has moved to a second position relative to the dispensing element 206. In this example, the movement device 500 has been energized and is in a second state 502 which allows the energized movement device 502 to interact with the blocking element as shown in FIG. 6B. The energized movement device 502 (e.g., a magnet) has caused the blocking element 204 (e.g., a Ferro-magnetic material and/or a metal ball) to move in a first direction 210 towards the energized movement device 502 which allows for a first fluid flow 211 to move towards the dispensing element 206 and a second fluid flow 222 through the dispensing element 206 until the energized movement device 502 returns in an de-energized movement device 500 which causes the blocking element to move back to a position to block the flow of fluids through the dispensing element 206 as shown in FIG. 6B.

In another example, the blocking element 204 is positioned over the dispensing element 206 which stops the passage of one or more fluids and/or one or more gases which can be seen in FIG. 7B. In the example shown in FIG. 7B, the blocking element 204 stops a fluid flow because the flow (e.g., line PSI) is putting pressure 208 on the blocking element 204 which creates a seal between the blocking element 204 and the dispensing element 206 (the dispensing element 206 in this example is a hole). A movement device 700 (e.g., a magnet) is in a first state (e.g., de-energized) which does not allow the movement device 700 to interact with the blocking element 204.

Further, the blocking element 204 has moved to a second position relative to the dispensing element 206. In this example, the movement device 700 has been energized and is in a second state 702 which allows the energized movement device 702 to interact with the blocking element as shown in FIG. 8B. The energized movement device 702 (e.g., a magnet) has caused the blocking element 204 (e.g., a Ferro-magnetic material and/or a metal ball) to move in a first direction 704 towards the energized movement device 702 which allows for a first fluid flow 211 to move towards the dispensing element 206 and a second fluid flow 222 through the dispensing element 206 until the energized movement device 502 returns in an de-energized movement device 700 which causes the blocking element to move back to a position to block the flow of fluids through the dispensing element 206 as shown in FIG. 8B.

In FIG. 19, a flow diagram of a ball functionality is shown, according to one example. A method 1900 may include having one or more check balls (e.g., blocking element, blockage device, etc.) in one or more dispensing units which have one or more flavors in a non-flow position (step 1902). The method 1900 may include moving an initiating flow device towards one dispensing unit (step 1904). The method 1900 may include initiating flow on one dispensing unit based on the initiating device moving the check ball (step 1906). In one example, when a person wants a drink that person pushes their cup on the input receiving area 1408 which moves the input device 1406 towards the drink unit 1418. After the input device 1406 (and the magnetic area 1410) come in proximate to the drink unit 1418 (and the blocking element 1416) flow of the fluid is initiated based on the magnetic area 1410 moving the blocking element 1416. Once the person stops pushing the input device 1406, the magnetic area 1410 moves away from the blocking element 1416 and the flow of fluids is stopped by the blocking element 1416.

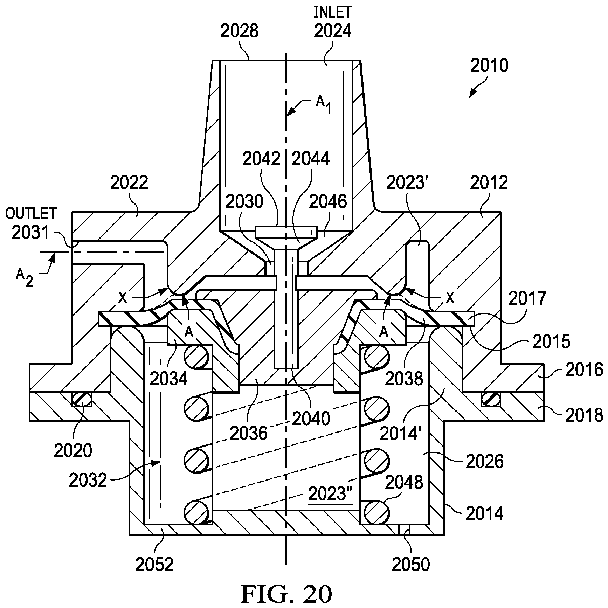

In Figure 20, a regulating valve includes an outer housing comprised of a cap joined to a base. The housing is internally subdivided by a barrier wall into a head section and a base section, the latter being further subdivided by a modulating assembly into a fluid chamber and a spring chamber. An inlet and a 90° outlet (please note outlet angle may be any angle from 0 to 360 degrees) in the cap communicate with the fluid chamber. Fluid at a variable pressure is admitted into the fluid chamber via the inlet, with the modulating assembly serving to maintain the fluid exiting the fluid chamber via the outlet at a substantially constant pressure.

This disclosure relates generally to fluid valves, and is concerned in particular with a regulating valve that is normally closed, that is opened by a variable fluid pressure above a selected threshold level, and that when open, serves to deliver the fluid at a constant pressure and flow rate

The drawing in Figure 20 is a sectional view through a regulating valve in accordance with the present disclosure, the valve being shown is in its open condition.

With reference to the drawing, a regulating valve in accordance with the present disclosure is generally depicted at 2010. The valve includes an outer housing having a cap 2012 joined to a cup-shaped base 2014 at mating exterior flanges 2016, 2018, with an 0-ring seal 2020 interposed there between.

The housing is internally subdivided by a barrier wall 2022 into a head section 2024 and a base section 2026. An inlet 2028 in the cap 2012 is adapted to be connected to a fluid supply (not shown) having a pressure that can vary from below to above a threshold level. The inlet 2028 and a central port 2030 in the barrier wall 2022 are aligned along a central axis A1 of the valve. An outlet port 2031, also in the cap 2012, is aligned on a second axis A2 transverse to the first axis A1.

A modulating assembly 2032 cooperates with the barrier wall 2022 to subdivide the base section into a fluid chamber 2031 segregated from a spring chamber 2023". The modulating assembly serves to prevent fluid flow through the valve when the fluid pressure at the inlet 2028 is below the threshold pressure.

When the fluid pressure at the inlet exceeds the threshold pressure, the modulating assembly serves to accommodate fluid flow from the head section 2024 through port 2030 into chamber 2023' at a constant pressure and flow rate, and from there through outlet port 2031. Either the outlet port 2031 or a downstream orifice or flow restrictor (not shown) serves to develop a back pressure in fluid chamber 2023'.

The modulating assembly 2032 includes a piston comprised of a hollow shell 2034 and a central plug 2036. The piston is supported for movement in opposite directions along axis A1 by a flexible annular diaphragm 2038. The inner periphery of the diaphragm is captured between the shell 2034 and plug 2036. The cup shaped base 2014 has a cylindrical wall segment 2014' received within the cap 2012. The outer periphery of the diaphragm is captured between an upper rim 2015 of the wall segment 2014' and an inwardly projecting interior ledge 2017 on the cap.

A stem 2040 on the piston plug 2036 projects through the port 2030 into the head section 2024. An enlarged head 2042 on the stem has a tapered underside 2044 that coacts with a tapered surface 2046 of the barrier wall to modulate the size of the flow path through the port 2030 as an inverse function of the varying fluid pressure in the input section, with the result being to deliver fluid to the outlet 2031 at a constant pressure and flow rate.

A compression spring 2048 in the spring chamber 2023" is captured between an underside surface of shell 2034 and the bottom wall 2052 of the housing base 2014. The spring urges the modulating assembly 2032 towards the barrier wall 2022. When the fluid pressure at the inlet 2028 is below the threshold pressure, spring 2048 serves to urge the diaphragm 2038 against the barrier wall 2022, thus preventing fluid flow from the fluid chamber 2023' to the outlet 2031'. As the fluid pressure exceeds the threshold pressure, the resilient closure force of spring 2048 is overcome, allowing the piston assembly to move away from the barrier wall, and allowing the modulating function of the coacting tapered surfaces 2044, 2046 to commence. An opening 2050 in the bottom wall 2052 serves to vent the volume beneath diaphragm 2038 to the surrounding atmosphere.

In one example, a regulating valve for receiving fluid at a variable pressure from a fluid source and for delivering the fluid at a substantially constant pressure and flow rate to a fluid applicator or the like, the valve including: a cup-shaped base having a cylindrical wall segment terminating in an upper rim, and an externally projecting first flange; a cap having an inwardly projecting ledge and an externally projecting second flange, the cup-shaped base and the cap being configured and dimensioned for assembly as a unitary housing, with the cylindrical wall segment of the cup-shaped base inserted into the cap, and with the extent of such insertion being limited by the abutment of the first flange with the second flange to thereby provide a space between the upper rim of the cup-shaped base and the inwardly projecting ledge of the cap; a barrier wall subdividing the interior of the housing into a head section and a base section; a modulating assembly subdividing the base section into a fluid chamber and a spring chamber; an inlet in the cap for connecting the head section to the fluid source; a port in the barrier wall connecting the head section to the fluid chamber, the port being aligned with a central first axis of the valve; an outlet in the cap communicating with the fluid chamber, the outlet being aligned on a second axis transverse to the first axis; a stem projecting from the modulating assembly along the first axis through the port into the head section; a flexible diaphragm supporting the modulating assembly within the housing for movement in opposite directions along the first axis, the diaphragm having an outer periphery captured in the space between the inwardly projecting ledge of the cap and a rim of the cylindrical wall segment of the cup-shaped base; a spring in the spring chamber, the spring being arranged to resiliently urge the modulating assembly into a closed position at which the diaphragm is in sealing contact with the barrier wall to thereby prevent fluid flow from the head section via the port and fluid chamber to the outlet, the spring acting in concert with the modulating assembly and the stem projecting therefrom to modulate the size of the port as an inverse function of the variable fluid pressure in the input sections whereby the pressure and flow rate of the fluid delivered to the outlet is maintained substantially constant, the valve being automatically actuated when the pressure of the fluid acting on the modulating assembly exceeds a threshold level, and being automatically closed when the pressure drops below the threshold level.

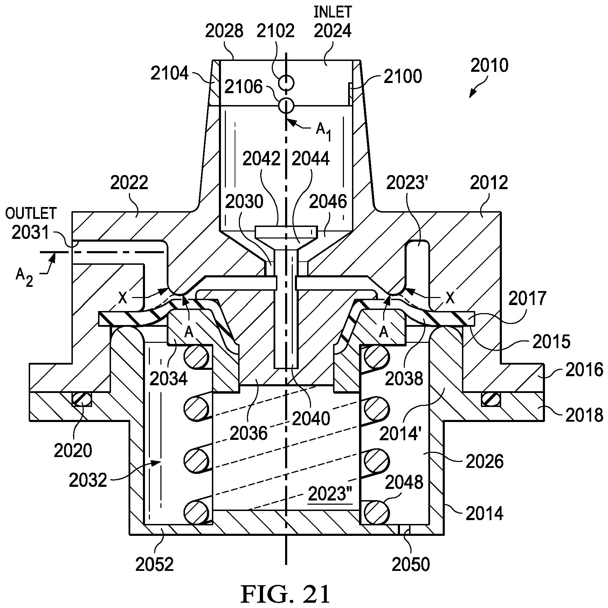

In Figure 21, a magnetically activated ball valve device 2100 has been added to regulating valve 2010 where the magnetically activated ball valve device 2100 is located in a position relative to the inlet (e.g., incoming fluid). In this example, the magnetically activated ball valve device 2100 includes an opening 2106, a ball 2102, and a magnetic device 2104. Additional examples of the magnetically activated ball valve device 2100 and the functionality of the magnetically activated ball valve device 2100 are shown in other figures of this disclosure. In other examples, the ball valve device 2100 may be activated by the fluid flow, mechanical functionality (e.g., levers, etc.), magnetic functionality, and/or any combination of movement devices.

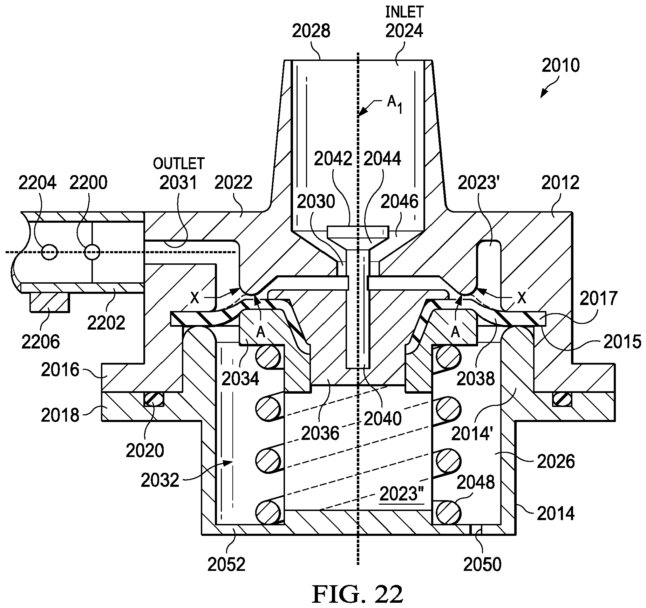

In Figure 22, a magnetically activated ball valve device 2202 has been added to regulating valve 2028 where the magnetically activated ball valve device 2202 is located in a position relative to the outlet (e.g., outgoing fluid). In this example, the magnetically activated ball valve device 2202 includes an opening 2200, a ball 2204, and a magnetic device 2206. Additional examples of the magnetically activated ball valve device 2202 and the functionality of the magnetically activated ball valve device 2202 are shown in the other figures of this disclosure.

A constant flow regulating valve includes a closure mechanism configured and arranged to override the modulating mode of the valve and to close the valve at fluid inlet pressures both below and above the valve's threshold level. The closure mechanism may be selectively deactivated to thereby allow the valve to assume its normal pressure responsive regulating functions. Examples of the regulating valve incorporate pressure relief devices and vent seals, with configurations suitable for incorporation into the trigger assemblies of portable sprayers.

This disclosure relates generally to fluid valves, and is concerned in particular with a regulating valve that operates in response to a variable fluid inlet pressure above a selected threshold level to deliver the fluid at a constant outlet pressure and flow rate. A closure mechanism is selectively operable either to accommodate the valve's normal pressure responsive regulating functions, or to override such functions by maintaining the valve in a closed state at inlet pressures both above and below the threshold level.

In one example, valves are normally closed in response to fluid inlet pressures below a threshold level, and operate in a modulating mode in response to variable fluid inlet pressures above the threshold level to deliver fluids at constant outlet pressures and flow rates. However, at fluid inlet pressures above the threshold level, such valves remain open and cannot serve as shut off valves, thus making it necessary to employ additional and separately operable valves to achieve this added function.

In accordance with one aspect of the present disclosure, the known regulating valves are modified to include closure mechanisms configured and arranged to override the modulating mode of the valves and to maintain closure of the valves at fluid inlet pressures both below and above the threshold level. The closure mechanisms may be selectively deactivated to thereby allow the valves to assume their normal pressure responsive regulating functions.

In accordance with still another aspect of the present disclosure, the vent opening communicating with the valve's spring chamber is provided with a seal which allows air to escape and enter the spring chamber, but which prevents the escape of liquid from the spring chamber in the event that the valve diaphragm is breached.

In accordance with another aspect of the present disclosure, a pressure relief mechanism is provided for relieving residual fluid inlet pressure below the threshold level when the valve is closed.

In accordance with another aspect of the present disclosure, multiple valve components are preassembled into integral subassemblies that are configured and arranged for final assembly into an outer housing structure.

In accordance with a further aspect of the present disclosure, the valve is integrated into the trigger assembly of a portable sprayer.

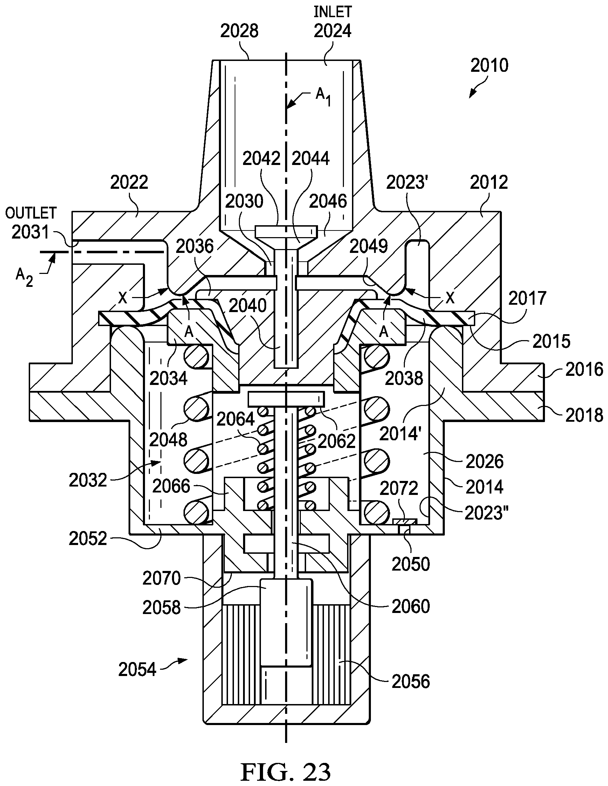

With reference initially to FIG. 23, a regulating valve in accordance with the present disclosure is generally depicted at 2010. The valve includes an outer housing having a cap 2012 joined to a cup-shaped base 2014 at mating exterior flanges 2016, 2018.

The housing is internally subdivided by a barrier wall 2022 into a head section 2024 and a base section 2026. An inlet 2028 in the cap 2012 is adapted to be connected to a fluid supply (not shown) having a pressure that can vary from below to above a threshold level. The inlet 2028 and a central port 2030 in the barrier wall 2022 are preferably aligned coaxially with a central axis A1 of the valve. An outlet port 2031 is provided in the cap 2012, and may be aligned on a second axis A2 transverse to the first axis A1. Although the axis A2 is shown at 90° with respect to axis A1, it will be understood that axis A2 may be oriented at other angles with respect to axis A1 in order to suit various applications of the valve.

A modulating assembly 2032 internally subdivides the base section into a fluid chamber 2023' segregated from a spring chamber 2023". The modulating assembly serves to prevent fluid flow through the valve when the fluid pressure at the inlet 2028 is below the threshold pressure. When the fluid pressure at the inlet exceeds the threshold pressure, the modulating assembly serves to accommodate fluid flow from the head section 2024 through port 2030 into fluid chamber 2023' and from there through outlet port 2031 at a substantially constant outlet pressure and flow rate. Either the outlet port 2031 or a downstream orifice or flow restrictor (not shown) serves to develop a back pressure in fluid chamber 2023'.

The modulating assembly 2032 includes a piston comprised of a hollow shell 2034 and a central plug 2036. The piston is supported for movement in opposite directions along axis A1 by a flexible annular diaphragm 2038. The inner periphery of the diaphragm is captured between the shell 2034 and plug 2036. The cup shaped base 2014 has a cylindrical wall segment 2014' received within the cap 2012. The outer periphery of the diaphragm is captured between an upper rim 2015 of the wall segment 2014' and an inwardly projecting interior ledge 2017 on the cap. The outer periphery of the diaphragm thus serves as an effective seal between the cap 2012 and base 2014.

A stem 2040 on the piston plug 2036 projects through the port 2030 into the head section 2024. An enlarged head 2042 on the stem has a tapered underside 2044 that coacts with a tapered surface 2046 of the barrier wall to modulate the size of the flow path through the port 2030 as an inverse function of the varying fluid pressure in the input section, with the result being to deliver fluid to the outlet 2031 at a substantially constant pressure and flow rate.

A compression spring 2048 in the spring chamber 2023" is captured between an underside surface of shell 2034 and the bottom wall 2052 of the housing base 2014. The spring urges the modulating assembly 2032 towards the barrier wall 2022. When the fluid inlet pressure is below the threshold pressure, spring 2048 serves to urge the diaphragm 2038 against a sealing ring 2049 on the underside of the barrier wall 2022, thus preventing fluid through flow from the head section 2024 via port 2030 and fluid chamber 2023' to the outlet 2031. As the fluid inlet pressure exceeds the threshold pressure, the resilient closure force of spring 2048 is overcome, allowing the modulating assembly to move away from the sealing ring 2049, and allowing the modulating function of the coacting tapered surfaces 2044, 2046 to commence. An opening 2050 in the bottom wall 2052 serves to vent the volume beneath diaphragm 2038 to the surrounding atmosphere.

An operating means includes a solenoid 2054 fitted to the underside of the cup-shaped base 2014. The solenoid includes a magnet 2056 surrounding a magnet core 2058. A rod 2060 projects from the magnet core along axis A1 into the spring chamber 2023" where it terminates in a flat head 2062. A closure means includes a second compression spring 2064 surrounding the rod 2060 and captured between the head 2062 and an annular interior boss 2066 on the bottom wall 2052 of the base 2014. The closure force of spring 2064 exceeds that of spring 2048.

In the condition shown in the drawing, the magnet 2056 has been energized to axially withdraw the core 2058, thus pulling the head 2062 downwardly against the compressive force of spring 2064 and away from the underside of plug 2034. This allows the modulating assembly 2032 to perform its normal pressure regulating functions as described above.

If the magnet 2056 is de-energized, the spring 2064 will serve to push the head 2062 up against the bottom of plug 2034 with a closure force sufficient to override the valve's normal regulating functions, resulting in the diaphragm assembly 2032 being elevated to press the diaphragm 2038 against the circular downwardly projecting sealing ring 2049 on the barrier wall 2022. This in turn prevents fluid through flow from head section 2024 via port 2030 and fluid chamber 2023' to the outlet port 2031. A circular ledge 2070 serves as a stop to limit upward movement of the core 2058, thus safeguarding the diaphragm 2038 from being pressed too tightly against the sealing ring 2049. The closure force of spring 2064 is sufficient to hold the diaphragm 2038 against the sealing ring 2049 at inlet pressures above the threshold pressure.

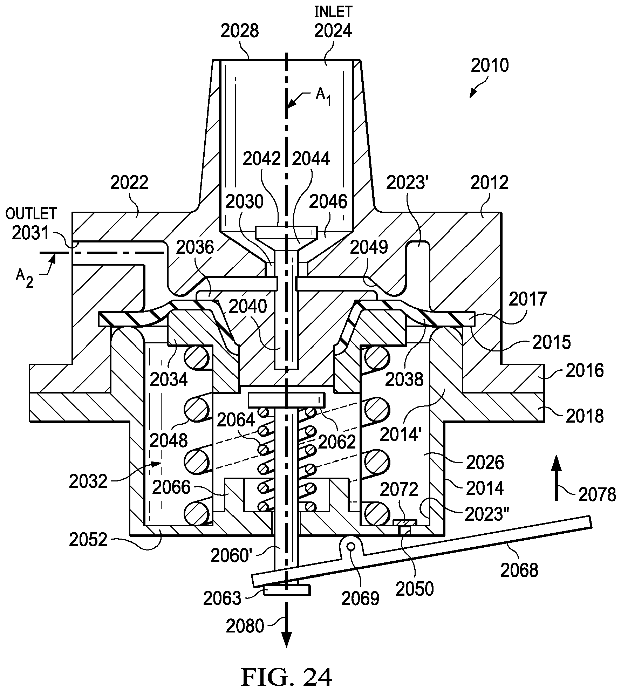

In the alternative example shown in FIG. 24, the rod 2060' projects through the bottom wall 2052 to terminate in a foot 2063 acted upon by a lever 2068 mounted for pivotal movement about a pin 2069 or the like. Moving the lever up causes the rod 2060' to be pulled downwardly.

In light of the foregoing, it will be seen that the valve 2010 can serve as a shut off valve by simply allowing the spring 2064 to override spring 2048 and maintain the diaphragm 2038 of the modulating assembly 2032 in sealing contact with the ring 2049 on barrier wall 2022. By deactivating the closure force of spring 2064, either by energizing the solenoid 2054 of FIG. 23 or manually operating lever 2068 of FIG. 24, the valve is conditioned to assume its normal pressure responsive regulating function at inlet pressures above the threshold level.

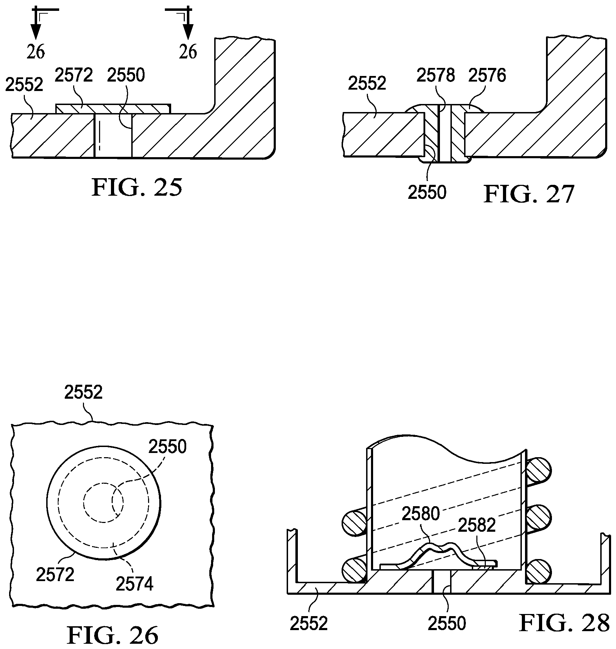

As can be best seen by additional reference to FIGS. 25 and 26, a gas permeable hydrophobic seal 72 overlies the vent opening 50. The seal may comprise an expanded polytetraflouroethelene (ePTFE) film, or any other gas permeable hydrophobic membrane that allows air to escape from and reenter the spring chamber 23", but that in event of failure of the diaphragm 38 and entry of liquid into the spring chamber, will prevent liquid from leaking to the exterior of the valve via the vent opening 50. The seal 72 may be adhered or heat sealed to the bottom wall 52 as at 74. Although not shown, the seal may be reinforced, if necessary, by an additional porous membrane, e.g., a woven fabric or the like.

FIG. 27 depicts an alternative example of the vent seal in which a bushing 76 has been snap fitted into the vent opening 50. The bushing is molded of a hydrophilic polymer that absorbs water and swells, resulting in closure of the restricted central vent passageway 78. This again serves to prevent leakage in the event of failure of the diaphragm 38.

FIG. 28 depicts still another alternative example of the vent seal in which the vent opening 50 is located at the center of bottom wall 52. A flexible sealing diaphragm 80 of some material that is impervious to both liquids and air is adhered or heat sealed as at 82 over the vent opening. As air pressure in the spring chamber 23" varies in response to flexure of the main diaphragm 38, the sealing diaphragm 80 will respond flexibly, while at all times maintaining a sealing relationship which will prevent liquid from escaping through the vent opening.

It thus will be seen that the seals 72, 76 and 80 serve as safeguards against leakage of liquid from the regulating valve through vent opening so in the event that the diaphragm 38 is breached.

The regulating valves of the present disclosure are adaptable to widespread usage, a non-limiting example being to stabilize the pressure and flow of the liquid sprays emitted by portable sprayers.

Portable sprayers include both knapsack sprayers and compression sprayers. In the conventional knapsack sprayer, a lever actuated pump is manually operated to withdraw liquid from a non-pressurized portable tank and to deliver the liquid through a wand to a nozzle from which the liquid is expelled in a spray pattern. In a compression sprayer, the tank is pressurized to achieve the same result. In both cases, the delivery pressure varies over a wide range, which affects the liquid spray pattern. Too little pressure produces excessively large wasteful spray droplets, whereas excessive pressure operates in the reverse manner to produce an overly atomized spray which can easily drift from the intended target.

Some attempt at control is provided by manually operating trigger assemblies interposed in the flow path between the tank and nozzle. However, experience has proven that operators are unable to operate such trigger assemblies in a manner which reliably produces substantially uniform delivery pressures and liquid flow rates to the spray nozzles. Thus, spray patterns remain erratic; resulting in wasteful excessive liquid application and/or inadequate overly atomized sprays which often drift dangerously from their intended targets.

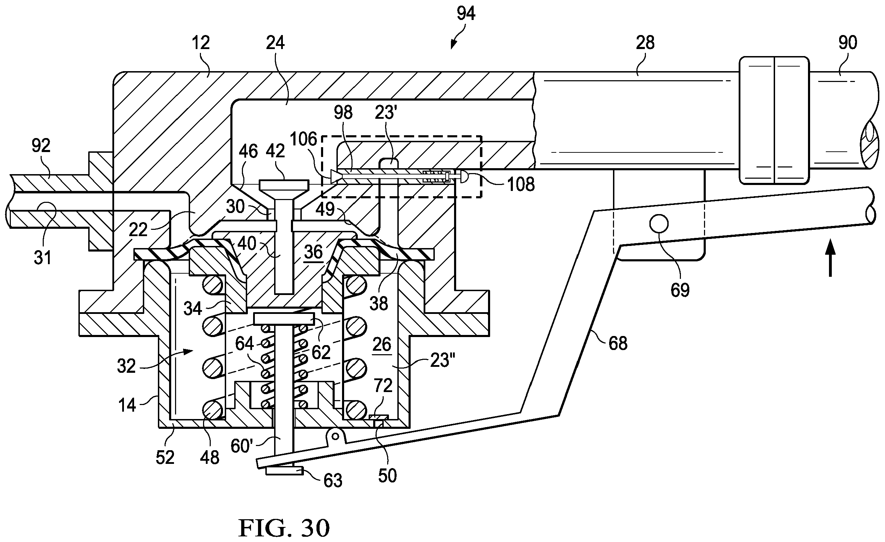

In order to address these problems, and with reference to FIGS. 30-32, a knapsack sprayer 84 includes a tank 86 adapted to contain a liquid, typically a pesticide, herbicide or the like. A pump 88 is mounted within the tank, with an inlet submerged in the liquid, and an outlet connected to a flexible hose 90 leading to trigger assembly 94 incorporating a selectively actuated regulating valve in accordance with the present disclosure. The trigger assembly 94 is in turn connected to a wand 92 having a nozzle 95 at its distal end. The pump 88 is operated by a pivotal lever 96 which is manually manipulated by an operator to withdraw liquid from the tank 86 and to deliver the liquid at a variable pressure via the hose 90 to the trigger assembly 94. Although not shown, it will be understood that the pressurized tank of a compression sprayer would operate in a similar manner to deliver fluid at a variable pressure.

The trigger assembly 94 incorporates a regulating valve similar to that illustrated in FIG. 24, with minor modifications to accommodate its positioning in the liquid flow path between the hose 90 and wand 92. For example, the head section 24 has been reconfigured with a 90° turn to position the inlet 28 for connection to the hose 90, the shape and pivotal connection of the operating lever 68 has been appropriately modified to serve as the trigger, and the outlet port has been connected to the wand 92.

The regulating valve of the trigger assembly 94 is held closed by the force of spring 64. The closure force of spring 64 is relieved by depressing the trigger 68, and in response to pump pressures above the preset threshold level, the valve operates as described previously to maintain a substantially constant delivery pressure and flow rate via the wand 92 to the nozzle 95. By maintaining a substantially constant pressure and flow rate to the nozzle 95, the selected spray pattern remains stable irrespective of variations in the pressure and flow rate of the liquid exiting tank 86.

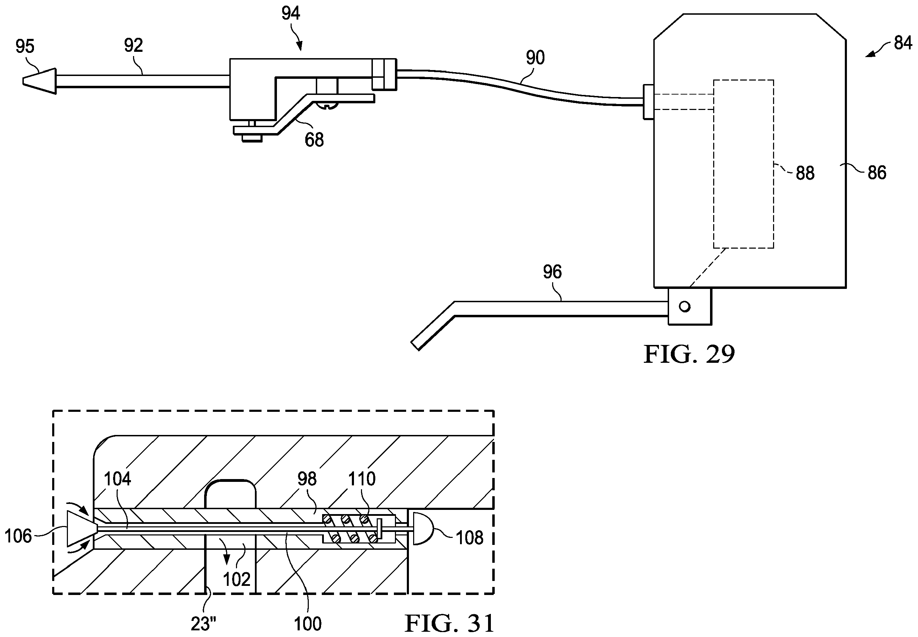

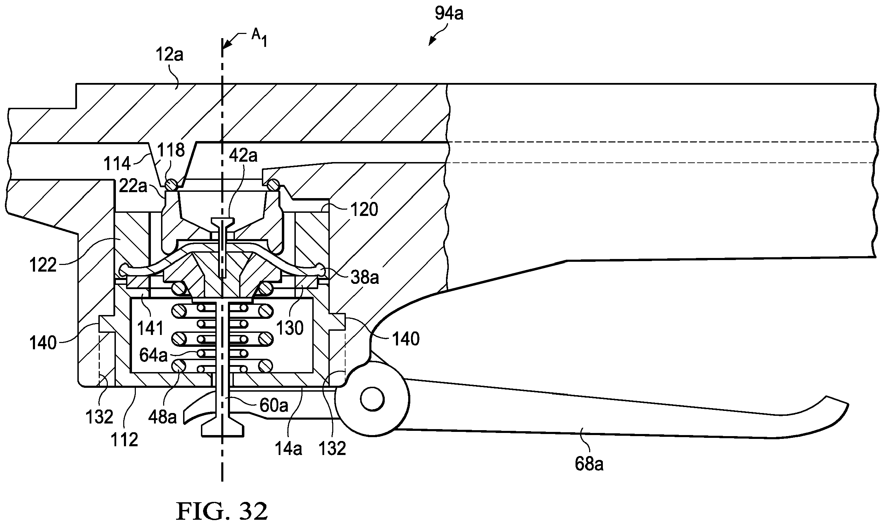

The regulating valve of the trigger assembly 94 may be additionally modified to include pressure relief means for relieving residual internal pressures in the head section 24 when the valve is closed and either disassembly is required for cleaning and maintenance, or when the trigger assembly is disconnected from the hose 90. To this end, a sleeve 98 is inserted in the cap 12. The sleeve provides a vent path 100 extending from an entry opening communicating with the head section 24 to a side exit opening 102 communicating with the fluid chamber 23'. A pin 104 extends through the sleeve and terminates at opposite ends in enlarged shaped closure and operating heads 106, 108 located respectively in head section 24 and at the valve exterior. A spring 110 serves to bias the pin to the right as viewed in the drawings, thus pulling the closure head 106 in the same direction to close off the vent path 100, as shown in FIG. 31. The vent path is opened by depressing operating head 108 to shift pin in the opposite direction, as shown in FIG. 32, thus opening the vent path and allowing pressurized liquid in the head section 24 to be bled through opening 102 to the fluid chamber 23' from which it can exit through outlet port 31 to the wand 92.

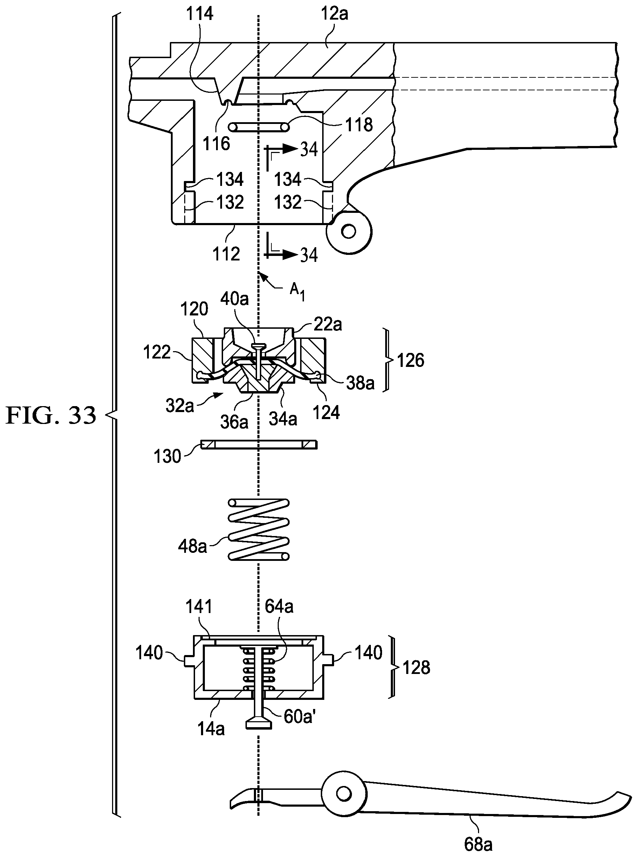

With reference additionally to FIGS. 32-34, another example of a regulating valve is accordance with the present disclosure is depicted at 94 a. The components of valve 94 a that are the same or equivalent to those of value 94 depicted in FIG. 30 have been identified with the same reference numerals with "a" as an added identify.

In this example, the cap 12 a serves as an outer housing structure. The cap 12 a has a bottom opening 112 and an internal circular land 114 grooved to accept an O-ring seal 118. The bottom opening 112 and circular land 114 are aligned on a central axis A1. The barrier wall 22 a is separate from the cap 12 a and has a circular rim 120 adapted to be seated in sealing engagement against the O-ring seal 118.

The modulating assembly 32 a again includes a piston comprised of a hollow shell 34 a and a central plug 36 a. The piston is supported for movement along axis A1, by a flexible diaphragm 38 a. The inner periphery of the diaphragm is captured between the shell 34 a and plug 36 a, and the outer periphery of the diaphragm has a beaded edge captured in an internal groove in a cylindrical skirt 122 having a circular bottom edge 124.

A preassembled first subassembly 126 includes the shell 34 a, central plug 36 a, diaphragm 38 a, skirt 122, barrier wall 22 a and the stem 40 a.

A preassembled second subassembly 128 includes the cup-shaped base 14 a, compression springs 48 a and 64 a, and the operating rod 60 a.

The valve 94 is an assembled by first seating the O-ring seal 118 in the groove 116 of the interior land 114. The first subassembly 126 is then inserted through bottom opening 112 of the cap to seat its rim 120 against the O-ring seal 118.

A compressible annular seal 130 is then inserted via opening 112 and located against the bottom of the diaphragm 38 a.

The second subassembly 128 is then inserted through bottom opening 112. As shown in FIG. 31, the interior wall of the cap 12 is provided with oppositely disposed vertical grooves 132 leading to horizontal grooves 134. The grooves 134 have ramped bottoms 136 leading to notches 138. The cup-shaped base 14 has an oppositely disposed radially projecting ears 140.

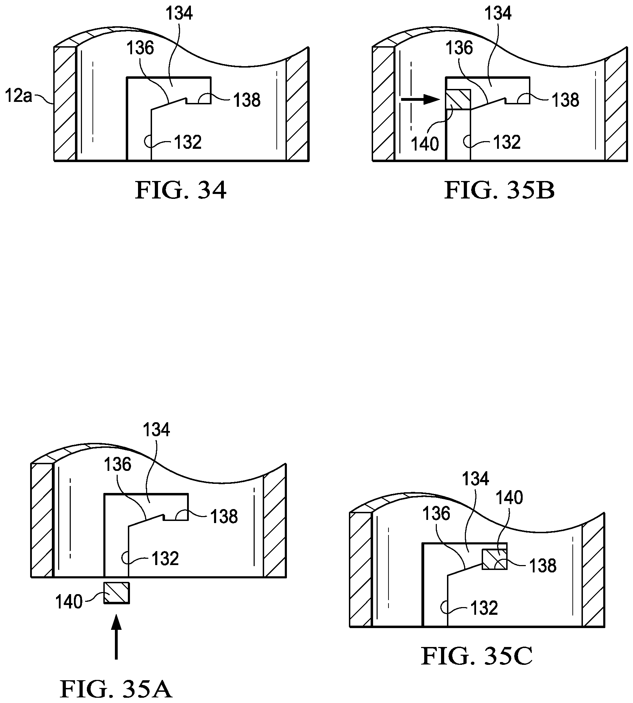

As the second subassembly 128 is inserted, the ears 140 of the cup-shaped base 14 a enter the vertical slots 132 (FIG. 35A). When an internal ledge 141 adjacent to the upper rim of the cup-shaped base 14 a initially contacts the seal 130, the ears 140 are positioned as shown in FIG. 35B. The cup-shaped base is then rotated to shift the ears up the ramped bottoms 136 and into snapped engagement in the notches 136, as shown in FIG. 35C. The second subassembly is then securely locked in place, with the seal 130 compressed between the underside of the diaphragm 38 a and the ledge 141.

The trigger 68 may then be operatively connected to the cap 12 a and rod 60 a' to complete the assembly.

It will be understood that the second subassembly 128 may be secured in place by other means, including for example solvent welding or a threaded connection. Preassembly of the first and second subassemblies advantageously simplifies final assembly of the regulating valves.

In one example, a regulating valve for receiving fluid at a variable inlet pressure from a fluid source and for delivering the fluid at a substantially constant outlet pressure and flow rate to a fluid applicator or the like, the valve may include: a housing internally subdivided by a barrier wall into a head section and a base section; a port in the barrier wall; a modulating assembly internally subdividing the base section into a fluid chamber and a spring chamber, the modulating assembly having a stem projecting along an axis through the port into the head section, and having a flexible diaphragm supporting the modulating assembly for movement in opposite directions along the axis; an inlet in the housing for connecting the head section to the fluid source; an outlet in the housing communicating with the fluid chamber; a spring in the spring chamber, the spring being responsive to inlet pressures below a threshold level to maintain the modulating assembly against the barrier wall and to thereby prevent fluid through flow from the head section via the port and fluid chamber to the outlet, the spring being yieldably responsive to inlet pressures above the threshold level to thereby accommodate movement of the modulating assembly away from the barrier wall, with an accompanying fluid through flow from the head section via the port and the fluid chamber to the outlet, and with the stem serving to modulate the size of the flow path through the port as an inverse function of variations in the inlet pressure above the threshold level, whereby the outlet pressure and flow rate is maintained at a substantially constant level; closure means acting independently of the spring, the closure means comprising a rod axially movable between a holding position in contact with and maintaining the modulating assembly against the barrier wall when the inlet pressure is both above and below the threshold level, and a deactivated position spaced from the modulating assembly; and operating means for selectively deactivating the closure means.

In another example of the regulating valve, the rod may be aligned with and axially movable along the axis. In another example of the regulating valve, the rod may be resiliently maintained in the holding position by a second spring having a closure force exceeding the closure force of the first mentioned spring. In another example of the regulating valve, the operating means may include a manually operable lever operatively connected to the rod. In another example of the regulating valve, the operating means may include a solenoid. In another example of the regulating valve, the closure means may include a second spring having a closure force that exceeds the closure force of the first mentioned spring. In another example of the regulating valve, the fluid source is a portable sprayer, and wherein the outlet is connected to a wand leading to a nozzle. In another example of the regulating valve, the portable sprayer is a knapsack sprayer. In another example of the regulating valve, the portable sprayer is a compression sprayer. In another example of the regulating valve, the regulating valve includes pressure relief means for bleeding liquid from the head section into the fluid chamber. In another example of the regulating valve, the pressure relief means comprises a vent path extending from an entry opening communicating with the head section to an exit opening communicating with the fluid chamber, a pin having a closure head in the head section and an operating head located externally of the housing, and a spring for biasing the pin into a closed position at which the closure head closes the entry opening and prevents the passage of liquid from the head section via the vent path to the fluid chamber, the operating head being depressible to overcome the biasing force of the spring to thereby permit liquid to flow from the head section via the vent path to the fluid chamber. In another example of the regulating valve, the housing comprises a cap and a cup-shaped base, the barrier wall and the modulating assembly being preassembled to form a first subassembly received in the cap, and the cup-shaped base and the spring and closure means being preassembled to form a second subassembly received in and operatively coupled to the cap. In another example of the regulating valve, the second subassembly is operatively coupled by snap engagement of the cup-shaped base with the cap. In another example of the regulating valve, the snap engagement results from rotation of the cup-shaped base relative to the cap. In another example of the regulating valve, the regulating valve includes a vent opening in the housing in communication with the spring chamber. In another example of the regulating valve, the regulating valve includes a seal for the vent opening, the seal being adapted to accommodate passage of gas through the vent opening and to prevent the passage of liquid through the vent opening. In another example of the regulating valve, the seal comprises a gas permeable hydrophobic membrane. In another example of the regulating valve, the seal comprises a hydrophobic bushing inserted in the vent opening, the bushing defining a restricted vent passageway that is closed in response to the absorption of liquid by the bushing. In another example of the regulating valve, the seal comprises a flexible diaphragm imperious to both liquids and gases. In another example, a regulating valve for receiving fluid at a variable inlet pressure from a fluid source and for delivering the fluid at a substantially constant outlet pressure and flow rate to a fluid applicator or the like, the valve includes: a housing internally subdivided by a barrier wall into a head section and a base section; a port in the barrier wall; a modulating assembly internally subdividing the base section into a fluid chamber and a spring chamber, the modulating assembly having a stem projecting along an axis through the port into the head section, and having a flexible diaphragm supporting the modulating assembly for movement in opposite directions along the axis; an inlet in the housing for connecting the head section to the fluid source; an outlet in the housing communicating with the fluid chamber; a spring in the spring chamber, the spring being responsive to inlet pressures below a threshold level to maintain the modulating assembly against the barrier wall and to thereby prevent fluid through flow from the head section via the port and fluid chamber to the outlet, the spring being yieldably responsive to inlet pressures above the threshold level to thereby accommodate movement of the modulating assembly away from the barrier wall, with an accompanying fluid through flow from the head section via the port and the fluid chamber to the outlet, and with the stem serving to modulate the size of the flow path through the port as an inverse function of variations in the inlet pressure above the threshold level, whereby the outlet pressure and flow rate is maintained at a substantially constant level, and wherein the housing comprises a cap and a cup-shaped base, the barrier wall and the modulating assembly comprises a first preassembled subassembly adapted to be received in the cap, and the cup-shaped base and the spring comprise a second preassembled subassembly adapted to be received in and operatively coupled to the cap. In another example of the regulating valve, the regulating valve includes a closure means acting independently of the spring for maintaining the modulating assembly against the barrier wall when the inlet pressure is both above and below the threshold level, and operating means for selectively activating the closure means.

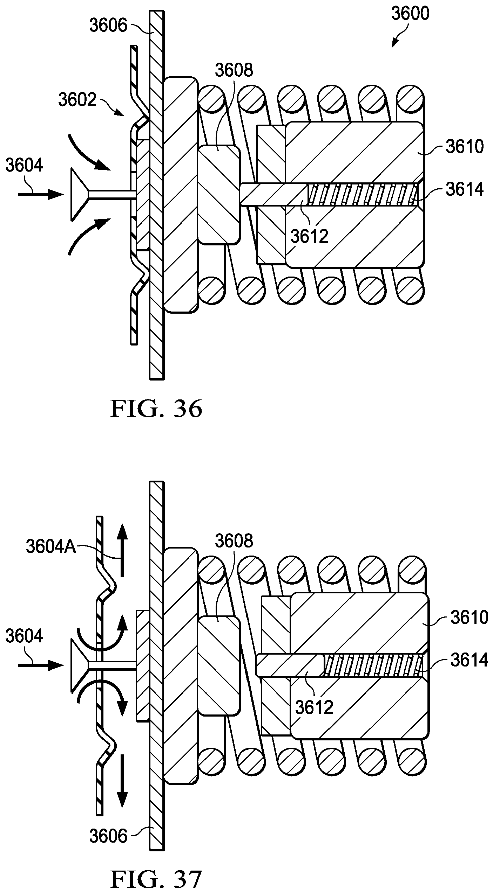

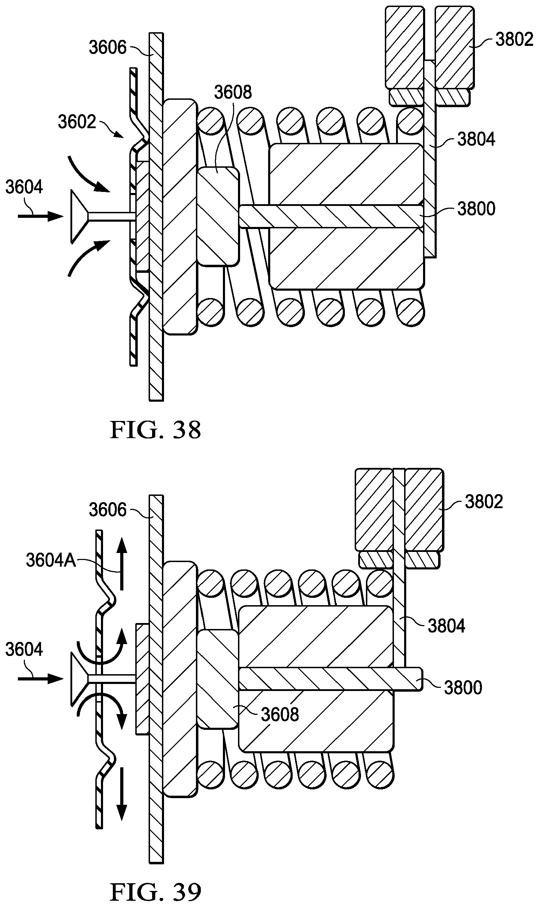

In Figure 36, a valve 3600 in a closed position is shown. The valve 3600 may include a sealing ring 3602, a magnet element 3608, a latching solenoid 3610, and a diaphragm 3606. The latching solenoid 3610 pushes the diaphragm 3606 against the CF valve's sealing ring blocking a flow of fluid 3604. The latching solenoid 3610 may be either permanent magnet or residual magnetism types and with or without a spring assist 3614 for the solenoid plunger 3612. In Figure 37, a valve 3600 in an open position is shown. In the examples shown in Figures 37 and 38, a magnetic element 3608 is utilized to open and close the valve. The solenoid coil energized retracts the plunger 3612 allowing the input pressure to open the CF valve and allow modulation diaphragm to control fluid pressure and flow. In FIG. 38 the CF valve is in a closed position. A second latching solenoid 3802 is latched and mechanically blocking the movement of the plunger 3800 in the latching solenoid 3610. The plunger 3800 is position against the diaphragm which is forced against the sealing ring blocking fluid flow. To operate the CF valve, the second latching solenoid 3802 is activated to retract its plunger 3804 which free the plunger 3800 of the latching solenoid 3610. Then, incoming fluid opens the CF valve and pushes the plunger 3800 back and the diaphragm is free to modulate. To close the CF valve, the latching solenoid is activated and then the second latching solenoid 3802 is activated and re-latched (after a momentary delay) which locks the diaphragm in the closed position. The mechanical locking device may be configured to several different forms using rods, levers for mechanical advantages. In Figure 39, a valve 3600 in a closed position is shown. In this example, there is a first solenoid (e.g., solenoid A) and a second solenoid (e.g., solenoid B). In this example, the second solenoid is at a 90 degree angle to the first solenoid which allows the second solenoid to act as a stopper to the movement of the first solenoid. The second solenoid may be locked into the position shown in Figure 38 which impedes the movement of the first solenoid but does not require any energy to remain in place. Further, the second solenoid may be at any angle to the first solenoid. In addition, any stopping functionality may be utilized, such as, mechanical, magnetic, etc. In Figure 39, a valve in an open position is shown. Please note that the second solenoid has moved to allow the first solenoid to move.

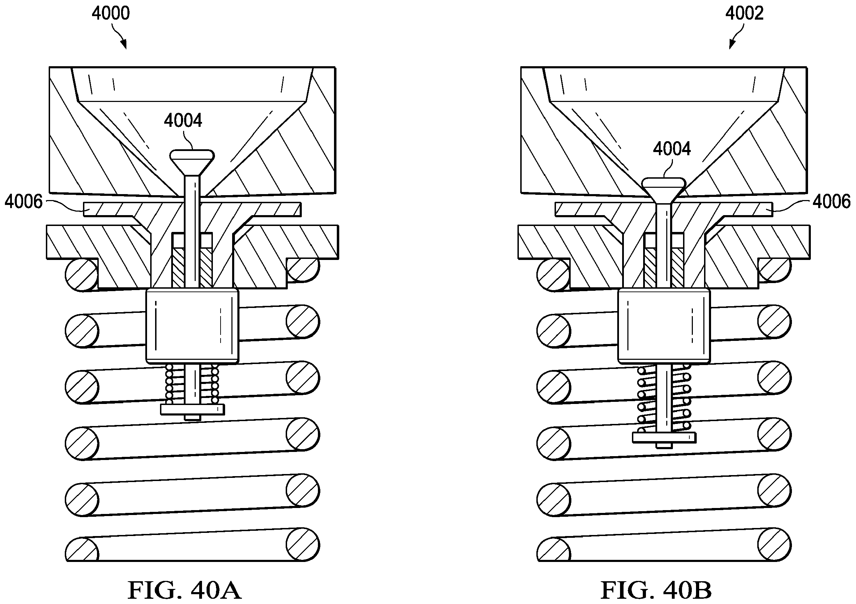

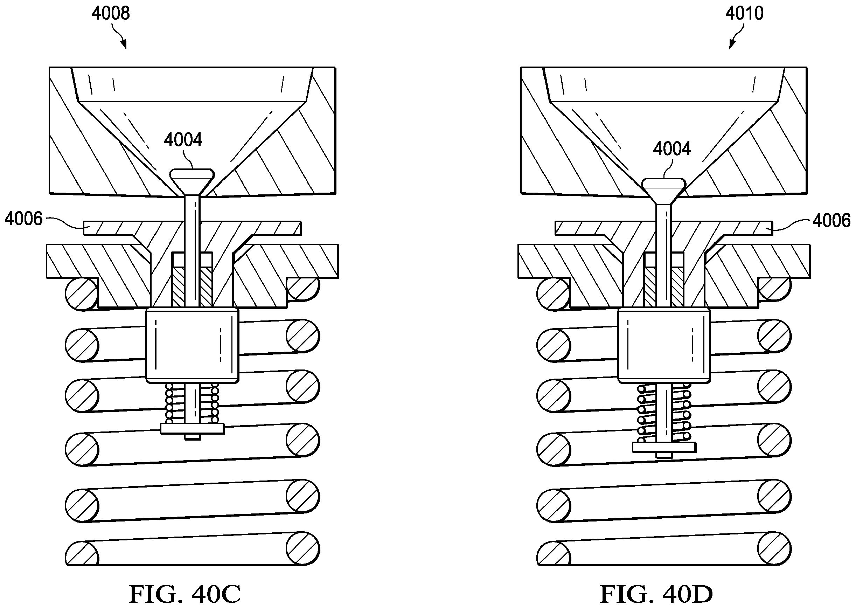

In Figure 40A, a solenoid in an open position and valve in a closed position are shown. In Figure 40B, a solenoid in a closed position and valve in a closed position are shown. In Figure 40C, a solenoid in an open position and valve in an open position are shown. In Figure 40D, a solenoid in an open position and valve in an open position but closing are shown. In various examples, the movement functionality may be performed magnetically, mechanically, pneumatically, manually, and/or any combination thereof.

In one example, the dispensing device is a magnetically controlled valve using an internally disposed ball and an external magnetic source.

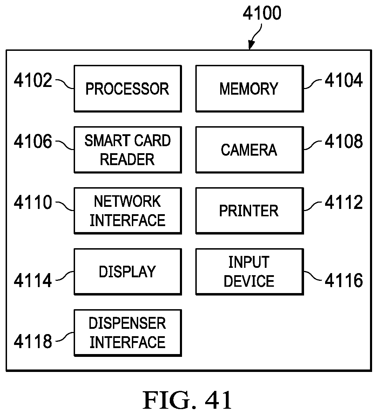

In FIG. 41 a block diagram 4100 is shown, according to one example. The block diagram 4100 includes a processor 4102, a memory 4104, a smart card reader 4106, a camera 4108, a network interface 4110, a printer 4112, a display 4114, an input device 4116, and a dispenser interface 4118. The memory 4104 may include one or more drink formulations, drink programs, maintenance data, client data, and/or any other information. The printer 4112 may generate one or more maintenance reports, usage reports, receipts, etc. The network interface 4110 may communicate with the Internet and/or the back office relating to anything in this disclosure. The dispenser interface 4118 may communicate with one or more dispensing units.

In one example, a conduit may include a hollow element including an inner surface and an outer surface which allows for a passage of one or more of one or more fluid elements and one or more gaseous elements, a constraining element with one or more openings and one or more non-open elements, one or more blocking elements configured to stop the passage of the at least one of the one or more fluid elements and the one or more gaseous elements when the one or more blocking elements are in a first position relative to the one or more openings, and a movement device configured to move the one or more blocking elements to a second position relative to the one or more openings which allows for the passage of the one or more fluid elements and the one gaseous elements through the one or more openings in the constraining element.

In another example, the movement device is a magnetic coil. In another example, the movement device is an electronic magnetic. In another example, the fluid conduit is coupled to a dispensing unit. In another example, the fluid conduit is coupled to a multi-flavor dispensing unit. In another example, the conduit includes a valve which is coupled to the conduit. In another example, the valve is a CF valve.

In another example, a dispensing system may include a dispensing unit including one or more flavor units and one or more water units where each of the one or more flavor units and the one or more water units include a transportation unit, the transportation unit including a barrier element with one or more openings, a blockage device configured to close the one or more openings to prevent a flow from at least one of the one or more flavor units and the one or more water units, a movement device configured to move the blockage device to a first position relative to the one or more openings which allows for a passage of one or more fluid elements and one gaseous elements through the one or more openings in the blockage device.

In another example, the at least one of the one or more water units is a carbonated unit. In another example, the movement device is a magnetic coil. In another example, the movement device is an electronic magnetic. In another example, the at least one of the one or more flavor units and the one or more water units are configured to be moveable. In another example, the at least one of the one or more flavor units and the one or more water units are configured to be automatically moveable.

In another example, a method may include energizing one or more movement devices via one or more input devices based on the one or more input devices being in a first state, moving one or more blocking elements to a first position via the one or more movement devices when the one or more movement devices are in a first status which allows a flow to occur, de-energizing the one or more movement devices via the one or more input devices being in a second state; and/or moving the one or more blocking elements to a second position based on the one or more devices being in a second status, the movement of the one or more blocking elements stops the flow.

In another example, the one or more movement devices are magnetic coils. In another example, the one or more movement devices are coils electronic magnetics. In another example, the method may occur on a dispensing unit. In another example, the dispensing unit is a multi-flavor dispensing unit. In another example, the method may include a flow controller. In another example, the flow controller is a CF valve.

The disclosed examples are not considered limited to any particular magnetic materials, or orifice opening dimensions, Ball dimensions, Ball to orifice opening ratio, magnet location, electro magnet location or magnetic coil location,

All locations, sizes, shapes, measurements, ratios, amounts, angles, component or part locations, configurations, dimensions, values, materials, orientations, etc. discussed above or shown in the drawings are merely by way of example and are not considered limiting and other locations, sizes, shapes, measurements, ratios, amounts, angles, component or part locations, configurations, dimensions, values, materials, orientations, etc. can be chosen and used and all are considered within the scope of the disclosure.

Dimensions of certain parts as shown in the drawings may have been modified and/or exaggerated for the purpose of clarity of illustration and are not considered limiting.

Various examples of integrating the valve and the solenoid devices are shown in the following figures.

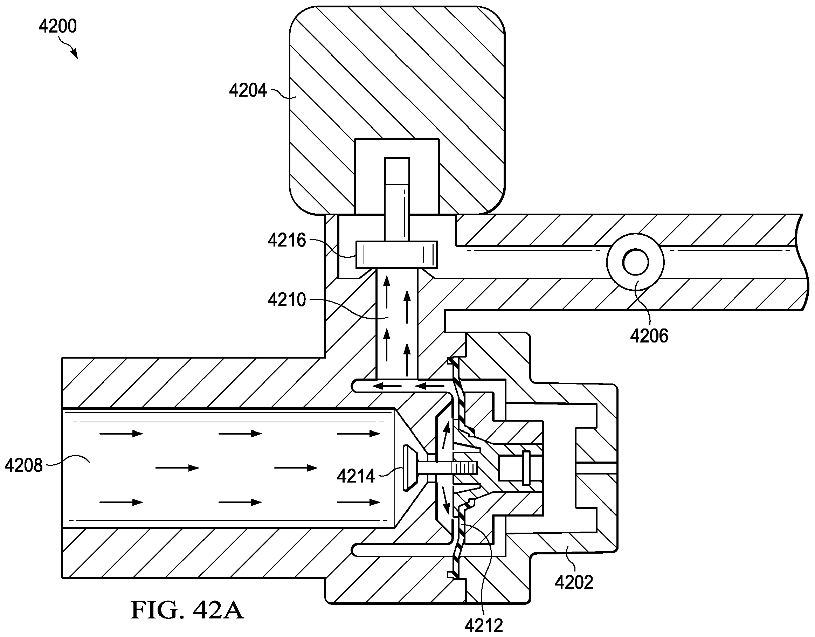

In FIG. 42A, an illustration of a valve and solenoid combination is shown, according to one example. A first valve and solenoid combination 4200 includes a valve 4202, a solenoid 4204, and an orifice 4206. The orifice 4206 may be fixed and/or adjustable. An inlet fluid stream 4208 may provide a first pressure and originate from any source (e.g., utility, condition source, etc.). The inlet fluid stream 4208 may pass a throttle pin 4214 of the valve 4202. In addition, the throttle pin 4214 and/or a diaphragm assembly 4212 may be part of the valve 4202. Further, the valve 4202 may be a CF Valve as previously disclosed in this document. An outlet fluid stream 4210 from the valve 4202 may be at a second pressure and/or fluid flow. Further, the second pressure and/or fluid flow may be a predetermined pressure and/or fluid flow. In addition, the second pressure and/or fluid flow may be a predetermined pressure and/or fluid flow based on the valve 4202 configuration. Further, the second pressure and/or flow fluid may be less than the first pressure of the inlet fluid stream 4208. In another example, the second pressure and/or flow fluid may be greater than the first pressure of the inlet fluid stream 4208. In this example, the outlet fluid stream 4210 is blocked (e.g., stopped) by a solenoid plunger 4216. In this example, the outlet fluid stream 4210 moves in one direction. In this example, the outlet fluid stream 4210 moves from left to right and is at a higher elevation than the inlet fluid stream 4208. It should be noted that all directions (e.g., left to right, right to left, right to up, right to down, left to up, left to down, left to up then right and then down and then left, etc.) and all elevations (e.g., stream one above stream two, stream one below stream two, stream one to the left of stream two and moving up, etc.) are within this disclosure's scope.

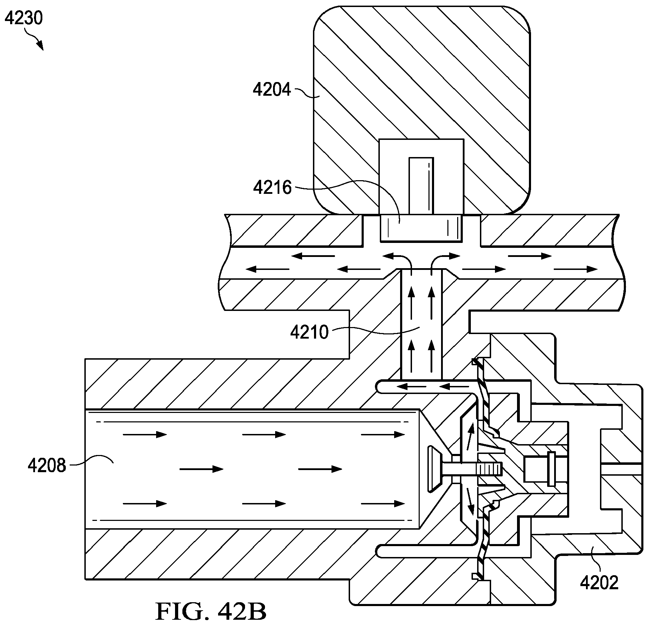

In FIG. 42B, another illustration of a valve and solenoid combination is shown, according to one example. A second valve and solenoid combination 4230 includes valve 4202 and solenoid 4204. The inlet fluid stream 4208 may provide a first pressure and originate from any source (e.g., utility, condition source, etc.). The inlet fluid stream 4208 may pass the throttle pin 4214 of the valve 4202. In addition, the throttle pin 4214 and/or the diaphragm assembly 4212 may be part of the valve 4202. Further, the valve 4202 may be a CF Valve as previously disclosed in this document. The outlet fluid stream 4210 from the valve 4202 may be at a second pressure and/or fluid flow. Further, the second pressure and/or fluid flow may be a predetermined pressure and/or fluid flow. In addition, the second pressure and/or fluid flow may be a predetermined pressure and/or fluid flow based on the valve 4202 configuration. Further, the second pressure and/or flow fluid may be less than the first pressure of the inlet fluid stream 4208. In another example, the second pressure and/or flow fluid may be greater than the first pressure of the inlet fluid stream 4208. In this example, the outlet fluid stream 4210 is not blocked (e.g., stopped) by the solenoid plunger 4216. In this example, the outlet fluid stream 4210 moves in two directions.

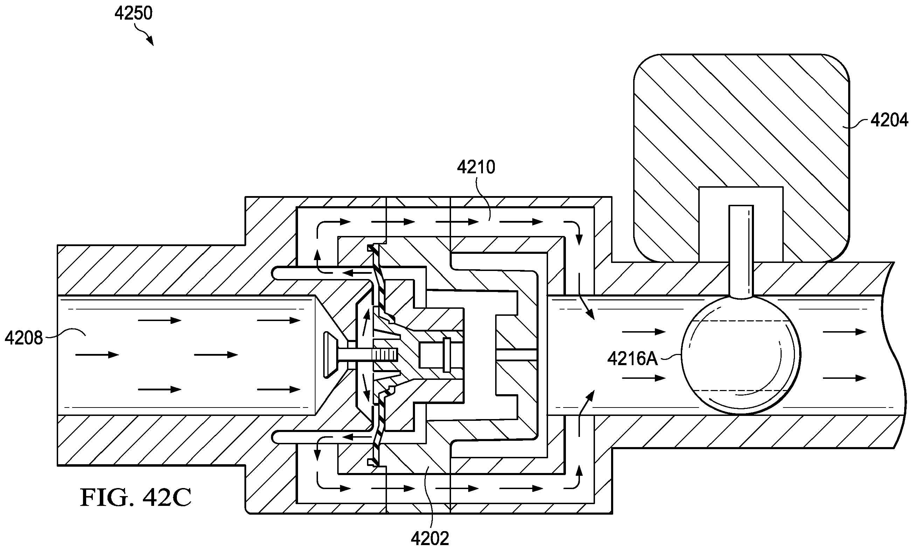

In FIG. 42C, another illustration of a valve and solenoid combination is shown, according to one example. A third valve and solenoid combination 4200 includes the valve 4202 and the solenoid 4204. The inlet fluid stream 4208 may provide a first pressure and originate from any source (e.g., utility, condition source, etc.). The inlet fluid stream 4208 may pass the throttle pin 4214 of the valve 4202. In addition, the throttle pin 4214 and/or the diaphragm assembly 4212 may be part of the valve 4202. Further, the valve 4202 may be a CF Valve as previously disclosed in this document. The outlet fluid stream 4210 from the valve 4202 may be at a second pressure and/or fluid flow. Further, the second pressure and/or fluid flow may be a predetermined pressure and/or fluid flow. In addition, the second pressure and/or fluid flow may be a predetermined pressure and/or fluid flow based on the valve 4202 configuration. Further, the second pressure and/or flow fluid may be less than the first pressure of the inlet fluid stream 4208. In another example, the second pressure and/or flow fluid may be greater than the first pressure of the inlet fluid stream 4208. In this example, the outlet fluid stream 4210 is not blocked (e.g., stopped) by a second solenoid plunger 4216A. In this example, the outlet fluid stream 4210 moves in one direction.

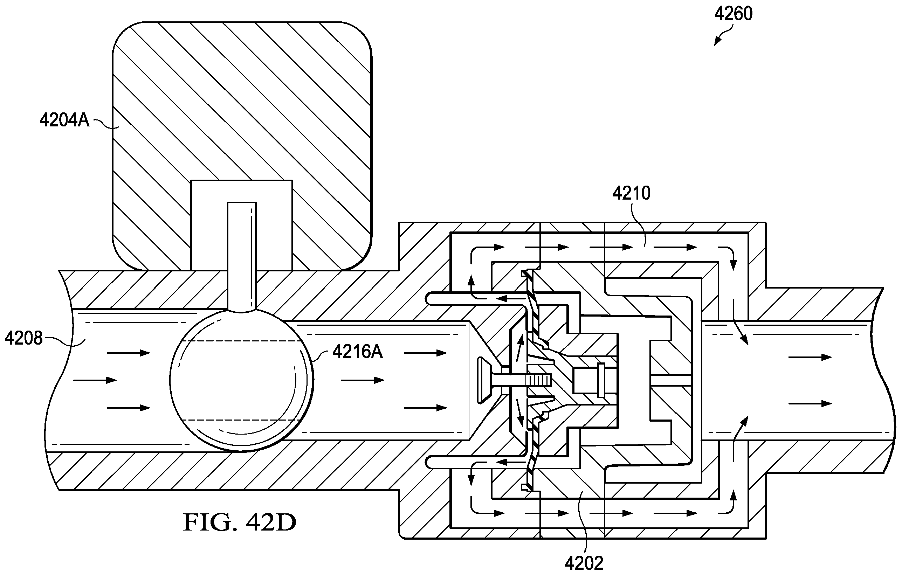

In FIG. 42D, another illustration of a valve and solenoid combination is shown, according to one example. A fourth valve and solenoid combination 4200 includes the valve 4202 and a second solenoid 4204A. The inlet fluid stream 4208 may provide a first pressure and originate from any source (e.g., utility, condition source, etc.). The inlet fluid stream 4208 may pass the second solenoid 4204A and the throttle pin 4214 of the valve 4202. In this example, the second solenoid 4204A is larger than the solenoid 4204 because the inlet fluid stream 4208 is at a first pressure which is higher than a second pressure of the outlet fluid stream 4210. This is because the second solenoid 4204A has been placed before the valve 4202. The valve 4202 would have reduced the pressure from a first pressure to a second pressure to decrease the size requirements of the solenoid (e.g., solenoid 4204). However, since the pressure was not reduced the solenoid must be bigger to handle the increased pressure (therefore the second solenoid 4204A is bigger than the solenoid 4204). In addition, the throttle pin 4214 and/or the diaphragm assembly 4212 may be part of the valve 4202. Further, the valve 4202 may be a CF Valve as previously disclosed in this document. The outlet fluid stream 4210 from the valve 4202 may be at a second pressure and/or fluid flow. Further, the second pressure and/or fluid flow may be a predetermined pressure and/or fluid flow. In addition, the second pressure and/or fluid flow may be a predetermined pressure and/or fluid flow based on the valve 4202 configuration. Further, the second pressure and/or flow fluid may be less than the first pressure of the inlet fluid stream 4208. In another example, the second pressure and/or flow fluid may be greater than the first pressure of the inlet fluid stream 4208. In this example, the outlet fluid stream 4210 moves in two directions.

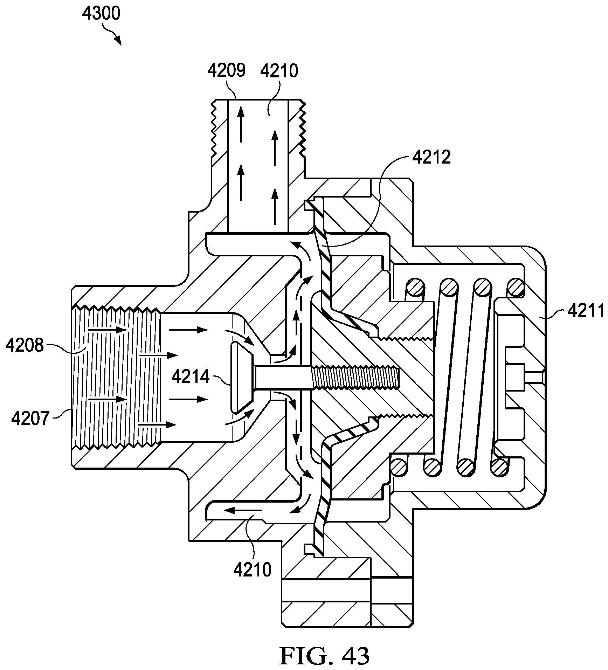

In FIG. 43, an illustration of a valve is shown, according to one example. A valve 4300 may include the diaphragm assembly 4212, the throttle pin 4214, an inlet area 4207, an outlet area 4209, and a spring cup 4211. The inlet fluid stream 4208 may pass the throttle pin 4214 of the valve 4202. In addition, the throttle pin 4214 and/or the diaphragm assembly 4212 may be part of the valve 4202. Further, the valve 4202 may be a CF Valve as previously disclosed in this document. The outlet fluid stream 4210 from the valve 4202 may be at a second pressure and/or fluid flow. Further, the second pressure and/or fluid flow may be a predetermined pressure and/or fluid flow. In addition, the second pressure and/or fluid flow may be a predetermined pressure and/or fluid flow based on the valve 4202 configuration. Further, the second pressure and/or flow fluid may be less than the first pressure of the inlet fluid stream 4208.

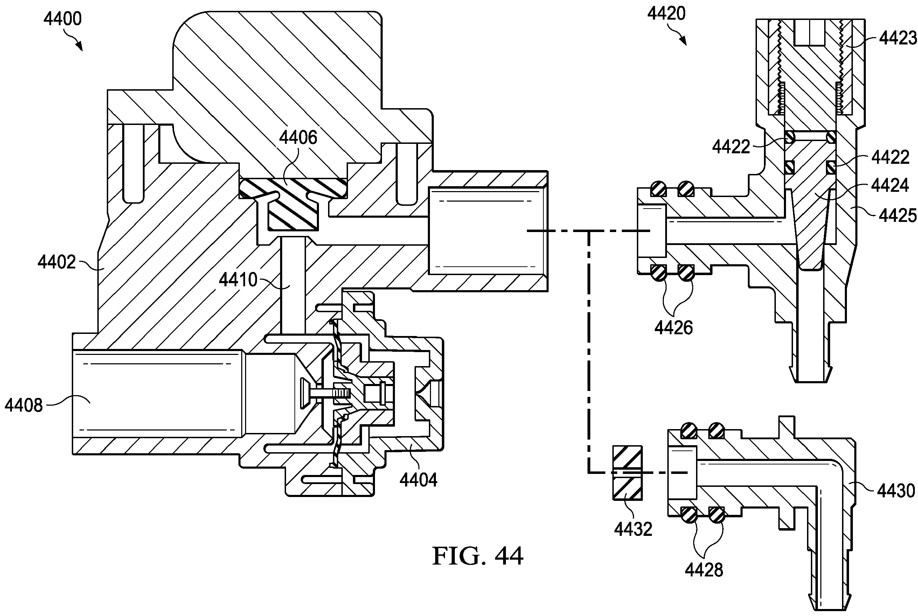

In FIG. 44, an illustration of a valve and solenoid combination is shown, according to one example. A fifth valve and solenoid combination 4400 includes a body 4402 (e.g., CFiV body), a fluid passageway 4408, a valve 4404, an outlet stream area 4410, and a solenoid 4406. In this example, the fifth valve and solenoid combination 4400 is compact, allows for a smaller solenoid, is cheaper, and more efficient. Further, a needle valve 4420 includes a needle valve insert 4423, one or more needle valve pin seals 4422 (e.g., O-Rings), a needle valve pin 4424, a needle valve body 4425, and/or one or more needle valve body seals 4426 (e.g., O-Rings). In addition, an elbow 4430 may include one or more elbow seals 4428 (e.g., O-Rings) and be connected to an orifice 4432 (e.g., CFiV Orifice).

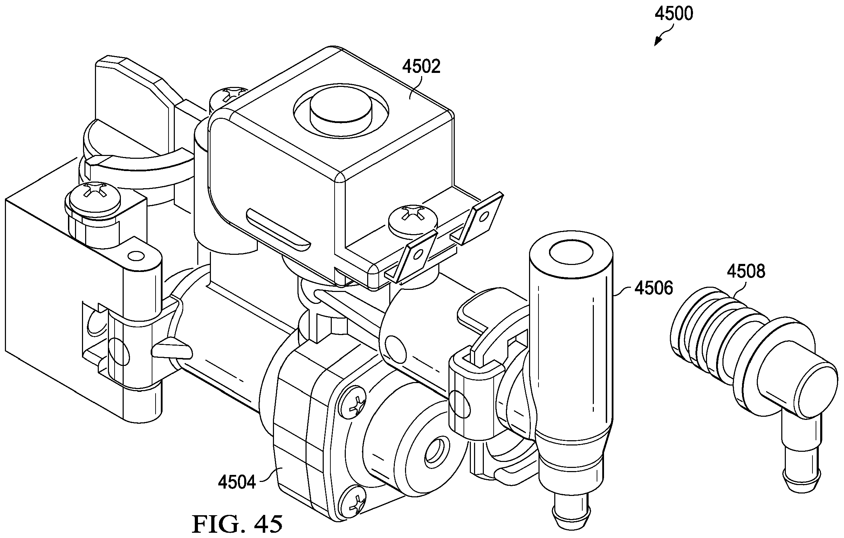

In FIG. 45, an illustration of a valve and solenoid combination is shown, according to one example. A sixth valve and solenoid combination 4500 may include a solenoid 4502, a valve 4504 (e.g., CF Valve), a, needle valve pin 4506, and/or an elbow 4508.

In one example, a dispensing device includes a valve configured to interact with an inlet stream where the inlet stream has a first pressure. The valve has an outlet area with an outlet stream where the outlet stream has a second pressure. The dispensing device including a solenoid configured to interact with the outlet stream.

In another example, the inlet stream and/or the outlet stream is a carbonated water. In another example, the first pressure is greater than the second pressure. In another example, a size of the solenoid is reduced based on a reduction in pressure from the first pressure to the second pressure. In another example, a size of the solenoid is reduced based on the valve. In another example, the inlet stream is a utility line. In another example, the dispensing device includes an orifice. In another example, the orifice is fixed. In another example, the orifice is adjustable. In another example, the valve is a CFValve.

In another example, the CFValve is a regulating valve for maintaining a substantially constant flow of fluid from a variable pressure fluid supply to a fluid outlet, the CFValve including: a) a housing having axially aligned inlet and outlet ports adapted to be connected respectively to the variable fluid supply and the fluid outlet; b) a diaphragm chamber interposed between the inlet and the outlet ports, the inlet port being separated from the diaphragm chamber by a barrier wall, the barrier wall having a first passageway extending therethrough from an inner side facing the diaphragm chamber to an outer side facing the inlet port; c) a cup contained within the diaphragm chamber, the cup having a cylindrical side wall extending from a bottom wall facing the outlet port to a circular rim surrounding an open mouth facing the inner side of the barrier wall, the cylindrical side and bottom walls of the cup being spaced inwardly from adjacent interior surfaces of the housing to define a second passageway connecting the diaphragm chamber to the outlet port; d) a resilient disc-shaped diaphragm closing the open mouth of the cup, the diaphragm being axially supported (in on example, the supporting is exclusively done --- in other examples, the supporting is not done exclusively) by the circular rim and having a peripheral flange overlapping the cylindrical side wall; e) a piston assembly secured to the center of the diaphragm, the piston assembly having a cap on one side of the diaphragm facing the inner side of the barrier wall, and a base suspended from the opposite side of the diaphragm and projecting into the interior of the cup; f) a stem projecting from the cap through the first passageway in the barrier wall to terminate in a valve head, the valve head and the outer side of the barrier wall being configured to define a control orifice connecting the inlet port to the diaphragm chamber via the first passageway; and g) a spring device in the cup coacting with the base of the piston assembly for resiliently urging the diaphragm into a closed position against the inner side of the barrier wall to thereby prevent fluid flow from the inlet port via the first passageway into the diaphragm chamber, the spring device being responsive to fluid pressure above a predetermined level applied to the diaphragm via the inlet port and the first passageway by (in on example, the accommodating is resiliently done --- in other examples, the accommodating is not done resiliently) accommodating movement of the diaphragm away from the inner side of the barrier wall, with the valve head on the stem being (in on example, the movement is correspondingly done --- in other examples, the movement is not done correspondingly) moved to adjust the size of the control orifice, thereby maintaining a (in on example, the constant flow is substantially done --- in other examples, the constant flow is not done substantially) constant flow of fluid from the inlet port through the first and second passageways to the outlet port for delivery to the fluid outlet.

In another example, the dispensing device includes: a dispensing unit including one or more flavor units and one or more water units where each of the one or more flavor units include a transportation unit, the transportation unit including a barrier element with one or more openings; a blockage device configured to close the one or more openings to prevent a flow from at least one of the one or more flavor units; and/or a movement device configured to move the blockage device to a first position relative to the one or more openings which allows for a passage of one or more fluid elements and one gaseous elements through the one or more openings in the blockage device.

In another example, the dispensing device includes a carbonated unit. In another example, the movement device is a magnet. In another example, the movement device is an electro-magnet. In another example, at least one of the one or more flavor units is configured to be selectable. In another example, at least one of the one or more flavor units is configured to be automatically selectable.

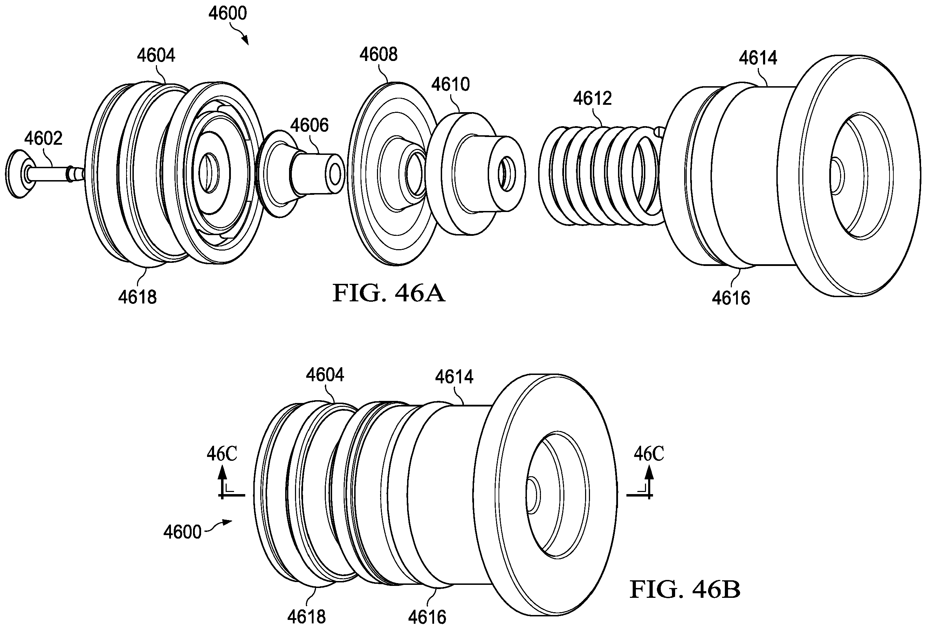

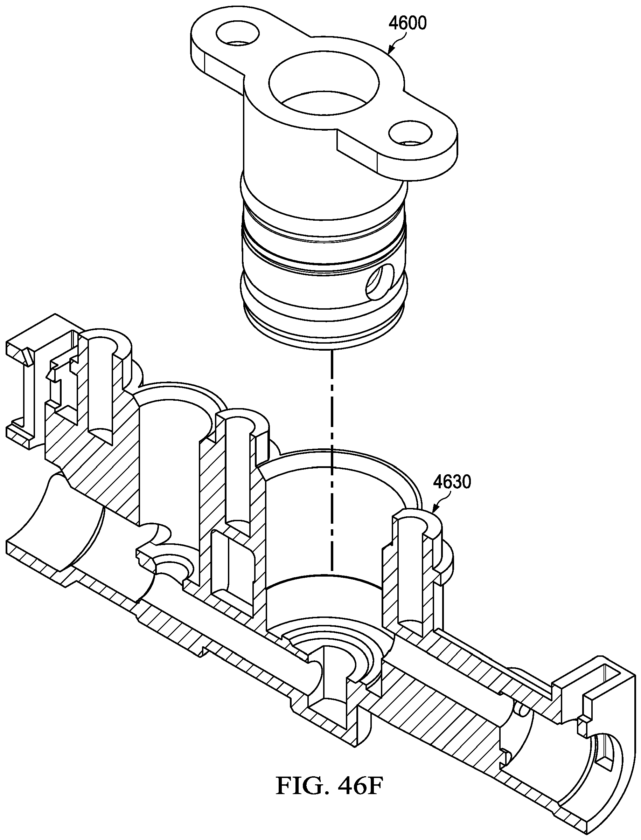

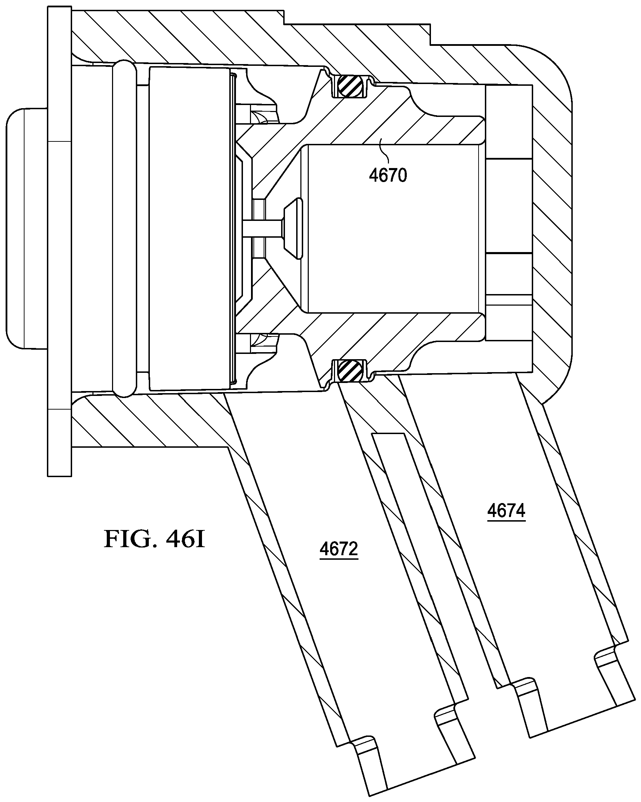

In FIG. 46A, an illustration of a CF Cartridge 4600 is shown, according to one embodiment. The cartridge CF Valve 4600 includes a throttle pin 4602, a body 4604, a body O-Ring 4618, a top retainer 4606, a diaphragm 4608, a bottom retainer 4610, a spring 4612, a spring cap 4614, and a spring cap O-Ring 4616. The throttle pin 4602 may be stainless steel or other material with a barbed shank and mushroom shape head. The throttle pin throttles flow of fluid through the inlet orifice. The body 4604 (or the CF Valve body and/or the cartridge CF Valve body) may be molded plastic forming the inlet passage. The diaphragm 4608 (and/or the diaphragm chamber) is a 360 degree outlet passage and diaphragm sealing surface. The body O-Ring 4618 is a rubber that seals the fluid functioning part of the cartridge from the housing. The top retainer 4606 is a plastic which forms the top half of the diaphragm assembly where the diaphragm 4608 is sandwiched between the two retainers (e.g., top retainer 4606 and the bottom retainer 4610) to form a seal. There is a molded cavity in the upper retainer (e.g., top retainer 4606) that positions the barbed shank of the throttle pin 4602. The cavity may be machined and/or any other process of manufacturing a cavity.

The diaphragm 4608 is a flexible rubber (and/or any other flexible material) shaped to form a seal between the fluid section and the dry section of the spring cavity. The flex of the diaphragm 4608 allows the throttle pin 4602 to move in response to the spring pressure and inlet pressure thus modulating the fluid flow through the inlet orifice. The bottom retainer 4610 is a plastic part which may be welded (and/or press fitted, and/or any other attachment procedure (e.g., glued, stamped, etc.) to the upper retainer (e.g., top retainer 4606) to form the diaphragm assembly. The bottom retainer 4610 also positions the spring 4612 in the spring cap 4614. The spring 4612 is stainless steel (and/or other similar material - non corrosive material - the material can be a corrosive material also since the area is dry) and serves to keep the diaphragm 4608 seated against the sealing ring of the body 4604 until there is sufficient input pressure to compress the spring opening the valve for normal operation. As the throttle pin 4602 is fastened (could sit on top of - further the spring may not be fastened buy sits against cap and retainer) to the diaphragm assembly, when the inlet pressure depresses the diaphragm 4608/spring 4612 the throttle pin 4602 closes the inlet orifice reducing the flow/pressure. There is continuous movement of the spring 4612, the diaphragm assembly and the throttle pin 4602 as the valve modulates and maintains the preset fixed operating pressure.

The spring cap 4614 is usually plastic but can be any material stiff enough to mitigate any movement of the material that would change the length of the spring cap cavity. The length of the cavity is critical because the spring 4612 must be preset and/or compressed to the operating load before the cartridge CF Valve 4600 is put into operating. It should be noted that the spring cap 4614 creates the seal by compressing the diaphragm 4608 to the body 4604. The rubber cap "O" ring is to form a seal so the passage of the fluid from the body 4604 through the housing cannot leak out around the spring cap 4614.

In FIG. 46B, another illustration of the cartridge CF Valve 4600 is shown, according to one embodiment. In this example, the cartridge CF Valve 4600 is shown assembled.

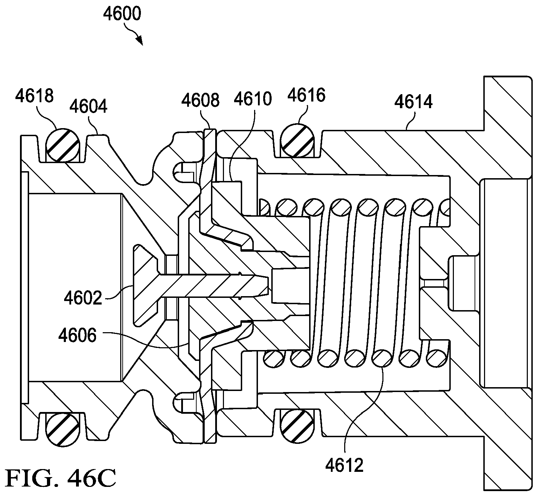

In FIG. 46C, another illustration of the cartridge CF Valve 4600 is shown, according to one embodiment. In this example, the cartridge CF Valve 4600 is shown in a cross sectional view. It should be noted that the cartridge CF Valve 4600 shown in FIGS. 46A-46D are 90 degree versions of the CF Valve configuration which can also be seen in FIGS. 20-24. It should be noted that any characteristics and/or features shown and/or described in relating to FIGS. 20-24 can be utilized with the cartridge CF Valve 4600. Whereas, FIG. 63 shows a straight through version CF Valve where any feature and/or function shown and/or described with FIG. 63 can be utilized with the cartridge CF Valve 4600. It should be noted that any characteristics and/or features described in relating to FIG. 63 can be utilized with the cartridge CF Valve 4620. In this example, an outlet port 4624 is at a 90 degree angle to the inlet port.

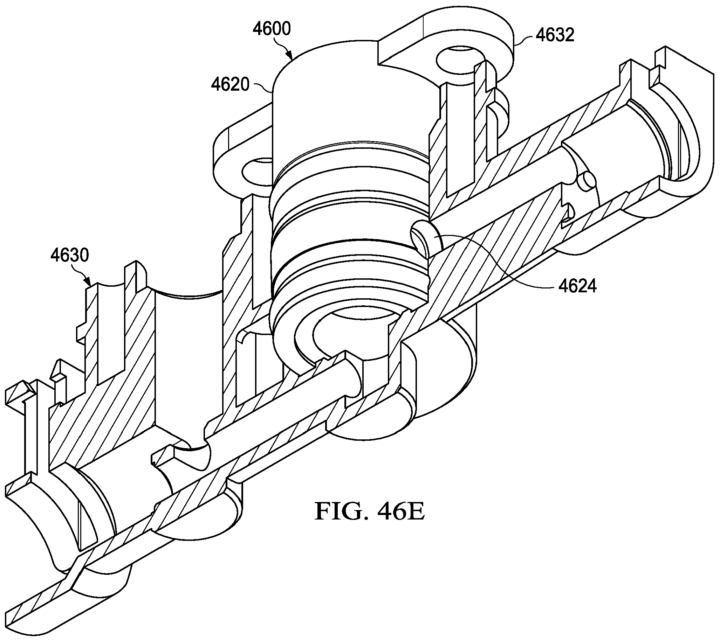

In FIGS. 46E-46F, an illustration of the cartridge CF Valve 4620 being placed into a chamber of a device 4630, according to one example. In this example, the cartridge CF Valve 4620 is placed in a modular unit and locked into placed by a locking device 4632.

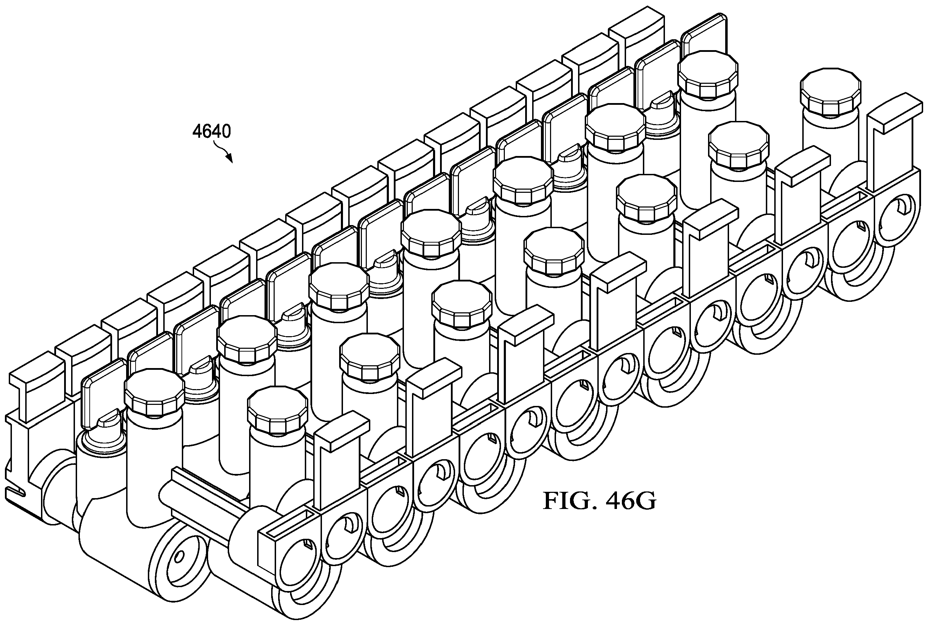

FIG. 46G shows a manifold 4640 of a device, according to one example. In this example, one or more cartridge CF Valve 4600 and/or one or more cartridge CF Valve 4620 may be utilized with and/or placed inside the manifold 4640.

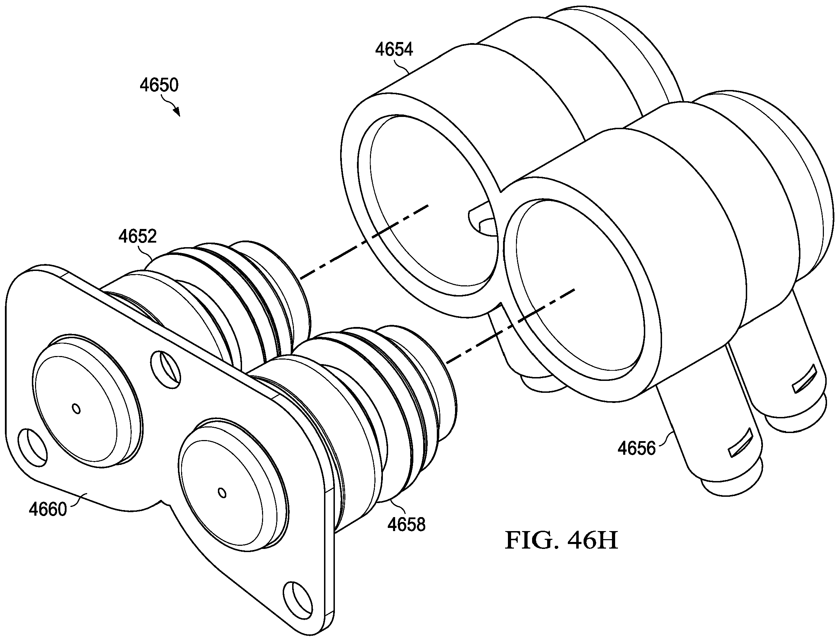

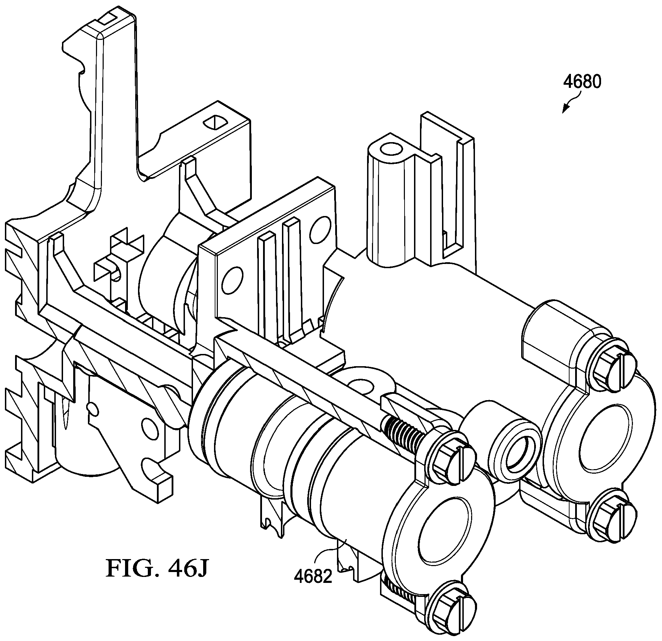

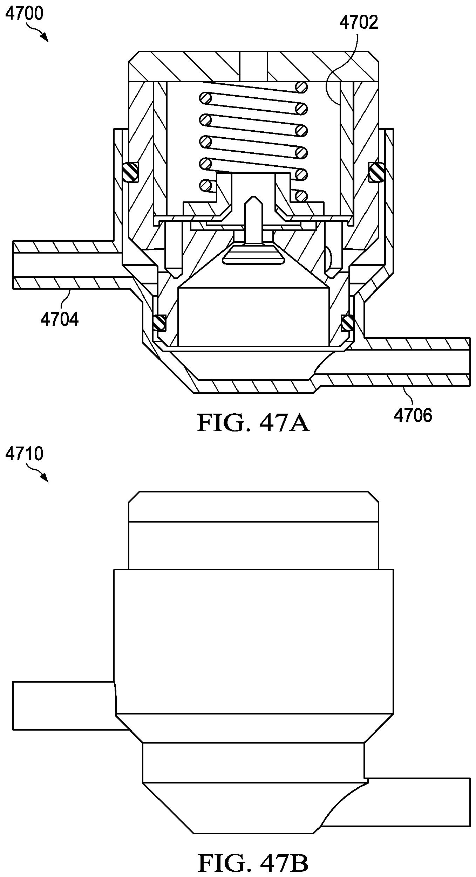

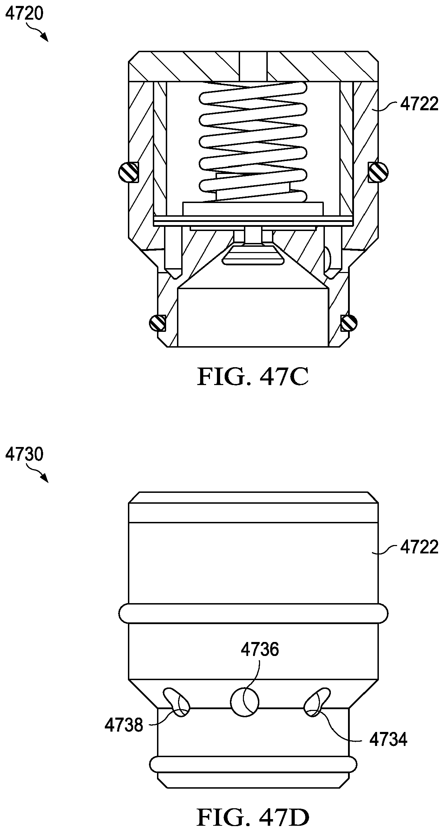

FIG. 46H shows an illustration 4650 of a first cartridge CF Valve 4652 and an Nth cartridge CF Valve 4658 combined via combining device 4660 and inserted into an existing device 4654 with an existing outlet 4656. In another example shown in FIG. 461, a cartridge CF Valve 4670 is placed in a housing that has an inlet port 4674 and an outlet port 4672 which are adjacent and parallel with each other. In another example shown in FIG. 46J, a cartridge CF Valve 4682 is utilized in a retrofit configuration. Further as shown in FIGS. 47A-47B, the cartridge CF Valve 4702 may have an inlet port 4706 and an outlet port 4704 which are parallel with each other but offset from each other. FIG. 47B shows another illustration 4710 of the cartridge VF Valve 4702.

In FIGS. 47C-47D, the cartridge CF Valve 4722 is shown with one or more ports (e.g., a first port 4734, a second port 4736, and an Nth port 4738). These ports (e.g., a first port 4734, a second port 4736, and an Nth port 4738) can be utilized as inlet port and/or outlet ports which allows for easier retrofitting application. The retrofitting is easier because the flow of a liquid and/or gaseous mixture from an existing component with ports in any location (e.g. at a 90 degree angle, at a 180 degree angle, etc.) can be exchanged with the cartridge CF Valve 4722 because the one or more ports (e.g., a first port 4734, a second port 4736, and an Nth port 4738) can accommodate any existing condition (e.g., ports at a 90 degree angle, etc.).

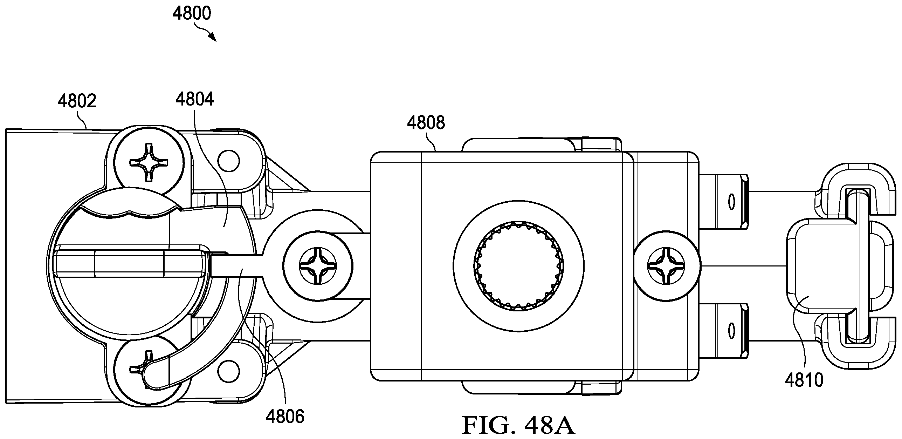

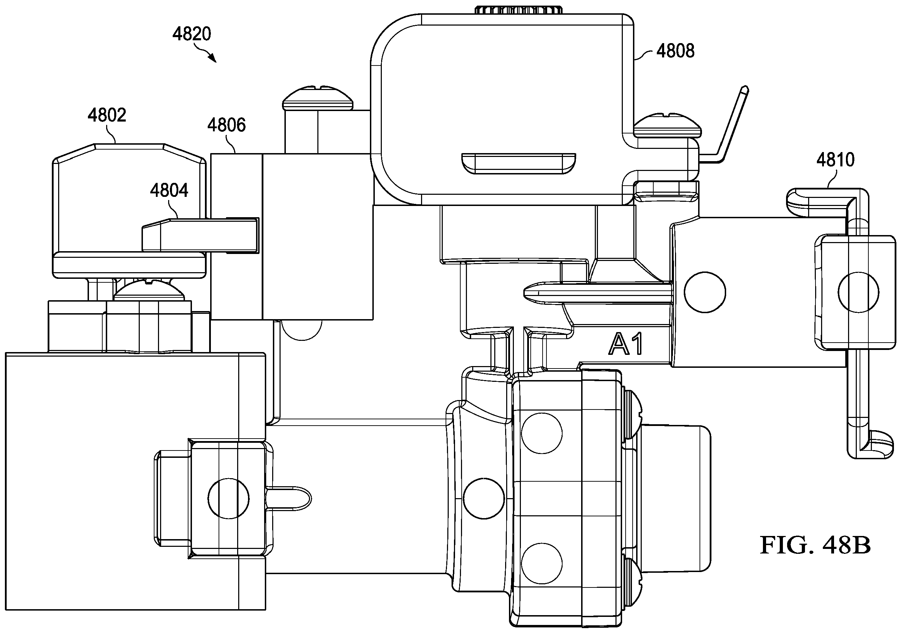

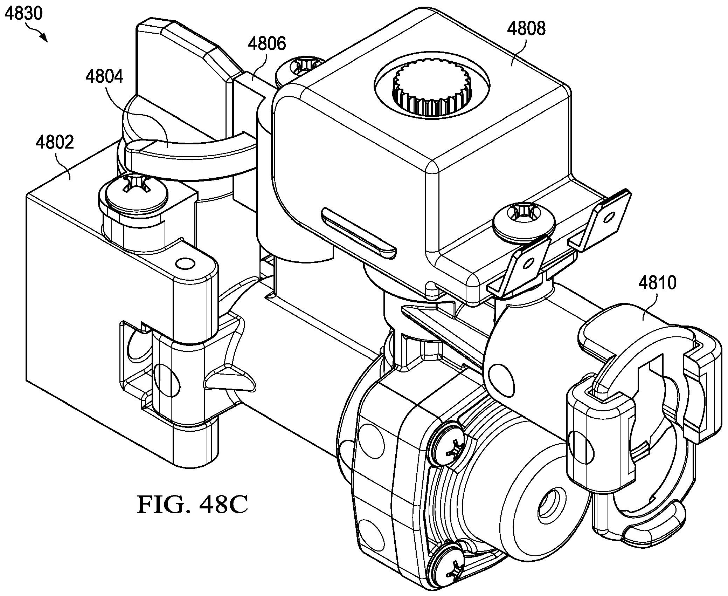

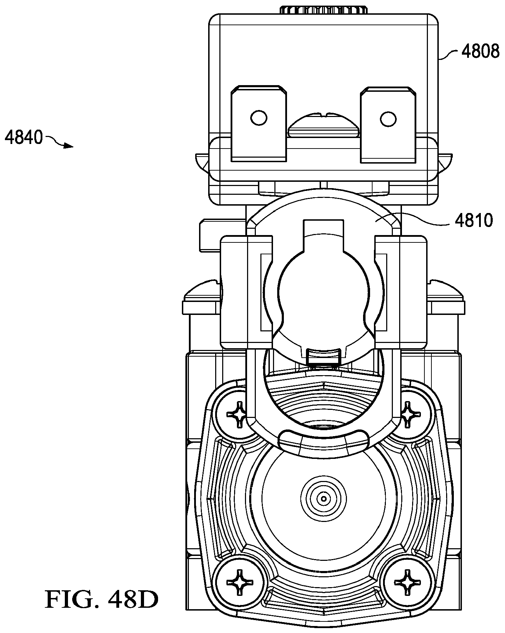

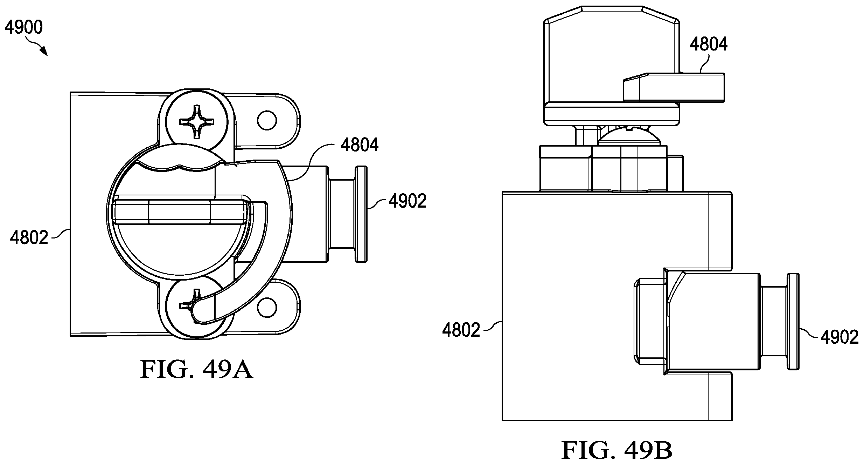

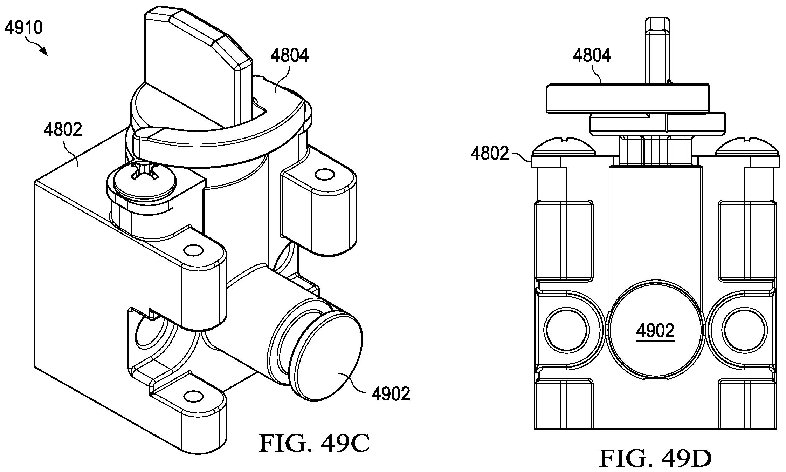

In FIGS. 48A-48D, an illustration of a backing block is shown, according to one example. A system 4800 may include a backing block 4802 and a valve 4808. In this example, the backing block 4802 has a locking device 4804 which is coupled to the valve 4808 via a catching device 4806. Further, the system 4800 may include a valve locking device 4810 to attach one or more other devices (e.g., a needle 5008, etc.). In this example, the locking device 4804 and the catching device 4806 utilize significantly less space than traditional locking mechanisms and are easier to operate. Further, the locking device 4804 may only be unlocked when the system is not in operation which reduces accidental spillages. FIG. 48B shows another illustration 4820 of the backing block. FIG. 48C shows another illustration 4830 of the backing block. FIG. 48D shows another illustration 4840 of the backing block. FIGS. 49A-49D shows the backing block 4802 with a fluid transportation connection point 4902.

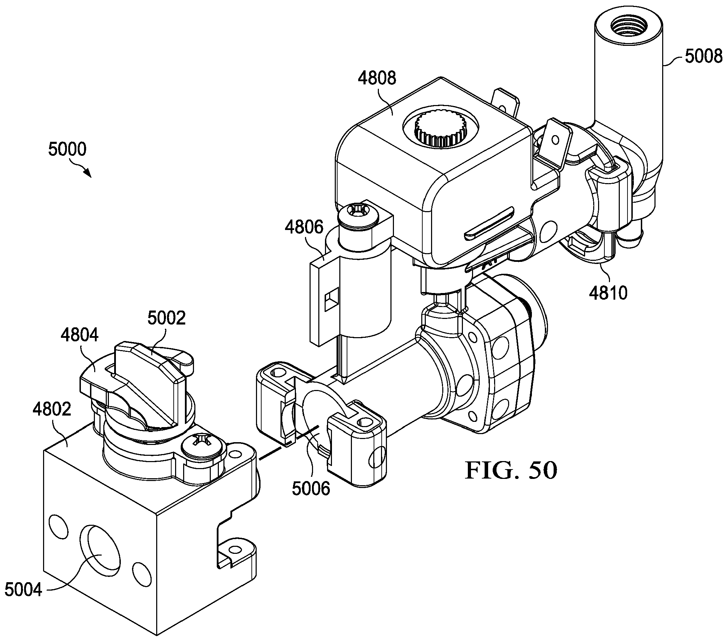

In FIG. 50, an illustration of a backing block is shown, according to one example. A system 5000 may include the backing block 4802 and the valve 4808. In this example, the backing block 4802 has the locking device 4804 which is can be coupled to the valve 4808 via the catching device 4806. Further, the system 5000 may include the valve locking device 4810 to attach the needle 5008 (and/or any other devices). In addition, the backing block 4802 may attach fluid transportation connection point 4902 to the valve 4808 via a valve attachment point 5006. In addition, an attachment point 5004 to another device, the fluid transportation connection point 4902 which connects to valve 4808, and a movement device 5002 may be utilized on the backing block 4802.

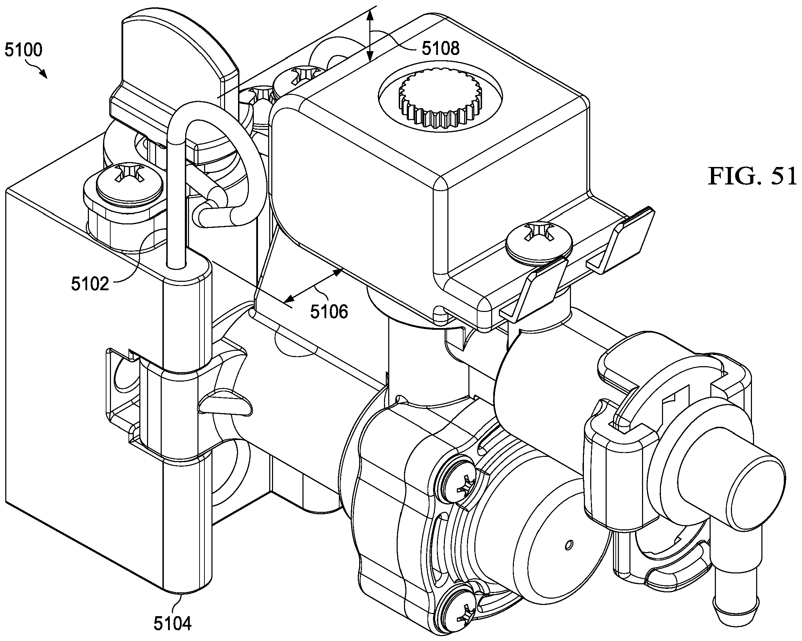

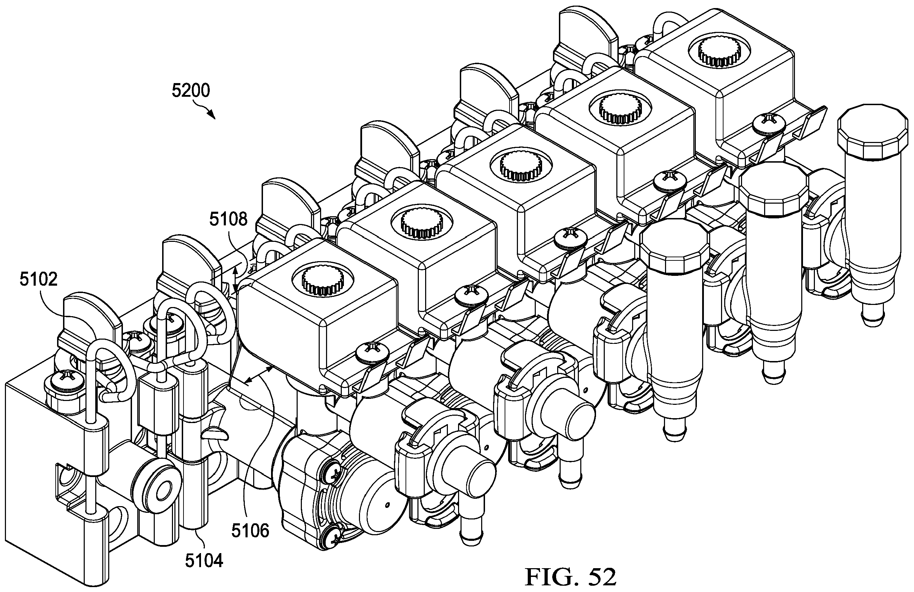

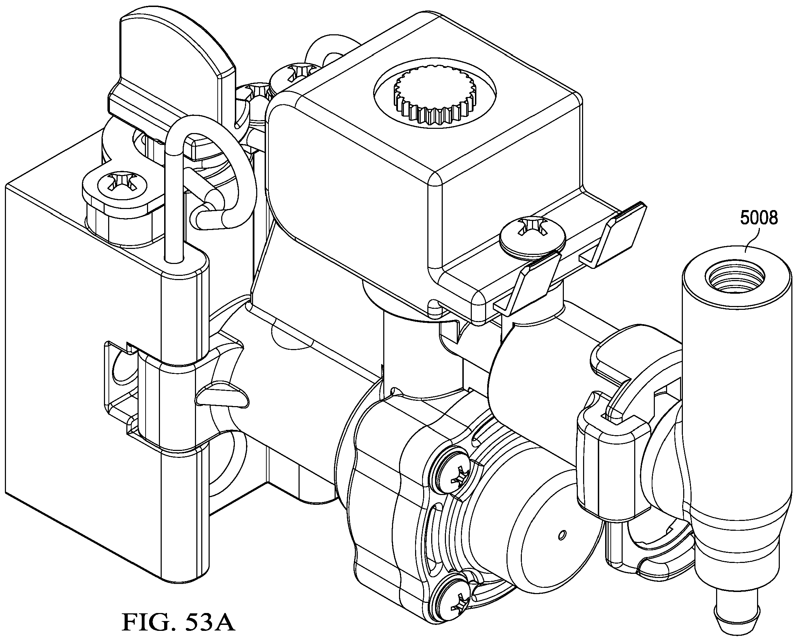

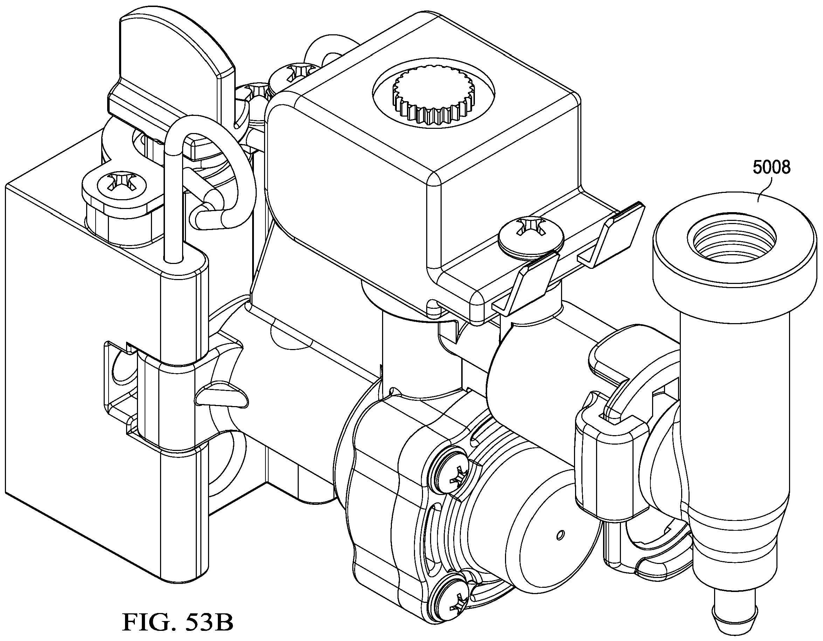

FIG. 51 shows a traditional backing block. A traditional system 5100 has a locking pin 5102 place into a locking slot 5104. In this example, the traditional system 5100 requires additional space because the locking pin 5102 is taller than the valve and is placed parallel to the valve which requires additional height requirements and additional width requirements. The additional height requirement is seen with reference number 5108 and the additional width requirement is seen with reference number 5106. Further as shown in FIG. 52, there are two locking pins utilized which further increase the width requirements (reference number 5106) and increase the height requirements (reference number 5108). FIGS. 53A-53B illustrates the utilization of a needle pin 5008.

In FIGS. 46A-46J, a Cartridge CF Valve is shown which can be placed inside an assembly. The Cartridge CF Valve can fit into existing equipment assemblies for ease of retrofit. The Cartridge CF Valve can have adjustable flow rates and/or factory fixed flow rates to create accurate and consistent flow and/or ratio control. The Cartridge CF Valve (body (includes pin and diaphragm assembly), spring, and cap) drops into existing manifolds (See FIGS. 46H and 461) and secures with the preexisting or newly designed fittings. The Cartridge CF Valve is retrofit compatible with existing manifolds. Further, the Cartridge CF Valve replaces all ceramic flow controls, pressure regulators, restrictor plate style flow controls or other methods of ratio and flow control. In addition, the CFV Cartridge is designed so that the other existing parts can be reused with the Cartridge CF Valve. In addition to being retrofit compatible with existing assemblies and equipment, the Cartridge CF Valve can be integrated into new plumbing assemblies to provide for any inlet and outlet flow configuration required for a particular application. Further, some design considerations are location/placement of orifice within the assembly either for ease of adjustment/replacement or in a manner that is not or not easily replaceable/adjustable for a tamper proof flow rate and/or ratio. The Cartridge CF Valve may be designed to not require indexing for ease of installation and replacement. In other applications, the Cartridge CF Valve may be utilized without an orifice downstream, simply relying on the system backpressure to maintain a constant pressure for certain applications. Additionally, the Cartridge CF Valve allows for solenoid/electromagnetic, manual or other actuation up or downstream of the Cartridge CF Valve.

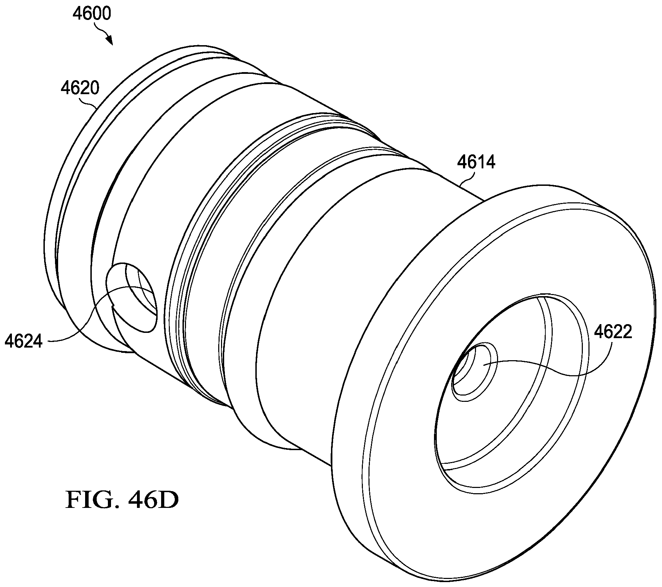

In another example shown in FIGS. 46A, 46B, and 46D, a new flow control manifold with the Cartridge CF Valve can be assembled as a single welded part each with a fixed or replaceable orifice and/or a Brix screw. This welded Cartridge CFV Valve can be integrated into an existing design or provide an entirely new flow control manifold to be secured inside existing equipment or on or under the counter for certain applications. In this example, the Cartridge CF Valve is retrofit compatible with existing flow connector (same inlets and outlets). It is simple to remove the existing flow control manifold and replace with a new flow control manifold. In this example, the existing clips/fasteners and shut off components may be reused. Design considerations are fixed or adjustable orifices and the Cartridge CF Valve can be mechanically fastened or welded. In addition, a single SKU for the entire manifold can be used and/or for each valve assembly.

The Cartridge CF Valve is designed to provide a constant rate of fluid flow at a preset pressure when coupled with a down-stream orifice. The CF Valve can be a 90 degree valve (see FIGS. 20-24), a straight through valve (see FIG. 63, any combination thereof, and/or any other degree configuration. The Cartridge CF Valve may have a factory set operating pressure from 7.5 psi to 70 psi. In addition, a wide range of flow rates can be used (e.g., 0.01 gpm (gallons per minute) to 8 gpm and/or any other number). There are no wetted mechanicals in the CF Valve, according to one example. There are no ceramics in the CF Valve, according to one example. The CF Valve is self- cleaning, according to one example. In one example, the inlet orifice is smaller than any internal passage. Therefore, no internal clogging occurs. There is minimal wear because the internal components only see operating pressure. In addition, there is no wear at static because there is no movement.

The CFiVe new backing block has a male part which attaches to the female part (See FIGS. 48A-50). In this example, the CFiVe backing block will turn on or turn off the liquid supply with the same knob movement that attaches the backing block to the male fitting. This means that the fluid cannot flow until the Valve is also attached, according to one example. In this example, the new attachment device (male part and female part) dramatically reduces the space requirements (e.g., 1, 2, 3, 4, 5, 6, 7, 8, 9, and 10 inches) as it is smaller and does not require wire inserts for placement/removal of Valves, allowing the CFiVe backing blocks to be placed closer to one another. This allows for backing blocks to be placed closer together for applications where multiple valves are utilized and space is constrained or for applications where the location of the valve is close to the cooling or heating element or point of dispense is critical. (see CFiVe on backing block (new - FIG. 50) versus CFiVe on existing wave plate figure See FIG. 52).

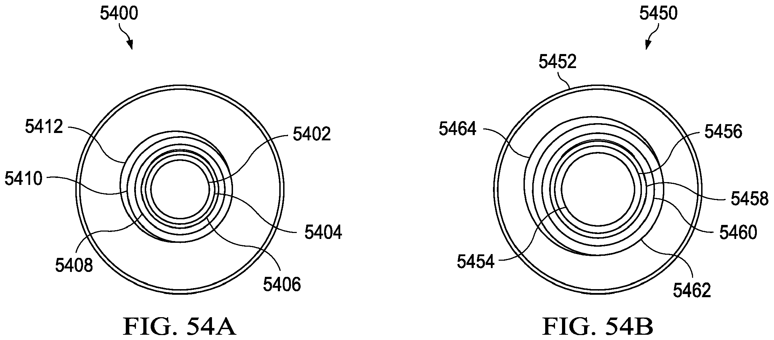

In Fig. 54A, an orifice 5400 has a first size 5402 based on a first temperature (e.g., 40 degrees). Further, in FIG. 54A, the orifice 5400 now has a second size 5404 based on a second temperature (e.g., 60 degrees). In another example, the orifice 5400 may have a third size 5406. In another example, the orifice 5400 may have a fourth size 5408. In another example, the orifice 5400 may have a fifth size 5410. In another example, the orifice 5400 may have an nth size 5412. It should be noted that the change in size of the orifice 5400 may not be a uniform change (see reference number 5412). Therefore, the orifice size has changed (e.g., uniformly and/or non-uniformly) based on a temperature change. In various examples, the change in the orifice can be 1 percent, 2 percent, 3 percent, 4 percent, 5 percent, 6 percent, 7 percent, 8 percent, 9 percent, 10 percent, 11 percent, 12 percent, 13 percent, 13.5 percent, 14 percent, 15 percent, 16 percent, 17 percent, 18 percent, 19 percent, 20 percent, 21 percent, 21.1 percent, 22 percent, 23 percent, 24 percent, 25 percent, 26 percent, 27 percent, 28 percent, 29 percent, 30 percent, 31 percent, 32 percent, 33 percent, 33.2 percent, 34 percent, 35 percent, 36 percent, 37 percent, 38 percent, 39 percent, 40 percent, 41 percent, 41.01 percent, 42 percent, 43 percent, 44 percent, 45 percent, 46 percent, 47 percent, 48 percent, 49 percent, 50 percent, 51 percent, 52 percent, 53 percent, 53.7 percent, 54 percent, 55 percent, 56 percent, 57 percent, 58 percent, 59 percent, 60 percent, 61 percent, 61.4 percent, 62 percent, 63 percent, 64 percent, 65 percent, 66 percent, 67 percent, 68 percent, 69 percent, 70 percent, 71 percent, 72 percent, 73 percent, 73.6 percent, 74 percent, 75 percent, 76 percent, 77 percent, 78 percent, 79 percent, 80 percent, 81 percent, 81.0002 percent, 82 percent, 83 percent, 84 percent, 85 percent, 86 percent, 87 percent, 88 percent, 89 percent, 90 percent, 91 percent, 92 percent, 93 percent, 93.9 percent, 94 percent, 95 percent, 96 percent, 97 percent, 98 percent, 99 percent, 100 percent, 1011 percent, 101.8 percent, 102 percent, 103 percent, 104 percent, 105 percent, 106 percent, 107 percent, 108 percent, 109 percent, 110 percent, 111 percent, 112 percent, 113 percent, 113.5 percent, 114 percent, 115 percent, 116 percent, 117 percent, 118 percent, 119 percent, 120 percent, 121 percent, ..., 150 percent, ... 200 percent, ..., 500 percent, and/or any percent increase. Please note for brevity all the percentages where not listed but should be considered as part of this disclosure. The temperature sensitive orifice is critical in applications where change in temperature (up or down) causes significant increase or decrease in the viscosity and/or surface tension of the fluid. The temperature sensitive orifice can be created using the material characteristics of the plastic, metal or other material used to make the orifice or can use an electronic method of changing the orifice size. In the example of the material characteristics, the plastic, metal or other material selected will shrink or expand with a change in temperature. The orifice will be designed to change in size at a relative percentage to the change in viscosity/surface tension of the underlying fluid. For example, a plastic that shrinks with temperature reduction can be utilized in a design where the shrinkage in the plastic will pull the part to the outside increasing the diameter (ID) of the internal orifice, this expanded orifice will be inversely proportionate to the increase in viscosity of the cooler fluid and will allow the fluid to flow at the same rate. In the example of the electronic orifice shown in FIG. 54B, the system would be designed with a temperature sensor that would connect to a program that would automatically select the orifice size. In this example, the orifice may act similar to a camera lens. In one example, the orifice size may have a pulsing feature and/or a camera lens feature. In addition, a differing length of tubing approach could be utilized. Further, a dial in approach could be utilized. In addition, a stepper motor approach could also be utilized. Any of these examples may be combined in any manner. Further, an orifice 5450 as shown in FIG. 54B may have a first size 5452 based on a first setting in the electrical camera lens functioning device, a first setting in the pulsing functioning device, a first setting in the dial functioning device, a first setting in the stepper motor functioning device, and/or the first setting in the differing length of tubing functioning device. This first setting (and all setting see below) may be based on temperature, fluid flow, pressure, drink mixture, time of day, any other liquid and gas dispensing machine characteristic, and/or any combination thereof. Further, the orifice 5450 may have a second size 5454 based on a second setting in the electrical camera lens functioning device, a second setting in the pulsing functioning device, a second setting in the dial functioning device, a second setting in the stepper motor functioning device, and/or the second setting in the differing length of tubing functioning device. In another example, the orifice 5454 may have a third size 5456 based on a third setting in the electrical camera lens functioning device, a third setting in the pulsing functioning device, a third setting in the dial functioning device, a third setting in the stepper motor functioning device, and/or the third setting in the differing length of tubing functioning device. In another example, the orifice 5454 may have a fourth size 5458 based on a fourth setting in the electrical camera lens functioning device, a fourth setting in the pulsing functioning device, a fourth setting in the dial functioning device, a fourth setting in the stepper motor functioning device, and/or the fourth setting in the differing length of tubing functioning device. In another example, the orifice 5454 may have a fifth size 5460 based on a fifth setting in the electrical camera lens functioning device, a fifth setting in the pulsing functioning device, a fifth setting in the dial functioning device, a fifth setting in the stepper motor functioning device, and/or the fifth setting in the differing length of tubing functioning device. In another example, the orifice 5454 may have a sixth size 5462 based on a sixth setting in the electrical camera lens functioning device, a sixth setting in the pulsing functioning device, a sixth setting in the dial functioning device, a sixth setting in the stepper motor functioning device, and/or the sixth setting in the differing length of tubing functioning device. In another example, the orifice 5454 may have an nth size 5464 based on an Nth setting in the electrical camera lens functioning device, an Nth setting in the pulsing functioning device, an Nth setting in the dial functioning device, an Nth setting in the stepper motor functioning device, and/or an Nth setting in the differing length of tubing functioning device. It should be noted that the change in size of the orifice 5454 may not be a uniform change (see reference number 5464). Therefore, the orifice size has changed (e.g., uniformly and/or non-uniformly) based on a temperature change.

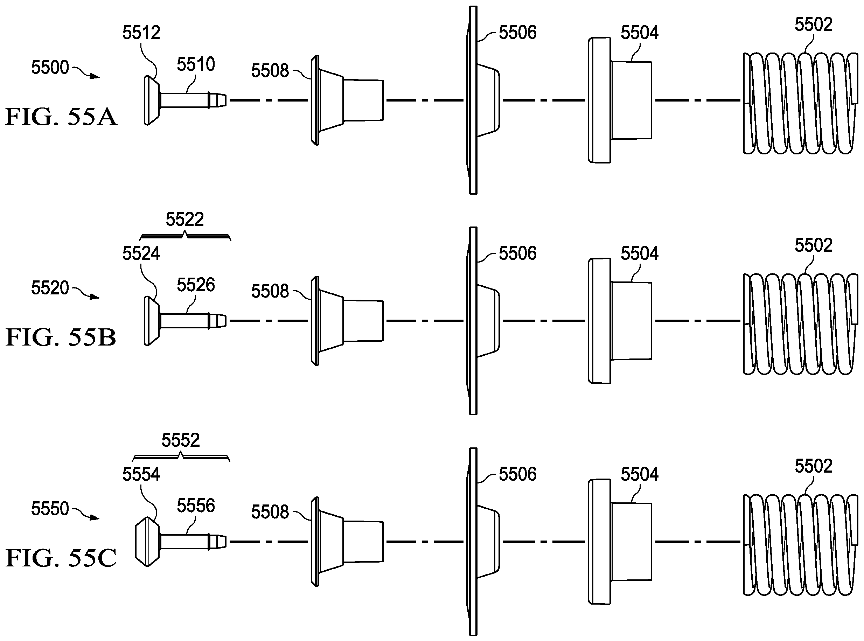

In FIG. 55A, a CF Valve with a pin 5510, a pinhead 5512, a top retainer 5508, a diaphragm 5506, a bottom retainer 5504, and a spring 5502 are shown. In this example, the pin 5510 and the pinhead 5512 are rigid material which can make production of the CF Valve more complicated and the component costs more expensive as the diaphragm assembly and the insertion of the pin through the body becomes multiple steps in the assembly process. In FIG. 55B, the pin 5526 and the pinhead 5524 could be all one piece 5522, separate pieces molded and/or overmolded, made of rubber, made of flexible material, and/or any of type of flexible device which allows for easier insertion in the CF Valve. For proper function, the pin head must be larger than the inlet orifice. In one example, the pin is attached to the diaphragm assembly on one side of the inlet orifice and the pin head is on the other side of the inlet orifice. In another example shown in FIG. 55C, a rubber or semi-flexible plastic or metal pin 5554 can be shaped so that during assembly the pin head 5554 can be forced under pressure through the inlet orifice but when it comes through the other side it is properly proportioned (larger) relative to the inlet orifice. In this example, the pin, the diaphragm, and diaphragm retainers can all be molded or overmolded in one piece eliminating two assembly operations. In this example, a pin 5556 and the flexible pinhead 5554 can be one piece 5552.

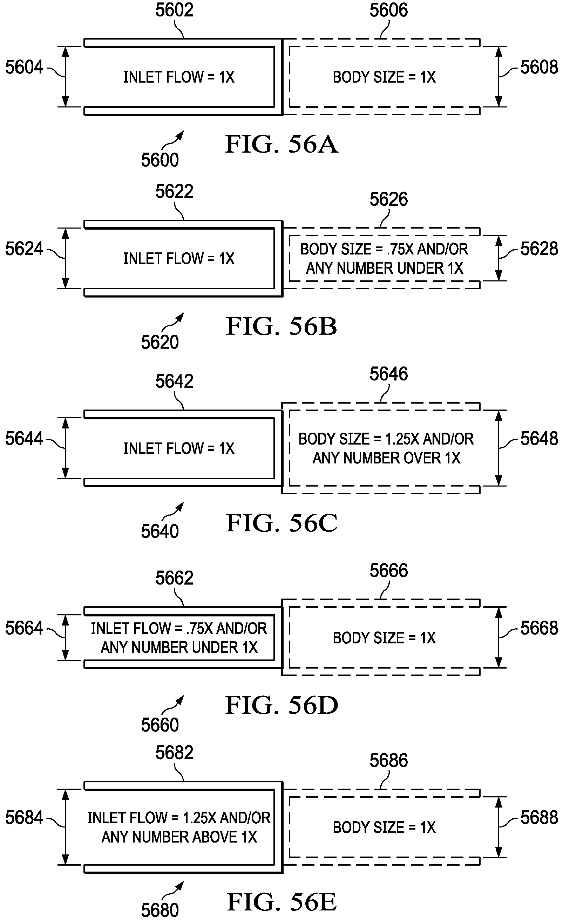

In FIG. 56A, a CF Valve 5600 is shown with an inlet area 5602 and a first inlet flow 5604 of 1X and body 5606 with a first body size 5608 of 1X. In FIG. 56B, a CF Valve 5620 is shown with an inlet area 5622 and a second inlet flow 5624 of 1X and a body 5626 with a second body size 5628 of .75X (and/or any other number (e.g., .9999X, ..., .99X, .98X, etc.) under 1X). In FIG. 56C, a CF Valve 5640 is shown with an inlet area 5642 and a third inlet flow 5644 of 1X and a body 5646 with a third body size 5648 of 1.25X (and/or any other number (e.g., 1.00001X,..., .1.01X, 1.02X, etc.) over 1X). In FIG. 56D, a CF Valve 5660 is shown with a body 5666 and a fourth body size 5668 of 1X and an inlet area 5662 with a fourth inlet flow size 5664 of .75X (and/or any other number (e.g., .9999X,..., .99X, .98X, etc.) under 1X). In FIG. 56E, a CF Valve 5680 is shown with a body 5686 and an Nth body size 5688 of 1X and inlet area 5682 with an Nth inlet flow size 5684 of 1.25X (and/or any other number (e.g., 1.00001X,..., .1.01X, 1.02X, etc.) over 1X). In various examples, in order to decrease/increase the size of the CF Valve, the body and pin and pin orifice are all decreased and/or increased proportionately in equal percentages so that there is a match between the body size and the pin/pin orifice size. However, in situations where the body size is restricted by the application or existing housing, there can be a need for greater (or lesser) flow through a particular sized body which requires the equal proportionate relationship to be varied between the body and the pin/pin orifice. By varying the relationship of the pin and inlet orifice to the body size, the CF Valve can be customized in flow and pressure characteristics to a particular application. This has several advantages including the ability to vary the size and/or performance without necessarily changing the internal components of the CF Valve which improves production costs, reduces assembly time, and/or may automate one or more functions. Thus the options for assembly of one or more the components are a major production cost savings. Additionally, by changing the size of the body, the CF Valves can be customized in size and flow and pressure capacity to fit each individual application.

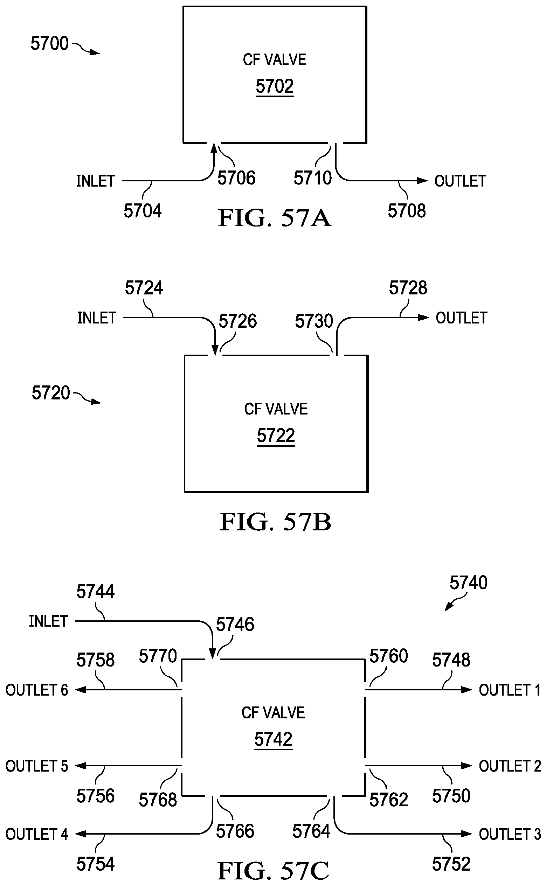

In FIG. 57A, a cartridge CF Valve 5702 is shown with an inlet area 5704 and an outlet flow area 5708 occurring at the same dimensional side (e.g., bottom). In this example, an inlet area position 5706 and an outlet flow position 5710 are both located on the same side of the cartridge CF Valve 5702. In FIG. 57B, a cartridge CF Valve 5722 is shown with an inlet area 5724 and an outlet flow area 5728 occurring at the same dimensional side (e.g., top). In this example, an inlet area position 5726 and an outlet flow position 5730 are both located on the same side of the cartridge CF Valve 5722. In FIG. 57C, a cartridge CF Valve 5742 is shown with an inlet area 5744, a first outlet flow area 5748, a second outlet flow area 5750, a third outlet flow area 5752, a fourth outlet flow area 5754, a fifth outlet flow area 5756, and/or an Nth outlet flow area 5758 with outlet flow area positions (e.g., 5760, 5762, 5764, 5766, 5768, and/or 5770). These outlet flow area are occurring at different dimensional side then the inlet area 5744 and/or the inlet area position 5746. For example, the inlet flow occurs at the top of the cartridge CF Valve while the outlet flow could occur on the right side, the bottom, and/or the left side. In these various examples and/or examples, being able to take advantage of the multi-directional characteristic allows for enhanced adaptability to fit into existing systems, devices, and/or equipment.

In FIG. 58A, a bar gun 5802 is shown with a control orifice inside the bar gun which may be set to factory settings. The Cartridge CF Valve 5804 can be assembled with the orifice inside the CF Valve a factory set flow rate to eliminate tampering with the orifice and therefore the flow rates. The cartridge CF Valve is symmetrical so that no indexing is required when assembling. The spring cap is sized and molded to be slightly loose on the housing so that if the stack tolerances are all on the plus side the pressure on the diaphragm will still be sufficient to cause a seal. In another example, the cartridge CF Valve may have a fixed orifice. In another example, the orifice may be in the outlet side which also the orifice to be replaceable. It should be noted that the disclosure relating to the bar gun may be utilized with any other equipment in this disclosure. Further, all disclosures relating to one element (e.g., the ball, the CF Valve, the Cartridge CF Valve, the backing block, the needle, etc.) may be utilized with any other disclosure relating to any other element (e.g., the ball, the CF Valve, the Cartridge CF Valve, the backing block, the needle, etc.). For example, the ball disclosure may be combined with the cartridge CF Valve disclosure. Further, one feature (and/or one or more features) of the ball disclosure may be combined with one feature (and/or one more features) of the cartridge CF Valve disclosure. For brevity, all of the other items disclosed in this disclosure will not be listed out but are inherently combinable in this disclosure.

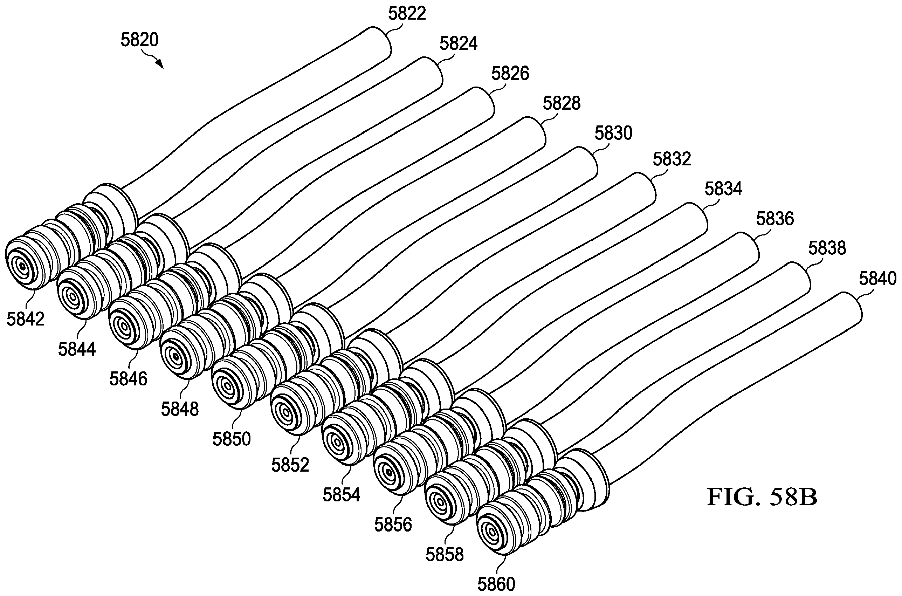

In FIG. 58B, a bar gun feeding system 5820 is shown. The bar gun feeding system 5820 may include a first liquid and/or gaseous mixture line 5822 with a first cartridge CF Valve 5842, a second liquid and/or gaseous mixture line 5824 with a second cartridge CF Valve 5844, a third liquid and/or gaseous mixture line 5826 with a third cartridge CF Valve 5846, a fourth liquid and/or gaseous mixture line 5828 with a fourth cartridge CF Valve 5848, a fifth liquid and/or gaseous mixture line 5830 with a fifth cartridge CF Valve 5850, a sixth liquid and/or gaseous mixture line 5832 with a sixth cartridge CF Valve 5852, a seventh liquid and/or gaseous mixture line 5834 with a seventh cartridge CF Valve 5854, an eighth liquid and/or gaseous mixture line 5836 with an eighth cartridge CF Valve 5856, a ninth liquid and/or gaseous mixture line 5858 with a ninth cartridge CF Valve 5858, and/or an Nth liquid and/or gaseous mixture line 5840 with an Nth cartridge CF Valve 5860. In should be noted that one or more of the first cartridge CF Valve 5842, the second cartridge CF Valve 5844, the third cartridge CF Valve 5846, the fourth cartridge CF Valve 5848, the fifth cartridge CF Valve 5850, the sixth cartridge CF Valve 5852, the seventh cartridge CF Valve 5854, the eighth cartridge CF Valve 5856, the ninth cartridge CF Valve 5858, and/or the Nth cartridge CF Valve 5860 may have different settings, mixture ratios, flow rates, and/or any other characteristic based on the liquid and/or gaseous mixture running through their respective lines. For example, a first liquid and/or gaseous mixture running through the first liquid and/or gaseous line 5822 may require a cartridge CF Valve setting of one (e.g., flow rate is X, pressure is Y, etc.). Whereas, a second liquid and/or gaseous mixture running through the second liquid and/or gaseous line 5824 may require the cartridge CF Valve setting of two (e.g., a flow rate different than X, a pressure different than Y, etc.).

In one example, a CF Valve may encounter with a line pressure of 100 PSI and an outlet pressure of 40 PSI when the outlet is open. Further, the CF Valve may encounter a line pressure of 100 PSI and an outlet pressure of 100 PSI because the pin is not closed. In addition, the CF Valve may encounter a line pressure of 100 PSI and an outlet pressure of 46 PSI because the pin is closed.

In FIG. 59A, an illustration of bridging is shown, according to one example. In a first example, a system 5900 has a valve in an open position 5904. The system 5900 includes a CF Valve 5902, a valve, an orifice 5906, a pin and pinhead 5910, a fluid and/or gas outlet area 5912, and an inlet area (not shown). In this example, the CF Valve 5902 is closed because the minimum opening pressure is not achieved by the input pressure. In this example, the input pressure is less than 14 PSI. Therefore, a liquid and/or gaseous mixture 5908 is prevented from flowing. In a second example shown in FIG. 59B, a system 5920 has the valve in the open position 5904. In this example, the CF Valve 5902 is opened and maintains a constant flow rate. In this example, a liquid and/or gaseous mixture flows from a first area 5926 to a second area 5922 and then to an open air area 5924. In this example, the pin and pinhead 5910 have moved to an open position 5928. Further, the input pressure is greater than 18 PSI. In another example shown in FIG. 59C, a system 5950 has the valve in a closed position 5952. The CF Valve 5902 is stalled by the downstream valve closure resulting in the throttle pin closing off high input pressure. In this example, the input pressure is greater than 20 PSI. Further, the liquid and/or gaseous mixture is located in a first area 5958, a second area 5954, and a third area 5956 but does not get dispensed to the open air area 5924 from FIG. 59B. In this example, the throttle pin 5960 is sealed.

In FIG. 60A, an illustration of bridging is shown, according to one example. In this example, a system 6000 includes a CF Valve 6002, a first orifice 6004 for a first line, a second orifice 6006 for a second line, a first valve 6008 for the first line, a second valve 6010 for the second line, and a pin and pinhead 6012. In this example, the first valve 6008 and the second valve 6010 are in open positions; however, the liquid and/or gaseous mixture remains in a first area 6014 and does not flow because the input pressure is less than 14 PSI. In another example shown in FIG. 60B, the first valve 6008 is in an open position and the second valve 6010 is in a closed position. In this example, the liquid and/or gaseous mixture flows from a first area 6032 to a second area 6034 to a third area 6038 and then to a fourth area 6040 (which is an open air area) because the input pressure was greater than 14 PSI. Further, the pin and pinhead 6012 are in an open position. An additional example is shown in FIG. 60C, a system 6050 may have the first valve 6008 and the second valve 6010 in open positions which allows the liquid and/or gaseous mixture to pass through the various areas to reach the fourth area 6040 (which is an open air area for the first line) and a fifth area 6052 (which is an open air area for the second line) because the input pressure was greater than 14PSI. In another example shown in FIG. 60D, a system 6070 has the first valve 6008 and the second valve 6010 in closed positions. The liquid and/or gaseous mixture does not reach the fourth area 6040 (which is an open air area for the first line) or the fifth area 5052 (which is an open air area for the second line) because the input pressure is less than 14 PSI which causes the throttle pin 6074 to be sealed.

In FIG. 61A, an illustration of bridging is shown, according to one example. A CF Valve 6100 includes a diaphragm 6140, a pin 6142, a pinhead 6146, and one or more walls 6150. In this example, the pin 6142 and the pinhead 6146 are in a first position 6160 with a first channel size 6162 which would allow for flow but for the diaphragm 6140 closing an area 6164. In another example shown in FIG. 61B, the pin 6142 and the pinhead 6146 are in a second position 6166 with a second channel size 6168 and the diaphragm 6140 is not closing the area 6170. An additional example is shown in FIG. 61C, the pin 6142 and the pinhead 6146 has moved to a position to a closed position 6172 with a third channel size 6174.

In FIG. 62, an illustration of bridging is shown, according to one example. In this example, a CF Valve 6202 includes a moveable area 6204 which allows for changes in the spring tension. In this example, the constant flow valve may have a manual on/off function. Therefore, no additional on/off requirement up or down stream. In this example, a very small load would put the spring back to normal tension. In this example, the bridge is used to keep closed. Further, the relaxing of the spring allows for bridging and putting back spring load allows for the operations to return to normal conditions.

In one example, the 90 degree Inlet and outlet features are fixed as part of the body. Inlet is a fixed ¾" NPT inlet and at a 90 degree angle a 3/8 NPT outlet. The CFV-Cartridge does not include the body so that the inlet and outlet are totally optional as to direction or type of threads or fittings required. Therefore, the application dictates the fitting requirements.

In a non-cartridge CF Valve, the 90 degree is a closed unit that is in line with the feed/discharge plumbing. The non-cartridge CF Valve cannot be removed without disconnecting or breaking into the entire system. In addition the operating pressure of the non-cartridge CF Valve cannot be changed. The Cartridge CF Valve is a module and can be disconnected and replaced with another Cartridge CF Valve of a different operating pressure without disturbing the system plumbing. There are no threaded connectors to require taping or sealing.

Testing of the cartridge 75 was completed. Further, test the 1x pin in the 75 orifice to see what it does to the flow rate. Testing was done on the 75 pin in the 1x orifice. The inlet water pressure works on the diaphragm X to push in down. The cartridge 75 diameter is smaller so there would be less square inches of pressure to start to compress the spring. Therefore, a weak spring may be used which is less costly.

When using viscous and or high pulp liquids, if the liquid dries out, it may not be possible to be clean by flushing with a cleaning solution and the entire valve might have to be replaced. The Cartridge CF Valve is a drop in and the entire configuration - housing, inlet and outlet and connecting seals are undisturbed when changing the cartridge.

The existing CF Valve is in line, female/male threaded inlet and outlet which requires disconnecting from the system. If the cartridge CF Valve fails or becomes contaminated it can be replaced by disconnecting the spring cap, slip out the cartridge and put in the new one and replacing the cap without having to break into or disconnect the rest of the system. This is very important for live systems where down time is expensive.

Design flexibility: The cartridge is more useful as the inlet and outlet can be located in any direction so as to facilitate design of the entire assembly. The straight through and 90 degree designs are restrictive as the inlet and outlet positions are fixed, as part of the CF Valve. The inlet and outlet for the cartridge design CF Valve are in the housing that the cartridge drops into so the design of the system/assembly/housing is not limited by the CF Valve.

The outlet from the cartridge is unrestricted vs. old model. The cartridge CF Valve can be inserted into any system or molded receptacle that is part of a flow controlled system. The cartridge CF Valve seals with standard "0" ring type fittings, so no leaky threads, or thread taping, no stripped threads, etc. A standard CF Valve has a fixed operating pressure. The cartridge CF Valve can be easily changed in order to select an alternate operating pressure.

In various examples, systems designed to use the cartridge CF Valve can allow for changes in operating pressure without changing or disturbing any other components of the system. Assembly and molding are simplified as there is no connecting "threads" requiring unscrewing mold. In various examples, the designs have Modularity.

Field: The subject matter disclosed herein relates to a CF Valve type flow control device [or constant flow control device] formed as a Cartridge. More specifically, a cartridge that allows a greater flexibility in application, lower cost, and system design.

Information: There are numerous ways that CF Valves are used for industrial flow control. This disclosure highlights an enhanced model that greatly increases usefulness and applications flexibility.

Disclosed is a novel valve that does not require a shaft, piston, etc. or other component that is required to penetrated through the wall of the chamber where the liquid travels through (i.e. penetrates from outside the liquid to inside the chamber or wet side). With the below described valve, the necessity to penetrate into the wet side to actuate the "on/off" for the valve is eliminated.

A ball or other substantially round or spherical object (collectively "Ball") may be used and controlled by rolling the Ball off the opening to open the valve for fluid flow there through. This mechanism of rolling the Ball off the opening is a mechanically easier process than the conventional lifting of a diaphragm, or the lifting of a ball against line pressure in order to open the passage/orifice.

With the disclosed rolling Ball valve, once the Ball is even partially off the orifice/opening then the pressure will equalize on both sides of the orifice and the effort to move the Ball further off, farther to fully open, may take almost no energy at all. Once the Ball is decoupled from the magnet or the electro magnet is off -- the fluid flow itself will roll [suck] the Ball back into the orifice and close the valve. The higher the input pressure the tighter the valve closes. In practice the orifice, as depicted, would be the most accommodating design for a valve seat as well (i.e. a self-cleaning rubber design) as used in the CF Valves.

Figure 62 shows the Spring Cap Actuator for shutting off the CF Valve. The normal operation of the CF Valve is that the spring captured in the spring cap will hold the Diaphragm shut until the inlet pressure through the inlet reaches the threshold pressure to open the valve. Keeping the CF Valve closed by putting pressure on the spring to hold the diaphragm shut requires enough pressure to hold against the entire line pressure at the inlet to the valve. In one example, the specified inlet pressure may be as high as 125 PSI or higher.

In these various examples shown in this disclosure, the energy requirements of the existing components, the system, the device, and/or the new device and/or system because the cartridge CF Valve and/or the CF Valve uses the inlet water pressure will keep the valve closed even above operating pressure until opening is requested. Further, the apparatus may operate the spring tension dry and does not touch the liquid and/or gaseous mixture.

Instead this disclosure will release the spring tension which is keeping the diaphragm/pin assembly in operating position. With the spring disengaged, the inlet pressure of the fluid entering through the inlet orifice will push the diaphragm down causing the head of the pin to close the inlet orifice as long as there is inlet pressure above normal operating pressure. The CF Valve will stay closed when the spring is recompressed to the spring's normal operating tension/position. The CF Valve will open and start flowing normally by releasing the cap that holds down the pin causing the inlet pressure into the inlet entrance to push the Pin in to close the inlet. To actuate the valve, the spring will be pushed back into position causing the valve to operate normally.

Additionally, the spring tension actuator can be designed with multiple locations (vs. just open and closed) that would allow the spring tension to be adjusted, modifying the pressure and flow through the valve.

In FIG. 63, a CF Valve 6300 is shown, in one example. In this example, a regulating valve in accordance with the present disclosure is generally depicted at 6310 between a variable pressure fluid supply 6312 and a fluid outlet 6314. The valve 6310 includes a housing 6316 having axially aligned inlet and outlet ports 6318, 6320 adapted to be connected respectively to the fluid supply 6312 and the fluid outlet 6314. The housing 6316 also includes a diaphragm chamber 6322 interposed between the inlet and outlet ports 6318, 6320. The inlet port 6318 is separated from the diaphragm chamber 6322 by a barrier wall 6324. The barrier wall 6324 has a first passageway 6326 extending therethrough from an inner side 6324 a facing the diaphragm chamber 6322 to an outer side 6324 b facing the inlet port 6318.

Contained within the diaphragm chamber 6322 is a cup 6328. The cup 6328 has a cylindrical side wall 6328 a extending from a bottom wall 6328b facing the outlet port 6320 to a circular rim 6328c surrounding an open mouth facing the inner side 6324a of the barrier wall 6324. The cylindrical side 6328a and bottom walls 6328b of the cup 6328 are spaced inwardly from adjacent interior surfaces of the housing 6316 to define a second passageway 6330. The second passageway connects the diaphragm chamber 6322 to the outlet port 6320.

A resilient disc-shaped diaphragm 6332 closes the open mouth of the cup 6328. The diaphragm 6332 is axially supported exclusively by the circular rim 6328c and has a peripheral flange 6332a overlapping the cylindrical side wall 6328a. A piston assembly 6334 is secured to the center of the diaphragm 6332. The piston assembly has a cap 6336 on one side of the diaphragm 6332 which faces the inner side 6324a of the barrier wall 6324. A base 6338 is suspended from the opposite side of the diaphragm 6332 and projects into the interior of the cup 6328.

A stem 6340 projects from the cap 6336 through the first passageway 6326 in the barrier wall 6324 to terminate in a valve head 6342. The valve head 6342 and the outer side 6324b of the barrier wall 6324 are configured to define a control orifice "O" which connects the inlet port 6318 to the diaphragm chamber 6322 via the first passageway 6326.

A spring 6344 in the cup 6328 coacts with the base 6338 of the piston assembly 6334 to resiliently urge the diaphragm 6332 into a normally closed position against the inner side 6324a of the barrier wall 6324 to thereby prevent fluid flow from the inlet port 6318 via the first passageway 6326 into the diaphragm chamber 6322. A spring 6344 responds to fluid pressure above a predetermined minimum level applied to the diaphragm 6332 via the inlet port 6318 and the first passageway 6326 by resiliently accommodating movement of the diaphragm 6332 away from the inner side 6324a of the barrier wall 6324. The valve head 6342 on the stem 6340 moves correspondingly to adjust the size of the control orifice O to thereby maintain a substantially constant flow of fluid from the inlet port 6318, through the first and second passageways 6326, 6330, and then to the outlet port 6320 for delivery to the fluid outlet 6314.

The control orifice O includes frusto conical surfaces S1 S2 on the valve head 6342 and the outer side 6324b of the barrier wall 6324. The cross sectional area of the control orifice O is less than the cross sectional area of the first passageway 6326 throughout the range of movement of the valve head 6342 in response to fluid pressure applied to the diaphragm 6332.

A vent passageway 6346 leads from the interior of the cup 6328 to the exterior of the housing. The exterior of the housing is provided with a deflecting surface 6348 adjacent to the outlet of the vent passageway 6346. The deflecting surface 6348 is configured and arranged to direct fluid escaping from the interior of the cup 6328 in the general direction of fluid flowing through the valve 6310, but angularly away from the valve axis.

The base of the piston assembly 6334 is spaced from the bottom wall 6328b of the cup 6328 by an open gap. The spring 6344 bridges that gap and is in contact at its opposite ends respectively with the bottom wall 6328b and the base 6338. The piston assembly 6334 is centered within the cup 6328 solely by the resilient support provided by the diaphragm 6332.

The housing is comprised of mating plastic inlet and outlet sections formed by injection molding and permanently assembled one to the other by sonic welding.

The cap 6336 and base 6338 of the piston assembly 6334 are each injection molded of plastic. They are joined one to the other by sonic welding, with a central portion of the diaphragm held therebetween.

In light of the foregoing, it will now be appreciated by those skilled in the art that the present disclosure embodies a number of significant advantages, the foremost being the automatic pressure responsive control of fluid flow between a variable pressure source and an applicator from which the fluid is to be applied in a substantially uniform manner. The regulating valve is designed for low cost mass production, having a minimum number of component parts, the majority of which can be precision molded and automatically assembled.

In FIG. 64A, an illustration of a cartridge CF Valve 6400 is shown, according to one example. In this example, the cartridge CF Valve 6400 has a pin height during operation 6406 of 0.020 inches, a surface area exposed during operation 6408 of 0.732 inches, a flow area between the pin and the plastic 6410 of 0.0052 square inches, and a 1.0X body with a 1.0X pin and orifice (see reference number 6404).

In another example shown in FIG. 64B, a cartridge CF Valve 6430 has a pin height during operation 6436 of 0.020 inches, a surface area exposed during operation 6438 of 0.732 inches, a flow area between the pin and the plastic 6440 of 0.0075 square inches, and a 1.0X body with a 1.5X pin and orifice (see reference number 6404). It should be noted that a first pinhead 6402 in FIG. 64A is smaller than a second pinhead 6432 in FIG. 64B.

As used herein, the term "mobile device" refers to a device that may from time to time have a position that changes. Such changes in position may comprise of changes to direction, distance, and/or orientation. In particular examples, a mobile device may comprise of a cellular telephone, wireless communication device, user equipment, laptop computer, other personal communication system ("PCS") device, personal digital assistant ("PDA"), personal audio device ("PAD"), portable navigational device, or other portable communication device. A mobile device may also comprise of a processor or computing platform adapted to perform functions controlled by machine-readable instructions.

The methods and/or methodologies described herein may be implemented by various means depending upon applications according to particular examples. For example, such methodologies may be implemented in hardware, firmware, software, or combinations thereof. In a hardware implementation, for example, a processing unit may be implemented within one or more application specific integrated circuits ("ASICs"), digital signal processors ("DSPs"), digital signal processing devices ("DSPDs"), programmable logic devices ("PLDs"), field programmable gate arrays ("FPGAs"), processors, controllers, micro-controllers, microprocessors, electronic devices, other devices units designed to perform the functions described herein, or combinations thereof.

Some portions of the detailed description included herein are presented in terms of algorithms or symbolic representations of operations on binary digital signals stored within a memory of a specific apparatus or a special purpose computing device or platform. In the context of this particular specification, the term specific apparatus or the like includes a general purpose computer once it is programmed to perform particular operations pursuant to instructions from program software. Algorithmic descriptions or symbolic representations are examples of techniques used by those of ordinary skill in the arts to convey the substance of their work to others skilled in the art. An algorithm is considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals, or the like. It should be understood, however, that all of these or similar terms are to be associated with appropriate physical quantities and are merely convenient labels. Unless specifically stated otherwise, as apparent from the discussion herein, it is appreciated that throughout this specification discussions utilizing terms such as "processing," "computing," "calculating," "determining" or the like refer to actions or processes of a specific apparatus, such as a special purpose computer or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

## Claims

1. A cartridge (4600) comprising:
a body (4604) with a first groove and a second groove located on an external wall of the body, the body including a body inlet area and a body outlet area;
a first o-ring (4618) coupled to the body (4604) via the first groove located on the external wall of the body;
a throttle pin (4602) coupled to a top retainer (4606) through the inlet area;
a spring cap (4614) with a groove area located on an external wall of the spring cap, the spring cap including a spring cap inlet area and a spring cap outlet area;
a spring cap o-ring (4616) coupled to the spring cap (4614) via the groove area located on the external wall of the spring cap;
a spring (4612) coupled to a bottom retainer (4610);
a diaphragm (4608) coupled to the bottom retainer (4610); and
the top retainer (4606) coupled to the diaphragm (4608),
**characterized in that**
the body inlet area is located on a throttle pin side of the diaphragm and the spring cap outlet area is located on a non-throttle pin side of the diaphragm.

2. The cartridge (4600) of claim 1, wherein the cartridge is configured to be inserted into a device.

3. The cartridge (4600) of claim 1, wherein the cartridge is configured to be inserted into an existing device where the existing device has one or more inlet ports and outlet ports in any locations on the existing device.

4. The cartridge (4600) of claim 1, wherein a cartridge inlet area and a cartridge outlet area are in series with each other.

5. The cartridge (4600) of claim 1, wherein a cartridge inlet area and a cartridge outlet area are at a 90 degree angle to each other.

6. The cartridge (4600) of claim 1, wherein the body (4604) includes a 360 degree outlet passage.

7. The cartridge (4600) of claim 1, wherein the spring cap (4614) is configured to create a seal by compressing the diaphragm (4608) to the body (4604).

## Patentansprüche

1. Kartusche (4600), umfassend:
einen Körper (4604) mit einer ersten Nut und einer zweiten Nut, die sich an einer Außenwand des Körpers befinden, wobei der Körper einen Körpereinlassbereich und einen Körperauslassbereich enthält;
einen ersten O-Ring (4618), der über die erste Nut an der Außenwand des Körpers mit dem Körper (4604) gekoppelt ist;
einen Drosselstift (4602), der durch den Einlassbereich mit einer oberen Halterung (4606) gekoppelt ist;
eine Federkappe (4614) mit einem Nutbereich, der sich an einer Außenwand der Federkappe befindet, wobei die Federkappe einen Federkappen-Einlassbereich und einen Federkappen-Auslassbereich enthält;
einen Federkappen-O-Ring (4616), der über den Nutbereich, der sich an der Außenwand der Federkappe befindet, mit der Federkappe (4614) gekoppelt ist;
eine Feder (4612), die mit einer unteren Halterung (4610) gekoppelt ist;
eine Membran (4608), die mit der unteren Halterung (4610) gekoppelt ist; und
die obere Halterung (4606), die mit der Membran (4608) gekoppelt ist,
**dadurch gekennzeichnet, dass**
sich der Körpereinlassbereich auf einer Drosselstiftseite der Membran befindet und sich der Federkappen-Auslassbereich auf einer Nicht-Drosselstiftseite der Membran befindet.

2. Kartusche (4600) nach Anspruch 1, wobei die Kartusche dazu konfiguriert ist, in eine Vorrichtung eingesetzt zu werden.

3. Kartusche (4600) nach Anspruch 1, wobei die Kartusche dazu konfiguriert ist, in eine bestehende Vorrichtung eingesetzt zu werden, wobei die bestehende Vorrichtung eine oder mehrere Einlassöffnungen und Auslassöffnungen an beliebigen Stellen an der bestehenden Vorrichtung aufweist.

4. Kartusche (4600) nach Anspruch 1, wobei sich ein Kartuscheneinlassbereich und ein Kartuschenauslassbereich in Reihe zueinander befinden.

5. Kartusche (4600) nach Anspruch 1, wobei sich ein Kartuscheneinlassbereich und ein Kartuschenauslassbereich in einem 90-Grad-Winkel zueinander befinden.

6. Kartusche (4600) nach Anspruch 1, wobei der Körper (4604) einen 360-Grad-Auslasskanal enthält.

7. Kartusche (4600) nach Anspruch 1, wobei die Federkappe (4614) dazu konfiguriert ist, durch Zusammendrücken der Membran (4608) an den Körper (4604) eine Abdichtung zu erzeugen.

## Revendications

1. Cartouche (4600), comprenant :
un corps (4604) doté d'une première rainure et d'une seconde rainure situées sur une paroi externe du corps, le corps comprenant une zone d'entrée de corps et une zone de sortie de corps ;
un premier joint torique (4618) couplé au corps (4604) via la première rainure située sur la paroi externe du corps ;
une goupille à papillon (4602) couplée à un dispositif de retenue supérieur (4606) à travers la zone d'entrée ;
un capuchon à ressort (4614) doté d'une zone de rainure située sur une paroi externe du capuchon à ressort,
le capuchon à ressort comprenant une zone d'entrée de capuchon à ressort et une zone de sortie de capuchon à ressort ;
un joint torique de capuchon à ressort (4616) couplé au capuchon à ressort (4614) via la zone de rainure située sur la paroi externe du capuchon à ressort ;
un ressort (4612) couplé à un dispositif de retenue inférieur (4610) ;
un diaphragme (4608) couplé au dispositif de retenue inférieur (4610) ; et
le dispositif de retenue supérieur (4606) couplé au diaphragme (4608),
**caractérisé en ce que** la zone d'entrée du corps est située du côté de la goupille à papillon du diaphragme et la zone de sortie du capuchon à ressort est située du côté de la goupille sans papillon du diaphragme.

2. Cartouche (4600) selon la revendication 1, dans laquelle la cartouche est configurée pour être insérée dans un dispositif.

3. Cartouche (4600) selon la revendication 1, dans laquelle la cartouche est configurée pour être insérée dans un dispositif existant où le dispositif existant comporte un ou plusieurs ports d'entrée et ports de sortie dans n'importe quel emplacement sur le dispositif existant.

4. Cartouche (4600) selon la revendication 1, dans laquelle une zone d'entrée de cartouche et une zone de sortie de cartouche sont en série l'une avec l'autre.

5. Cartouche (4600) selon la revendication 1, dans laquelle une zone d'entrée de cartouche et une zone de sortie de cartouche forment un angle à 90 degrés l'une par rapport à l'autre.

6. Cartouche (4600) selon la revendication 1, dans laquelle le corps (4604) comprend un passage de sortie à 360 degrés.

7. Cartouche (4600) selon la revendication 1, dans laquelle le capuchon à ressort (4614) est configuré pour créer un joint en comprimant le diaphragme (4608) sur le corps (4604).
